(19) Europäisches Patentamt
European Patent Office
Office européen des brevets

(11) **EP 2 245 338 B1**

(12) **EUROPÄISCHE PATENTSCHRIFT**

(45) Veröffentlichungstag und Bekanntmachung des Hinweises auf die Patenterteilung:
**17.10.2012 Patentblatt 2012/42**

(21) Anmeldenummer: **08734439.6**

(22) Anmeldetag: **27.03.2008**

(51) Int Cl.:
*F16H 7/02* *(2006.01)*          *F16H 55/17* *(2006.01)*

(86) Internationale Anmeldenummer:
**PCT/DE2008/000510**

(87) Internationale Veröffentlichungsnummer:
**WO 2009/103253 (27.08.2009 Gazette 2009/35)**

(54) **SYNCHRONFLACHRIEMENTRIEB**

SYNCHRONOUS FLAT BELT DRIVE

TRANSMISSION SYNCHRONE A COURROIE PLATE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.02.2008 DE 102008018759**

(43) Veröffentlichungstag der Anmeldung:
**03.11.2010 Patentblatt 2010/44**

(73) Patentinhaber: **Dierl, Ludwig**
**53773 Hennef (DE)**

(72) Erfinder: **Dierl, Ludwig**
**53773 Hennef (DE)**

(56) Entgegenhaltungen:
**EP-A- 0 403 818       DE-U1- 9 403 404**
**GB-A- 2 138 534       US-A- 3 156 126**
**US-A1- 2002 176 722**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

TECHNISCHER HINTERGRUND DER ERFINDUNG - TECHNISCHES GEBIET

Die Erfindung betrifft einen Synchronflachriementrieb nach dem Oberbegriff des Hauptanspruchs. Sie kann den IPC-Klassen F16H 7/02, F16H 55/30, und F16H 55/36 zugeordnet werden.

TECHNISCHER HINTERGRUND DER ERFINDUNG - STAND DER TECHNIK - DIE GESCHICHTE DER ERFINDUNG

Seit die Menschheit die Technik zur Unterstützung des täglichen Lebens nutzt, ist sie mit Reibung konfrontiert. So muss beispielsweise einem Verbrennungsmotor mehr Energie in Form von Kraftstoff zugeführt werden, um eine vorherbestimmte Leistung zu erzielen, als gemäß den Gesetzen der Thermodynamik notwendig ist. Denn die Bewegung der Motorteile wird durch Reibung gehemmt und es muss deshalb ein Teil des zugeführten Kraftstoffs zum Überwinden dieser Reibung aufgewendet werden, wodurch Wärme entsteht, die ungenutzt an die Umgebung abfließt. Trotz aller Erfindungen auf den Gebieten der Elektronik, der Gentechnik oder der Nanotechnologie haben wir offensichtlich vor der Reibung kapituliert. Wir versuchen sie stattdessen zu reduzieren, indem wir beispielsweise wie selbstverständlich beinahe gleich einem Naturgesetz unsere Maschinen mit Schmierstoffen versehen. Dabei haben wir scheinbar einfache Lösungen der Mechanik aus dem Auge verloren, obwohl sie der Mensch in seinen ersten Lebensjahren mit dem Schaukelpferd, und in den späteren Lebensjahren mit dem Schaukelstuhl gerne nutzt. Es ist das Prinzip, auf einer Fläche nicht entlangzugleiten, sondern sich stattdessen auf einer Fläche abzuwälzen.

Hier setzt die Erfindung an. Es geht darum, eine Rotationsbewegung in unseren Maschinen wälzend zu übertragen.

Irrtümlicherweise wird oft angenommen, dass ein stirnverzahntes Zahnrad, beispielsweise mit einer Evolventenverzahnung, wie es in einer großen Verbreitung beispielsweise in den Fahrzeuggetrieben vorkommt, eine solche Wälzbewegung ausführt. Dies ist leider nicht der Fall, denn sonst könnten wir uns zumindest das Getriebeöl sparen. Bei einer Zeitlupensimulation der Bewegung (siehe http://de.wikipedia.org/wiki/Bild:Involute_wheel.gif), welche ein Zahn bei einem Eingriff in die Gegenverzahnung vornimmt, kann man leicht erkennen, dass der Zahn zunächst am Gegenzahn entlang hineingleitet, sich dann am Wälzkreis abwälzt, und danach wieder am Gegenzahn entlang herausgleitet. Dadurch entstehen Oberflächenschäden an den Zähnen (Pitting). Eine Wälzbewegung wird lediglich an dem Wälzkreis ausgeführt. Es ist der Kreis, auf welchem sich das Werkzeug zum Ausbilden der Verzahnung abwälzte. Über und unter dem Wälzkreis findet ein Gleiten mit dem Erzeugen der energieverbrauchenden Gleitreibung statt.

Als logische Konsequenz wird also vorgeschlagen, einen Zahn einer Verzahnung in einen Gegenzahn eingreifen zu lassen, welcher nur am Wälzkreis vorhanden ist. Vorstellen kann man sich das gut an einer Zahnstange, welche auf eine dünne Schicht um die Wälzgerade herum reduziert ist. Ein solche Konstruktion scheint auf den ersten Blick zunächst nicht realisierbar zu sein, denn ein Gegenzahn mit einer so geringen Ausdehnung in Zahnhöhenrichtung würde kaum die notwendige Festigkeit (Knicken) besitzen, um den Druck des kämmenden Zahns standzuhalten. Und außerdem, wie sollte die Kraft in die Zahnstange oder das Zahnrad weitergeleitet werden. Hier setzt ein nächster Erfindungsschritt ein. Die dünne Verzahnungsschicht wird nicht als Druckaufnahmeelement ausgebildet, sondern als Zugelement. Und bekanntlich können dünne Schichten erhebliche Zugkräfte übertragen. Dennoch stellt sich auch hier das Problem der Übertragung der Kraft, welche von einem kämmenden Zahn auf die Gegenverzahnung aufgebracht wird.

In einem nächsten Erfindungsschritt wird deshalb die Zugschicht flexibel ausgebildet, und um ein Zahnrad herumgeführt. Eine so herumgeführte Zugschicht würde sich aber bei Anwenden von Zugkraft an ihren Enden in der Verzahnung verkeilen, wodurch wieder Reibung auftreten würde. Dies muss verhindert werden, und zwar muss die flexible dünne Gegenverzahnungsschicht in einem definierten Abstand zu der Achse des Zahnrads herumgeführt werden. Dieser definierte Abstand wird bei einem normalen Gegenzahnrad durch die Lagerung dieses Gegenzahnrads vorgenommen. Aber eine solche Lagerung ist für die dünne flexible Gegenverzahnungsschicht nicht möglich. Hier setzt der nächste Erfindungsschritt ein. Und zwar wird diese Stützfunktion in radialer Richtung durch zylindrische Scheiben mit einem vorherbestimmten gleichen Durchmesser und einer vorherbestimmten Breite ausgeführt, welche auf beiden Seiten des Zahnrads, unmittelbar an das Zahnrad angrenzend, koaxial zur Achse des Zahnrads, angebracht werden. Der Durchmesser wird dabei so gewählt, dass er größer als der Fußkreisdurchmesser der Verzahnung des Zahnrads ist. Jetzt also kann bei Anwenden von Zugkraft an den Enden der dünnen flexiblen Gegenverzahnungsschicht sich diese in radialer Richtung auf den zylindrischen Mantelflächen auf beiden Seiten neben dem Zahnrad abstützen und führt bei einem Umlauf um das Zahnrad eine rein wälzende Bewegung aus.

Jetzt kann das Problem der Übertragung der Kraft, welche von einem kämmenden Zahn auf die Gegenverzahnung aufgebracht wird, gelöst werden. Und zwar stützt sich die dünne Gegenverzahnungsschicht unmittelbar angrenzend an den Wälzzylinder, welcher durch die Mantelflächen der an das Zahnrad angrenzenden zylindrischen Scheiben definiert wird, tangential zu diesem Wälzzylinder auf der Verzahnung des Zahnrads ab. Und zwar entlang dem gesamten Umschlingungsumfang zwischen der dünnen flexiblen Gegenverzahnungsschicht und dem durch die Mantelflächen der zylindrischen Scheiben definierten Wälzzylinder. Anders als beim Kämmen von zwei Zahnrädern wird beim Kämmen eines Zahnrads mit einer dünnen flexiblen Gegenverzahnungsschicht die Kraft nicht punktuell zwischen zwei Zähnen übertragen, sondern durch eine Reihe von Stützlinien, welche die dünne flexible Gegenverzahnungsschicht mit der Verzahnung des Zahnrads entlang dem Umschlingungsumfang ausbildet. Und zwar schiebt jeder Zahn des Zahnrads in Bewegungsrichtung des Zahnrads entlang dem Umschlingungsumfang ähnlich wie ein Zugpferd seinen Brustriemen einen Zahn der dünnen flexiblen Gegenverzahnungsschicht vor sich her. Ein neu in Eingriff gelangender Zahn des Zahnrads berührt erst dann einen Zahn der dünnen flexiblen Gegenverzahnungsschicht, wenn bei seitlicher Betrachtung des Zahnrads eine Linie, welche von dem Mittelpunkt des Zahnrads durch die Symmetrieachse des neu in Eingriff gelangenden Zahnes läuft, senkrecht zu der dünnen einlaufenden gestreckten flexiblen Gegenverzahnungsschicht ausgerichtet ist. Ab hier bildet der neue Zahn eine Stützlinie aus, welche an den Wälzzylinder angrenzt und parallel zur Achse des Wälzzylinders ausgerichtet ist (bei einer geradverzahnten Stirnradverzahnung). Aber, der neu in Eingriff gelangende Zahn muss die Last nicht alleine tragen, sondern teilt sich die Last mit den anderen ziehenden Zähnen entlang des Umschlingungsumfangs wie die einzelnen Akteure bei einem Seilziehen.

Durch das Ausbilden solcher Paarungen aus Zahnrad und angrenzenden zylindrischen Scheiben auf der einen Seite und einer dünnen flexiblen Gegenverzahnungsschicht auf der anderen Seite kann man Rotationsbewegungen rein wälzend übertragen.

Für einen Einsatz solcher Paarungen zur rein wälzenden Bewegungsübertragung, beispielsweise zum Antreiben einer Nockenwelle durch eine Kurbelwelle, können sowohl die zylindrischen Scheiben auf beiden Seiten eines Zahnrads als auch das Zahnrad fest mit einer Welle verbunden sein. Für einen Einsatz in einem Schaltgetriebe können in einem weiteren Erfindungsschritt die zylindrischen Scheiben auf beiden Seiten eines Zahnrads beispielsweise fest mit einer Welle verbunden sein, und kann das Zahnrad steuerbar formschlüssig mit einer Welle verbunden werden. Dadurch können die noch nicht im Kraftfluss mit einer Welle befindlichen Zahnräder (steuerbarer Formschluss noch nicht hergestellt) auf dieser Welle angetrieben durch die dünne flexible Gegenverzahnungsschicht gleichsam im Leerlauf sein, wodurch ein späteres Einkuppeln vereinfacht wird.

Um ehrlich zu sein, ist die Erfindung bis hierher noch nicht vollkommen. Denn diese dünne flexible Gegenverzahnungsschicht muss natürlich bei einem Umlauf gebogen werden, und dazu ist Verformungsenergie notwendig. Es wären also alle bisher gemachten Anstrengungen zum Vermeiden der Gleitreibung vergeblich gewesen, wenn der eingesparte Kraftstoff jetzt als Energie zur Verformung der dünnen flexiblen Gegenverzahnungsschicht aufgebracht werden müsste. Hier konnte mir meine Erfahrung bei der Konstruktion von Tragflächen aus laminierten Schichten aus einem Kohlefaserverbundwerkstoff überraschenderweise weiterhelfen. Und zwar kann sich ein zunächst begrenzter von außen kaum sichtbarer Schaden durch eine Stoßeinwirkung auf eine solche laminierte Schicht zu einem katastrophalen Schaden für das Luftfahrzeug entwickeln, indem durch die Betriebsbelastung ausgehend von der zunächst begrenzten Schadensstelle sich der Schichtaufbau mit fortschreitender Zeit großflächig delaminiert und schließlich zu einem Versagen der Tragflügelkonstruktion führt.

Die Ursache dafür kann man aus einer kleinen mathematischen Betrachtung erkennen. Und zwar beträgt das Flächenträgheitsmoment einer homogenen Schicht mit einer Dicke $t_0$ und einer Breite $b_0$

$$I_0 = b_0 \cdot t_0^3/12 \; ;$$

Dagegen beträgt das Flächenträgheitsmoment bei einer Schicht, welche wiederum aus einzelnen nicht miteinander verbundenen einzelnen dünnen Schichten besteht, jeweils mit einer Dicke $t = t_0/n$ (n = 2, 3, 4, ...) (bei n dünnen einzelnen Schichten) und einer Breite $b_0$ für eine einzelne dünne Schicht von den n Schichten

$$I_n = b_0 \cdot (t_0/n)^3/12 \; ;$$

und weiter beträgt das gesamte Flächenträgheitsmoment einer Schicht aus n einzelnen dünnen Schichten

$$I = n \cdot I_n = n \cdot b_0 \cdot (t_0/n)^3/12 = I_0/n^2 \; ;$$

das heißt, wird eine Schicht bei identischer Gesamtdicke $t_0$ statt aus einer homogenen Schicht aus beispielsweise 10 einzelnen dünnen nicht miteinander verbundenen Schichten (n = 10) hergestellt, dann besitzt diese gesamte Schicht überraschenderweise ein um den Faktor 100 geringeres Flächenträgheitsmoment, welches wiederum als Produkt zusammen mit dem Elastizitätsmodul E die Biegesteifigkeit ergibt. Das heißt, ein delaminierter Tragflügel besitzt nur noch einen geringen Bruchteil der ursprünglichen Biegesteifigkeit und muss zwangsläufig versagen.

So katastrophal wie dieser Effekt bei einem Tragflügel ist, umso erfreulicher ist dieser Effekt bei einer dünnen flexiblen Gegenverzahnungsschicht. Denn da die Größe der aufzubringenden Verformungsenergie bei einem Umlauf einer dünnen flexiblen Gegenverzahnungsschicht proportional zur Größe der Biegesteifigkeit ist, kann durch das Ausbilden der dünnen flexiblen Gegenverzahnungsschicht aus wiederum n einzelnen dünnen Schichten bei gleicher Gesamtdicke die für einen Umlauf notwendige Verformungsenergie auf einen geringen Bruchteil gleich $1/n^2$ des Ursprungswertes (n=1) reduziert werden.

Darüber hinaus ist bekannt, dass man dünne Schichten, insbesondere Metallschichten, durch Kaltwalzen mit einer hohen Zugfestigkeit ausbilden kann. Das bedeutet, die dünne flexible Gegenverzahnungsschicht aus wiederum n einzelnen dünnen Schichten läuft nicht nur nahezu ohne den Bedarf an Verformungsenergie um, sondern eine dünne flexible Gegenverzahnungsschicht aus wiederum n einzelnen dünnen Schichten besitzt auch überraschenderweise eine höhere Zugfestigkeit bei gleicher Gesamtdicke der dünnen flexiblen Gegenverzahnungsschicht als eine Ausführungsform mit einer Schicht. Dadurch kann entweder die Gesamtdicke der dünnen flexiblen Gegenverzahnungsschicht aus wiederum n einzelnen dünnen Schichten gegenüber dem rechnerisch bestimmten Wert für eine Ausführungsform mit einer einzigen Schicht reduziert werden, oder es kann der Sicherheitsfaktor für die Zugfestigkeit erhöht werden.

Mit diesen hier beschriebenen Elementen der Erfindung können jetzt Getriebe, Primärantriebe, Sekundärantrieb und Kupplungen, etc. erfindungsgemäß modifiziert werden.

Weiter ist es für eine kommerzielle weltweite Anwendung wichtig, dass sich die Erfindung in den bereits existierenden Kosmos der Maschinenelemente gut integrieren lässt. Deshalb ist es vorteilhaft, als Zahnräder, welche in die dünne flexible Gegenverzahnungsschicht eingreifen, bereits eingeführte genormte Zahnräder zu verwenden.

Damit ist die Geschichte der vorliegenden Erfindung erzählt. Noch zusätzliche erfinderische Elemente werden nachfolgend aufgezeigt.

TECHNISCHER HINTERGRUND DER ERFINDUNG - STAND DER TECHNIK - DISKUSSION

Jetzt erfolgt die Auseinandersetzung mit dem Stand der Technik. Deshalb wird die dünne flexible Gegenverzahnungsschicht nachfolgend als Flachriemen mit einer Reihenanordnung mit Durchbrüchen bezeichnet, und wird die Verzahnung des Zahnrads nachfolgend als Reihenanordnung mit Vorsprüngen bezeichnet, und werden die zylindrischen Scheiben, welche auf beiden Seiten eines Zahnrads angrenzen, als Riemenscheiben bezeichnet.

Synchronflachriementriebe sind in der Antriebstechnik zum synchronen Übertragen von Rotationsbewegungen weit verbreitet. Sie bestehen im Wesentlichen aus zumindest einer zylindrischen Antriebsriemenscheibe und zumindest einer zylindrischen angetriebenen Riemenscheibe, einem Flachriemen in einer offenen oder geschlossenen Bauweise und einer Spannvorrichtung für den Flachriemen, wobei der Flachriemen mit den Riemenscheiben infolge der Haftreibungskraft, welche entlang dem Umschlingungsumfang zwischen dem Flachriemen und der jeweiligen Riemenscheibe wirkt, eine kraftschlüssige Verbindung bildet, und wobei der Flachriemen mit den Riemenscheiben infolge des Eingreifens einer Reihenanordnung mit Durchbrüchen auf dem Flachriemen in eine Reihenanordnung mit Vorsprüngen auf der jeweiligen Riemenscheibe entlang dem Umschlingungsumfang zwischen dem Flachriemen und der jeweiligen Riemenscheibe zusätzlich zu der oben genannten kraftschlüssigen Verbindung eine formschlüssige Verbindung bildet.

Synchronflachriementriebe haben gegenüber anderen Synchronantrieben, wie beispielsweise einem Rollenkettentrieb und einem Zahnriementrieb, folgende Vorteile: eine geringe Geräuschemission auf Grund einer aerodynamisch glatten Oberfläche des Flachriemens, geringe Herstellungskosten auf Grund einer einfachen Bauform des Flachriemens, und keinen Polygoneffekt wegen der Abstützung des Flachriemens auf einer zylinderförmigen Riemenscheibenlauffläche.

Dennoch haben Synchronflachriementriebe bis heute keine große Verbreitung gefunden, da bei den bekannten Synchronflachriementrieben die Wälzpaarung aus einem Flachriemendurchbruch und einem Riemenscheibenvorsprung kein reines Wälzen ermöglicht. Dadurch treten bei einem Betrieb des Synchronflachriementriebs Reibungsverluste und ein erhöhter Verschleiß auf. Darüber hinaus sind die umlaufenden Flachriemen nicht aus einzelnen dünnen getrennten Schichten ausgebildet, wodurch bei einem Umlauf eine hohe Verformungsenergie aufgewendet werden muss.

Insbesondere nutzen die Synchronflachriementriebe gemäß der Patente US 1,683,955 (11.09.1928), US 2,408,666 (01.10.1946), US 3,642,120 (15.02.1972), US 3,772,930 (20.11.1973), US 4,568,320 (04.02.1986), WO 86/01570 (13.03.1986) und US 5,129,865 (14.07.1992) Vorsprünge mit einem kreisförmigen Querschnitt, wobei durch diese Vorsprünge neben der Synchronisationsaufgabe auch die Aufgabe der seitlichen Führung des Flachriemens übernommen wird. Außerdem stützt sich der Flachriemen zwischen den einzelnen Vorsprüngen in Umfangsrichtung von der Riemenscheibe auf der jeweiligen Riemenscheibenlauffläche radial zu einer Riemenscheibenachse ab. Durch beide Vorgänge werden insbesondere beim Einsteigen eines Durchbruchs in einen Vorsprung und beim Aussteigen eines Durchbruchs aus einem Vorsprung Reibungskräfte erzeugt. Durch diese Reibungskräfte wird der Wirkungsgrad des Flachriemens reduziert und wird ein Verschleiß sowohl bei den Vorsprüngen als auch bei den Durchbrüchen verursacht. Außerdem lagert sich der durch die Reibungskräfte verursachte Abrieb unmittelbar im Fußbereich eines Vorsprungs auf der Riemenscheibenlauffläche ab. Zusammen mit einem Ausweiten des Durchbruchs durch den Verschleiß kann diese Reduzierung der wirksamen Höhe eines Vorsprungs zu einem Nichteingreifen eines Durchbruchs in einen Vorsprung führen, wodurch der Flachriemen weiter geschädigt wird, und es zu einem Versagen der Synchronisation kommt.

Weiter sind die Flachriemen bei den bekannten Synchronflachriementrieben nicht in einer Schichtanordnung aus zumindest einem Band mit mehreren Schichten ausgebildet, wodurch eine höhere Biegesteifigkeit und eine geringere Festigkeit bei gleicher Gesamtdicke des Flachriemens erhalten werden. Dadurch wird ein Wirkungsgradgewinn nicht realisiert, weil bei einem Umlauf eines Flachriemens aus einer einzigen Schicht eine deutlich höhere Verformungsenergie aufgewendet werden muss als bei einem Umlauf eines Flachriemens aus mehreren Schichten bei gleicher Gesamtdicke des Flachriemens.

Weiter ist die Synchronisation bei den bekannten Synchronflachriementrieben nicht steuerbar. Dadurch ist es nicht möglich, in einer Anlaufphase oder einer Auslaufphase, oder während des Betriebs des Synchronflachriementriebs die Synchronisation auszuschalten oder einzuschalten.

Weiter sind die bekannten Synchronflachriementriebe nicht standardisiert und können auch nicht in das Normensystem der Maschinenelemente der Antriebstechnik integriert werden. Dokument US 2002/0176722 repräsentiert den nächsten Stand der Technik und offenbart die Merkmale des Oberbegriffs des Anspruchs 1.

DARSTELLUNG DER ERFINDUNG - AUFGABE UND LÖSUNG

Der Erfindung liegt die Aufgabe zu Grunde, einen Synchronflachriementrieb zu schaffen, welcher ohne Einbuße bei den oben genannten Vorteilen gegenüber den anderen Synchronantrieben, wie beispielsweise einem Rollenkettentrieb und einem Zahnriementrieb, keinen der oben genannten Nachteile zeigt. Diese Aufgabe wird durch einen erfindungsgemäßen Synchronflachriementrieb gemäß den Merkmalen der Ansprüche gelöst.

DARSTELLUNG DER ERFINDUNG - DIE WESENTLICHEN KERNELEMENTE DER ERFINDUNG

Zum besseren Verständnis werden nachfolgend die wesentlichen Kernelemente der Erfindung dargestellt, wobei dadurch der Anwendungsbereich der Erfindung, welcher durch die beigefügten Ansprüche und ihre rechtliche Äquivalenz bestimmt wird, nicht eingeschränkt wird.

Das erste Kernelement der Erfindung umfasst eine rein wälzend erfolgende reibungsfreie Kraftübertragung zwischen einem Flachriemen in Schichtbauweise und einem zylindrischen Eingreifkörper mit Rotationselementen, welche jeweils eine Reihenanordnung mit Vorsprüngen umfassen, und mit Riemenscheiben, wobei das Abwälzen des Eingreifkörpers entlang der Längsachse eines Flachriemens, auf einer flachen Seite eines eben angeordneten Flachriemens, die Erzeugende einer Reihenanordnung mit Durchbrüchen von dem Flachriemen ist. Und zwar stützt sich bei einem umlaufenden Flachriemen eine Reihenanordnung mit Durchbrüchen von einem Flachriemen auf einer Reihenanordnung mit Vorsprüngen von einem Eingreifkörper unmittelbar am Wälzzylinder in einer Richtung im Wesentlichen nur tangential zu diesem Wälzzylinder ab. Dabei stützt sich der Flachriemen in einer Richtung radial zu der Eingreifkörperachse im Wesentlichen nur auf den Riemenscheiben des Eingreifkörpers ab.

Das zweite Kernelement der Erfindung umfasst ein reibungsfreies Einsteigen der Durchbrüche in die Vorsprünge und ein reibungsfreies Aussteigen. Dies wird durch eine axiale Führung des Flachriemens außerhalb des Eingreifbereichs realisiert, indem im Eingreifbereich die Durchbrüche von einem Flachriemen in axialer Richtung vom Eingreifkörper ein seitliches Spiel zu den Vorsprüngen aufweisen, und die Längsseiten von dem Flachriemen auf den beiden äußeren Riemenscheiben geführt werden.

Das dritte Kernelement der Erfindung umfasst die Möglichkeit, einen Flachriemen mit einer hohen Festigkeit auszubilden, welcher auf Grund seiner geringen Biegesteifigkeit nahezu ohne das Aufbringen von Verformungsenergie umläuft. Dies wird ermöglicht, indem der Flachriemen in einer endlosen oder offenen Bauform in einer Schichtanordnung aus einzelnen endlosen oder offenen Bändern ausgebildet wird.

Das vierte Kernelement der Erfindung umfasst die Möglichkeit, beispielsweise während einer Anlaufphase, die Synchronisation der Rotationsbewegung zwischen den Rotationselementen und den Riemenscheiben von einem Eingreifkörper, und damit auch von mehreren Eingreifkörpern im Synchronflachriementrieb auszuschalten, und erst später nach einer Stabilisierung der Drehzahl einzuschalten. Dies wird realisiert, indem die Rotationselemente mit den Riemenscheiben von einem Eingreifkörper steuerbar formschlüssig, beispielsweise durch ein Ziehkeilgetriebe, oder steuerbar kraftschlüssig, beispielsweise durch eine Reibkupplung, mit den Riemenscheiben verbunden werden können.

Das fünfte Kernelement der Erfindung umfasst die beispielsweise Verwendung von genormten Zahnrädern als Rotationselemente, wodurch das bestehende Normensystem der Maschinenelemente der Antriebstechnik um eine Reihe von genormten Flachriemen und eine Reihe von genormten Riemenscheiben von einem Synchronflachriementrieb erweitert wird.

DARSTELLUNG DER ERFINDUNG - ANWENDUNGSBEREICHE

Als künftige Anwendungsbereiche der vorliegenden Erfindung sind die Feinwerkstechnik, der Kraftfahrzeugbau, die Schiffstechnik, die Luftfahrzeugtechnik und der Allgemeine Maschinenbau möglich. Die zu übertragende Leistung reicht dabei von wenigen Watt bis zu mehreren hundert Kilowatt.

KURZE BESCHREIBUNG DER ZEICNNUNGEN

Ausführungsformen der Erfindung sind in den beigefügten Zeichnungen exemplarisch und in nicht einschränkender Weise dargestellt und werden nachfolgend beschrieben.
Es zeigen
die Figur 1a eine Teilschnittansicht einer ersten Ausführungsform der Erfindung mit zwei Eingreifkörpern und einem Flachriemen, wobei bei beiden Eingreifkörpern jeweils ein Kettenzahnrad als Rotationselement verwendet wird;
die Figur 1b eine Seitenansicht einer Teilschnittansicht einer ersten Ausführungsform der Erfindung von Figur 1a;
die Figur 1c eine Schnittansicht eines Eingreifkörpers einer ersten Ausführungsform der Erfindung entlang der Linie A-A in Figur 1a, wobei das Rotationselement mit beiden angrenzenden Riemenscheiben stoffschlüssig verbunden ist;
die Figur 1d eine Schnittansicht eines Eingreifkörpers einer ersten Ausführungsform der Erfindung entlang der Linie A-A in Figur 1a, wobei das Rotationselement mit beiden angrenzenden Riemenscheiben über eine Passfeder formschlüssig verbunden ist;
die Figur 1e eine Schnittansicht eines Eingreifkörpers einer ersten Ausführungsform der Erfindung entlang der Linie A-A in Figur 1a, wobei das Rotationselement mit beiden angrenzenden Riemenscheiben über den mit dem Rotationselement im Eingriff befindlichen Flachriemen durch die Haftreibung zwischen dem jeweiligen Flachriemenzugstrang und der jeweiligen Riemenscheibenlauffläche entlang dem Umschlingungsumfang zwischen dem jeweiligen Flachriemenzugstrang und der jeweiligen Riemenscheibenlauffläche kraftschlüssig verbunden ist;
die Figur 1f eine Schnittansicht eines Eingreifkörpers einer ersten Ausführungsform der Erfindung entlang der Linie A-A in Figur 1a, wobei das Rotationselement mit beiden angrenzenden Riemenscheiben über ein Ziehkeilgetriebe und ein Paar von Passfedern von mittlerer Länge steuerbar formschlüssig verbunden ist;
die Figur 1g einen Flachriemenabschnitt einer ersten Ausführungsform der Erfindung aus der Blickrichtung X in Figur 1a;
die Figur 1h eine Schnittansicht eines Flachriemenabschnitts einer ersten Ausführungsform der Erfindung entlang der Linie D-D in Figur 1g;
die Figur 1i schematisch den Verlauf eines Flachriemens einer ersten Ausführungsform der Erfindung in einer geschlossenen Bauweise, wobei der Flachriemen aus einem einzigen endlosen Band besteht;
die Figur 2a eine Teilschnittansicht einer zweiten Ausführungsform der Erfindung mit zwei Eingreifkörpern und einem Flachriemen, wobei bei beiden Eingreifkörpern jeweils ein Kettenzahnrad als Rotationselement verwendet wird;
die Figur 2b eine Seitenansicht einer Teilschnittansicht einer zweiten Ausführungsform der Erfindung von Figur 2a;
die Figur 2c eine Schnittansicht eines Eingreifkörpers einer zweiten Ausführungsform der Erfindung entlang der Linie B-B in Figur 2a, wobei das Rotationselement mit beiden angrenzenden Riemenscheiben stoffschlüssig verbunden ist;
die Figur 2d eine Schnittansicht eines Eingreifkörpers einer zweiten Ausführungsform der Erfindung entlang der Linie B-B in Figur 2a, wobei das Rotationselement mit beiden angrenzenden Riemenscheiben über eine Passfeder formschlüssig verbunden ist;
die Figur 2e eine Schnittansicht eines Eingreifkörpers einer zweiten Ausführungsform der Erfindung entlang der Linie B-B in Figur 2a, wobei das Rotationselement mit beiden angrenzenden Riemenscheiben über den mit dem Rotationselement im Eingriff befindlichen Flachriemen durch die Haftreibung zwischen dem jeweiligen Flachriemenzugstrang und der jeweiligen Riemenscheibenlauffläche entlang dem Umschlingungsumfang zwischen dem jeweiligen Flachriemenzugstrang und der jeweiligen Riemenscheibenlauffläche kraftschlüssig verbunden ist;
die Figur 2f eine Schnittansicht eines Eingreifkörpers einer zweiten Ausführungsform der Erfindung entlang der Linie B-B in Figur 2a, wobei das Rotationselement mit beiden angrenzenden Riemenscheiben über ein Ziehkeilgetriebe und ein Paar von Passfedern von mittlerer Länge steuerbar formschlüssig verbunden ist;
die Figur 2g einen Flachriemenabschnitt einer zweiten Ausführungsform der Erfindung aus der Blickrichtung Y in Figur 2a;
die Figur 2h eine Schnittansicht eines Flachriemenabschnitts einer zweiten Ausführungsform der Erfindung entlang der Linie E-E in Figur 2g, wobei die Verbindungselemente von hülsenförmigen Zusatzformelementen mit der Querschnittsform eines Kreises umschlossen sind;
die Figur 2i eine Schnittansicht eines Flachriemenabschnitts einer zweiten Ausführungsform der Erfindung entlang der Linie E-E in Figur 2g, wobei die Verbindungselemente von hülsenförmigen Zusatzformelementen mit der Querschnittsform einer "0" umschlossen sind;
die Figur 2j eine Schnittansicht eines Flachriemenabschnitts einer zweiten Ausführungsform der Erfindung entlang der Linie E-E in Figur 2g, wobei die Verbindungselemente von hülsenförmigen Zusatzformelementen mit der Querschnittsform einer "8" umschlossen sind;

die Figur 2k schematisch den Verlauf eines Flachriemens einer zweiten Ausführungsform der Erfindung in einer geschlossenen Bauweise, wobei der Flachriemen aus einem einzigen offenen aufgewickelten Band besteht, welches mehrere Schichten ausbildet;

die Figur 3a eine Teilschnittansicht einer dritten Ausführungsform der Erfindung mit zwei Eingreifkörpern und einem Flachriemen, wobei bei beiden Eingreifkörpern jeweils ein stirnverzahntes Zahnrad als Rotationselement verwendet wird;

die Figur 3b eine Seitenansicht einer Teilschnittansicht einer dritten Ausführungsform der Erfindung von Figur 3a;

die Figur 3c eine Schnittansicht eines Eingreifkörpers einer dritten Ausführungsform der Erfindung entlang der Linie C-C in Figur 3a, wobei das Rotationselement mit beiden angrenzenden Riemenscheiben stoffschlüssig verbunden ist;

die Figur 3d eine Schnittansicht eines Eingreifkörpers einer dritten Ausführungsform der Erfindung entlang der Linie C-C in Figur 3a, wobei das Rotationselement mit beiden angrenzenden Riemenscheiben über eine Passfeder formschlüssig verbunden ist;

die Figur 3e eine Schnittansicht eines Eingreifkörpers einer dritten Ausführungsform der Erfindung entlang der Linie C-C in Figur 3a, wobei das Rotationselement mit beiden angrenzenden Riemenscheiben über den mit dem Rotationselement im Eingriff befindlichen Flachriemen durch die Haftreibung zwischen dem jeweiligen Flachriemenzugstrang und der jeweiligen Riemenscheibenlauffläche entlang dem Umschlingungsumfang zwischen dem jeweiligen Flachriemenzugstrang und der jeweiligen Riemenscheibenlauffläche kraftschlüssig verbunden ist;

die Figur 3f eine Schnittansicht eines Eingreifkörpers einer dritten Ausführungsform der Erfindung entlang der Linie C-C in Figur 3a, wobei das Rotationselement mit beiden angrenzenden Riemenscheiben über ein Ziehkeilgetriebe und ein Paar von Passfedern von mittlerer Länge steuerbar formschlüssig verbunden ist;

die Figur 3g einen Flachriemenabschnitt einer dritten Ausführungsform der Erfindung aus der Blickrichtung Z in Figur 3a;

die Figur 3h eine Schnittansicht eines Flachriemenabschnitts einer dritten Ausführungsform der Erfindung entlang der Linie F-F in Figur 3g;

die Figur 3i eine Teilschnittansicht einer modifizierten dritten Ausführungsform der Erfindung mit drei Eingreifkörpern, einem einzelnen stirnverzahnten Zahnrad und einem Flachriemen, wobei bei den drei Eingreifkörpern jeweils ein stirnverzahntes Zahnrad als Rotationselement verwendet wird, und wobei ein Eingreifkörper mit einem Rotationselement mit dem einzelnen stirnverzahnten Zahnrad im Eingriff ist;

die Figur 3j schematisch den Verlauf eines Flachriemens einer dritten Ausführungsform der Erfindung in einer geschlossenen Bauweise, wobei der Flachriemen aus zwei endlosen Bändern in einer Schichtanordnung besteht;

die Figur 3k schematisch den Verlauf eines weiteren Flachriemens einer dritten Ausführungsform der Erfindung in einer geschlossenen Bauweise, wobei der Flachriemen aus zwei Schichten besteht, und wobei die innere Schicht von zwei offenen Bändern ausgebildet wird, welche an der 12:00 Uhr-Position und an der 06:00 Uhr-Position aneinanderstoßen, und wobei die äußere Schicht von einem endlosen Band ausgebildet wird;

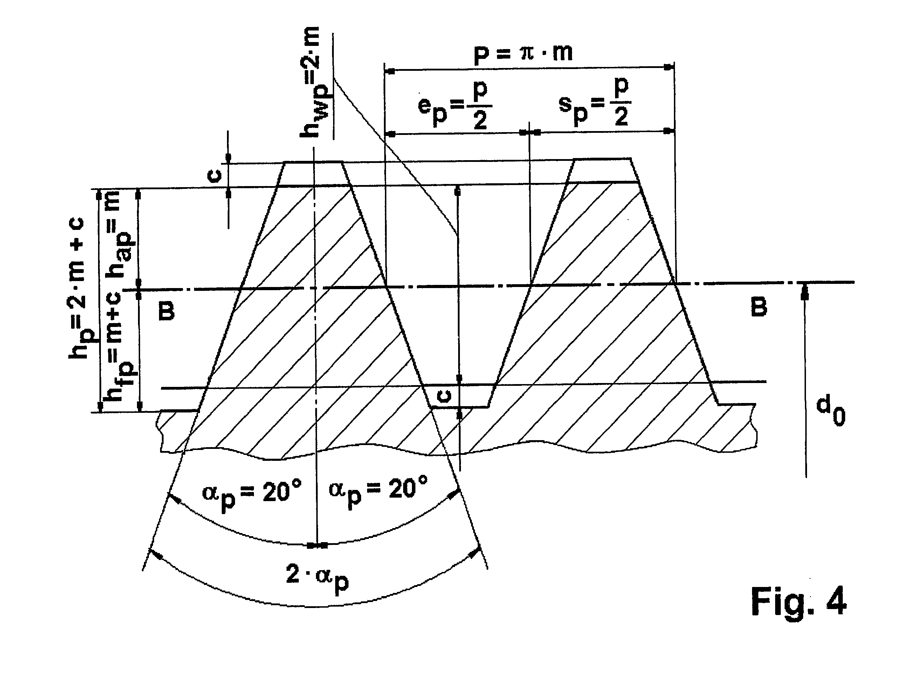

die Figur 4 schematisch die Geometrie des Bezugsprofils gemäß DIN 867;

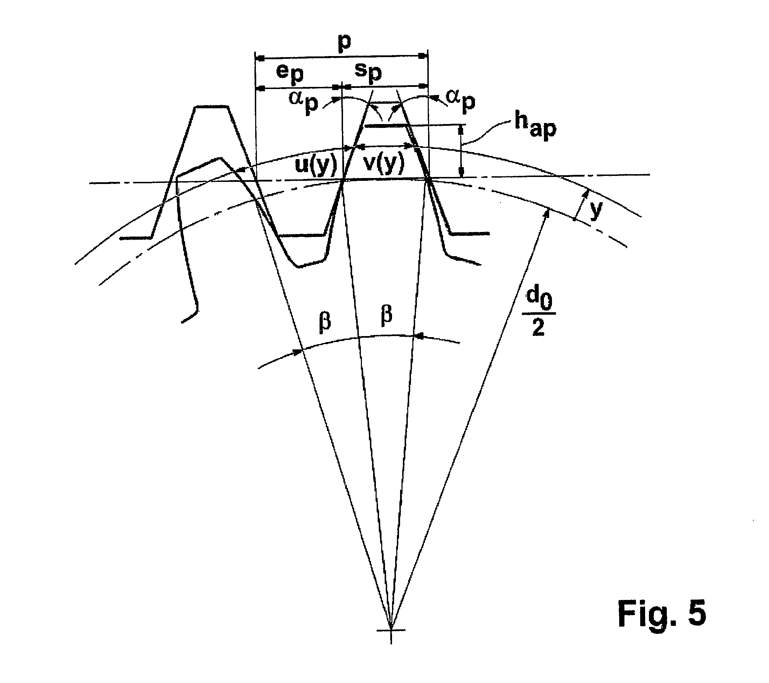

die Figur 5 schematisch die Geometrie zur Berechnung von u(y) und v(y);

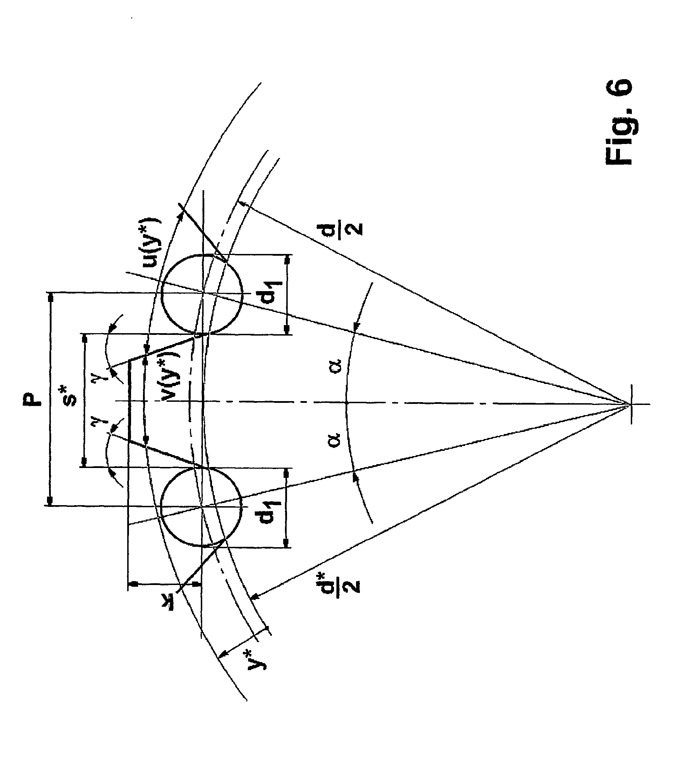

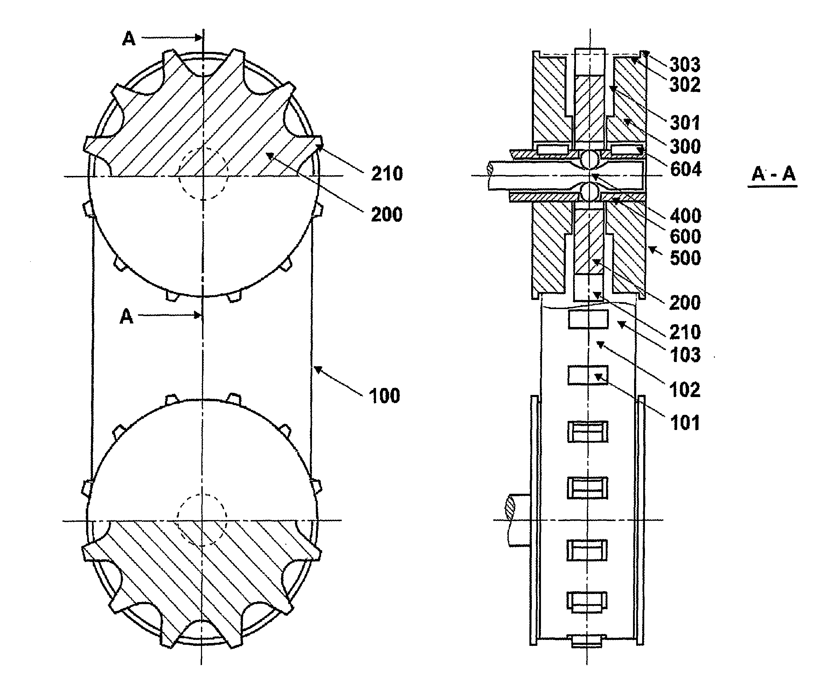

die Figur 6 schematisch die Geometrie zur Berechnung von u(y*) und v(y*).

AUFLISTUNG DER BEZUGSZEICHEN

| 100 | Flachriemen |
| 101 | Durchbruch |
| 102 | Verbindungselement |
| 103 | Flachriemenzugstrang |
| 110 | Band |
| 111 | Abschrägung |
| 121 | Zusatzformelement |
| 200 | Rotationselement |
| 210 | Vorsprung |
| 300 | Riemenscheibe |
| 301 | ringförmige Aussparung |
| 302 | Riemenscheibenlauffläche |
| 303 | Führungselement |
| 400 | Ziehkeilgetriebe |
| 500 | Eingreifkörper |
| 600 | Welle |
| 601 | Passfeder, große Länge |
| 602 | Passfeder, kleine Länge |

| | |
|---|---|
| 603 | Wälzlager |
| 604 | Passfeder, mittlere Länge |

| | | |
|---|---|---|
| $b$ | | Zahnbreite der Verzahnung des Zahnrads |
| $B$ | | Zahnbreite der Verzahnung des Kettenzahnrads |
| $b_{eb}$ | | Breite Eingreifkörper |
| $b_0$ | | Breite Flachriemen |
| $b_g$ | | Breite Führungselement |
| $b_{ip}$ | | Breite einer inneren Riemenscheibe |
| $b_{op}$ | | Breite einer äußeren Riemenscheibe |
| $b_r$ | | Breite Aussparung |
| $b_w$ | | Breite Riemenscheibenlauffläche |
| $b_c$ | | Breite Flachriemenzugstrang |
| $c$ | | Kopfspiel der Verzahnung des Zahnrads |
| $d$ | | Teilkreisdurchmesser des Kettenzahnrads |

$$(d = P/\sin \alpha = P/\sin (\pi/Z))$$

| | |
|---|---|
| $d'$ | Durchmesser eines Riemenscheibenlaufflächenzylinders |
| $d_0$ | Teilkreisdurchmesser des Zahnrads |
| $d^*$ | Durchmesser des Ursprungskreis für die Koordinate $y^*$ |

$$(d^* = P/\tan \alpha = P/\tan (\pi/Z))$$

| | |
|---|---|
| $d_1$ | Rollendurchmesser einer Gelenkkette |
| $E$ | Elastizitätsmodul |
| $e_p$ | Stirnradverzahnungsteilkreislückenweite |
| $h_{ap}$ | Kopfhöhe der Verzahnung des Zahnrads |
| $h_{fp}$ | Fußhöhe der Verzahnung des Zahnrads |
| $h_p$ | Profilhöhe der Verzahnung des Zahnrads |
| $h_{wp}$ | gemeinsame Zahnhöhe der Verzahnung von Zahnrädern |
| $I$ | Flächenträgheitsmoment |
| $I_0$ | Flächenträgheitsmoment eines Flachriemens mit der Dicke $t_0$ |
| $I_n$ | Flächenträgheitsmoment eines Flachriemens mit der Dicke $t$ wobei $t = t_0/n$ |
| $k$ | Zahnkopfhöhe der Verzahnung des Kettenzahnrads |
| Linie BB | Profilbezugslinie der Verzahnung des Zahnrads |
| $m$ | Modul der Verzahnung des Zahnrads |
| $n$ | Natürliche Zahl |
| $p$ | Teilung der Verzahnung des Zahnrads |
| $p$ | Teilung der Verzahnung des Kettenzahnrads |
| $s_p$ | Stirnradverzahnungsteilkreiszahndicke |
| $s^*$ | Zahndicke der Verzahnung des Kettenzahnrads auf dem Ursprungskreis für die Koordinate $y^*$ |
| $t$ | Dicke eines Bandes von n Bändern eines Flachriemens (= $t_0/n$) |
| $t_0$ | Dicke eines Flachriemens |
| $u$ | senkrechter Abstand zwischen zwei in Längsrichtung des Flachriemens aufeinander folgenden Seiten eines Verbindungselements |
| $\ddot{U}$ | Übersetzungsverhältnis (= $z_1/z_2$ oder = $Z_1/Z_2$) |
| $v$ | senkrechter Abstand zwischen zwei in Längsrichtung des Flachriemens aufeinander folgenden Seiten eines Durchbruchs |
| $w$ | Breite des Durchbruchs |
| $y$ | radiale Höhenkoordinate mit Ursprung auf dem Teilkreis des Zahnrads |
| $y^*$ | radiale Höhenkoordinate mit Ursprung auf dem Kreis mit dem Durchmesser $d^*$ von dem Kettenzahnrad |
| $z$ | Zähnezahl des Zahnrads |
| $Z$ | Zähnezahl des Kettenzahnrads |
| $\alpha$ | halber Teilungswinkel der Verzahnung des Kettenzahnrads (= $\pi/Z$) |

| | |
|---|---|
| $\alpha_p$ | halber Flankenwinkel eines Zahnes der Verzahnung des Zahnrads (= 20°) |
| $\beta$ | halber Teilwinkel der Verzahnung des Zahnrads (= n/z) |
| $\gamma$ | Zahnflankenwinkel der Verzahnung des Kettenzahnrads |
| $\delta_n$ | Differenz zwischen dem Innenumfang eines Bandes in der n-ten Schicht und dem Innenumfang eines Bandes in der ersten Schicht bei kreisförmiger Anordnung der Schichtanordnung |
| $\delta_{gesamt}$ | Summe der n einzelnen $\delta_n$ bei einem aufgewickelten Band mit n Wicklungen (Schichten) |
| $\Delta_1$ | vorherbestimmtes Spiel in Längsrichtung des Flachriemens |
| $\Delta_2$ | vorherbestimmtes Spiel senkrecht zur Längsrichtung des Flachriemens |
| $\Delta_3$ | vorherbestimmtes Spiel in Längsrichtung des Flachriemens |
| $\Delta_4$ | vorherbestimmtes Spiel senkrecht zur Längsrichtung des Flachriemens |
| n | Kreiszahl |
| $\sigma_{zul}$ | zulässige Spannung |

BESCHREIBUNG VON AUSFÜHRUNGSFORMEN

Nachfolgend wird zunächst eine allgemeine Beschreibung von Ausführungsformen vorgenommen, danach wird eine erste spezielle Ausführungsform mit ihren Abmaßen detailliert beschrieben und werden spezielle zweite und dritte Ausführungsformen als zusätzliche Ausführungsformen beschrieben.

Bei der allgemeinen Beschreibung von Ausführungsformen werden in einem ersten Schritt die verwendeten Bauelemente dargestellt, werden in einem zweiten Schritt die Aspekte bei der Konstruktion von Ausführungsformen diskutiert, wird in einem dritten Schritt dann die Fertigung der Bauteile erklärt, werden in einem vierten Schritt Anwendungsbereiche von Ausführungsformen dargestellt, und wird schließlich in einem fünften Schritt der Betrieb von Ausführungsformen dargestellt. Dabei wird auch schon Bezug zu den Zeichnungen der speziellen Ausführungsformen genommen, wobei die dargestellten Figuren in den Zeichnungen lediglich zur Veranschaulichung dienen und den Anwendungsbereich der Erfindung gemäß den Merkmalen der Ansprüche und ihrer rechtlichen Äquivalenz nicht einschränken.

In den Figuren sind gleiche Bauteile für die verschiedenen speziellen Ausführungsformen mit gleichen Bezugszeichen versehen.

ALLGEMEINE BESCHREIBUNG VON AUSFÜHRUNGSFORMEN

ALLGEMEINE BESCHREIBUNG VON AUSFÜHRUNGSFORMEN - BESCHREIBUNG DER BAUTEILE

Im Allgemeinen umfasst der erfindungsgemäße Synchronflachriementrieb die nachfolgend aufgelisteten Bauteile, welche auch mehrfach auftreten können.

ALLGEMEINE BESCHREIBUNG VON AUSFÜHRUNGSFORMEN - BESCHREIBUNG DER BAUTEILE - EINGREIFKÖRPER

Ein Eingreifkörper 500 umfasst n (n = 1, 2, 3, ...) Rotationselemente 200 und n+1 Riemenscheiben 300, wobei ein einzelnes Rotationselement 200 zwischen einem Paar von koaxialen Riemenscheiben 300 koaxial zu diesem Paar positioniert ist, und wobei eine an den Seiten eines Eingreifkörpers positionierte Riemenscheibe 300 eine ringförmige Aussparung 301, eine Riemenscheibenlauffläche 302 und ein Führungselement 303 entlang des Riemenscheibenumfangs umfasst, und eine im Inneren eines Eingreifkörpers zwischen einem Paar von Rotationselementen 200 positionierte Riemenscheibe 300 in einer symmetrischen Anordnung zwei ringförmige Aussparungen 301 und dazwischen eine Riemenscheibenlauffläche 302 umfasst, und wobei die Breite eines Eingreifkörpers 500 (ohne Reibscheiben) durch folgende Beziehung definiert wird:

$$b_{eb} = n \cdot b + (n+1-2) \cdot b_{ip} + 2 \cdot b_{op}$$

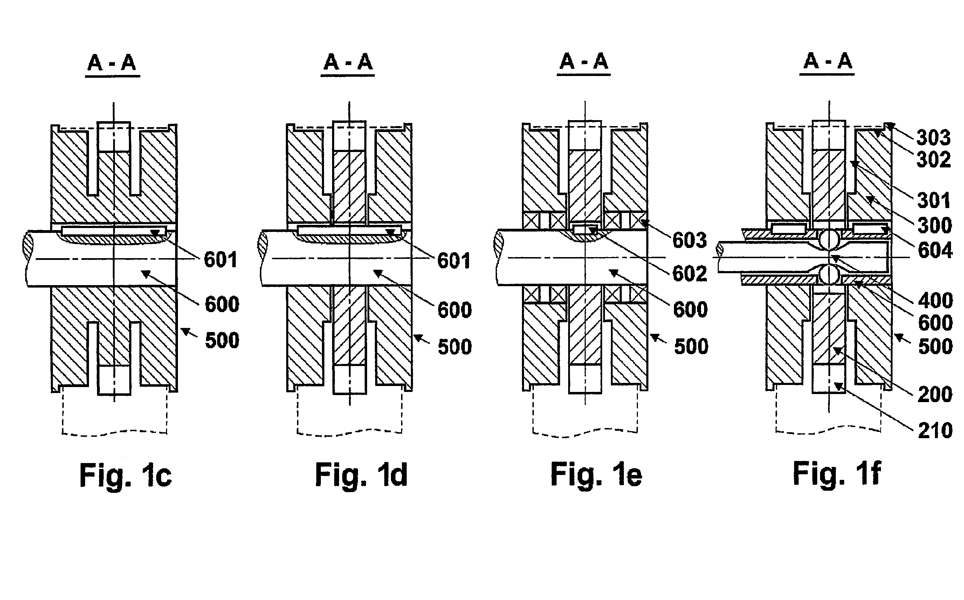

Bei einem Eingreifkörper 500 können die n Rotationselemente 200 mit einem angrenzenden Paar von Riemenscheiben 300 stoffschlüssig (siehe Figuren 1c, 2c und 3c), formschlüssig (siehe Figuren 1d, 2d und 3d), kraftschlüssig (siehe Figuren 1e, 2e und 3e), steuerbar formschlüssig (siehe Figuren 1f, 2f und 3f), und steuerbar kraftschlüssig (nicht abgebildet) verbunden sein, wobei auf einer Welle 600 nur ein Verbindungstyp angewendet wird, und wobei die verschiedenen Verbindungstypen von Eingreifkörpern 500 in unterschiedlicher Kombination und Anzahl, treibend oder angetrieben, im Uhrzeigersinn rotierend oder entgegen dem Uhrzeigersinn rotierend, als Teil oder als kein Teil einer Spannvorrichtung, als Spannrolle mit oder ohne Verzahnung 210 bei dem zumindest einem Rotationselement 200, mit kleinen oder großen Durchmessern, auf beiden flachen Seiten eines offenen oder geschlossenen Flachriemens 100 im Eingriff mit einem Flachriemen 100, bei einem Synchronflachriementrieb verwendet werden können.

ALLGEMINE BESCHREIBUNG VON AUSFÜHRUNGSFORMEN - BESCHREIBUNG DER BAUTEILE - SPANNROLLE

Eine zylindrische Spannrolle ist als Teil einer Spannvorrichtung des Synchronflachriementriebs entsprechend einem zylindrischen Eingreifkörper 500 ausgebildet, wobei die n Rotationselemente 200 mit oder ohne Verzahnung 210 ausgebildet sind.

ALLGEIME BESCHREIBUNG VON AUSFÜHRUNGSFORMEN - BESCHREIBUNG DER BAUTEILE - ROTATIONSELEMENTE

Ein Rotationselement 200 kann beispielsweise als genormtes stirnverzahntes Zahnrad, beispielsweise mit einer Evolventenverzahnung zum Kämmen mit dem Bezugsprofil gemäß DIN 867 bzw. ISO 53 oder als ein genormtes Kettenzahnrad mit einer Verzahnung nach DIN 8196 zum Eingreifen in Rollenketten gemäß DIN 8187 und DIN 8188, ausgebildet sein.

ALLGEMINE BESCHREIBUNG VON AUSFÜHRUNGSFORMEN - BESCHREIBUNG DER BAUTEILE - RIEMENSCHEIBE

Der Durchmesser eines Riemenscheibenlaufflächenzylinders von einer Riemenscheibe 300 kann beispielsweise größer oder gleich einem Zahnradteilkreisdurchmesser und kleiner als ein Zahnradkopfkreisdurchmesser eines als Zahnrad ausgebildeten Rotationselements 200 ausgebildet sein, wobei die Riemenscheibe 300 eine vorherbestimmte Breite aufweist.

Weiter kann eine Riemenscheibe 300 angrenzend an ein Rotationselement 200 eine koaxial zu einer Riemenscheibenachse angeordnete ringförmige Aussparung 301 besitzen, welche axial zu einer Riemenscheibenachse an einer Riemenscheibenseitenwand beginnt und in einem vorherbestimmten Abstand zu dieser Seitenwand endet, und radial zu der Riemenscheibenachse an einer vorherbestimmten radialen Höhe beginnt und an der Mantelfläche einer Riemenscheibe 300 endet.

Angrenzend an diese ringförmige Aussparung 301 umfasst eine Riemenscheibe 300 eine zylindrische Riemenscheibenlauffläche 302, mit einer axialen Breite beispielsweise kleiner oder näherungsweise gleich der Breite eines Flachriemenzugstrangs 103.

Und weiter kann eine an einer Seite eines Eingreifkörpers 500 positionierte Riemenscheibe 300 auf ihrer Mantelfläche angrenzend an eine Längsseite eines Flachriemens 100 entlang des Riemenscheibenumfangs ein seitliches Führungselement 303 für den Flachriemen 100 umfassen.

ALLGEMEINE BESCHREIBUNG VON AUSFÜHRUNGSFORMEN - BESCHREIBUNG DER BAUTEILE - FLACHRIEMEN

Ein Flachriemen 100 umfasst ein Paar von flachen Seiten, ein Paar von Längsseiten, n Reihenanordnungen mit Durchbrüchen 101, und n+1 Flachriemenzugstränge 103. Er ist in einer endlosen oder offenen Bauform mit zumindest einem einzelnen Band 110 in einer Schichtanordnung aus zumindest einer Schicht ausgebildet, wobei die einzelnen Bänder 110 in einer Schicht mit ihren Enden überlappend, aneinanderstoßend oder im Abstand voneinander angeordnet sind, und wobei ein einzelnes Band 110 auch mehrere Schichten bildet, wobei es aufgewickelt oder gefaltet ist, und wobei auch ein einzelnes Band 110 als endloses Band 110 Teil einer Schichtanordnung ist.

Auf diese Weise kann ein Flachriemen 100 aus mehreren sehr dünnen Bändern 110 ausgebildet werden, wobei beispielsweise bei dünnen Metallbändern 110 durch ein Kaltwalzen eine besonders ausgeprägte Werkstoffverfestigung erzielt werden kann. Somit kann im Ergebnis ein Flachriemen 100 bei Bestehen aus mehreren sehr dünnen Metallbändern 110 eine deutlich höhere Zugfestigkeit aufweisen als ein Flachriemen 100 aus einem einzigen Metallband 110 mit einer Dicke gleich der Summe der Dicken der einzelnen Metallbänder 110.

Darüber hinaus kann ein aus mehreren sehr dünnen Metallbändern 110 ausgebildeter Flachriemen 100 mit einer deutlich geringeren Biegesteifigkeit E·I ausgebildet werden als ein Flachriemen 100 aus einem einzigen Metallband 110 mit einer Dicke gleich der Summe der Dicken der einzelnen Metallbänder 110. Denn bei einem rechteckigen Bandquerschnitt mit einer Breite gleich der Breite $b_0$ eines Flachriemens 100 und einer Dicke $t = t_0/n$ (n = 2, 3, 4, ...), wobei $t_0$ die Dicke des Flachriemens 100 ist und n die Anzahl der Bänder eines Flachriemens 100 ist, erhält man für ein Flächenträgheitsmoment eines Bandes 110 (bei n Bändern 110 von einem Flachriemen 100)

$$I_n = b_0 \cdot (t_0/n)^3/12 \; ;$$

im Vergleich dazu beträgt das Flächenträgheitsmoment eines Flachriemens 100 aus einem einzigen Metallband 110 mit einer Dicke $t_0$ gleich der Summe der Dicken der einzelnen Metallbänder 110

$$I_0 = b_0 \cdot t_0^3/12 \; ;$$

weiter beträgt das gesamte Flächenträgheitsmoment eines Flachriemens 100 aus n Bändern

$$I = n \cdot I_n = n \cdot b_0 \cdot (t_0/n)^3/12 = I_0/n^2 \; ;$$

das heißt, wird ein Flachriemen 100 bei identischer Gesamtdicke $t_0$ statt aus einem einzigen Band 110 aus beispielsweise 10 Bändern 110 (n = 10) hergestellt, dann besitzt dieser Flachriemen 100 eine um den Faktor 100 geringere Biegesteifigkeit bei sonst gleichem Elastizitätsmodul E.

Insgesamt erhält man also durch das Ausbilden des Flachriemens 100 statt aus einem einzigen Band 110 aus mehreren einzelnen Bändern 110 in einer Schichtanordnung bei identischer Dicke des Flachriemens 100 eine höhere Zugfestigkeit und eine deutlich geringere Biegesteifigkeit, wodurch bei einem Umlauf eine sehr geringe Verformungsenergie aufgewendet werden muss.

Weiter stützt sich ein Flachriemen 100 entlang einem Umschlingungsumfang zwischen einem Flachriemen 100 und einem zylindrischen Eingreifkörper 500 radial zur Achse eines Riemenscheibenlaufflächenzylinders im Wesentlichen nur auf einer Riemenscheibenlauffläche 302 ab, und stützt sich der Flachriemen entlang einem Umschlingungsumfang zwischen einem Flachriemen 100 und einem zylindrischen Eingreifkörper 500 auf einem Rotationselement 200 im Wesentlichen nur tangential zu einem Riemenscheibenlaufflächenzylinder ab.

Und weiter ist die Erzeugende der Reihenanordnung mit Durchbrüchen 101 auf dem Flachriemen 100 das Abwälzen eines Riemenscheibenlaufflächenzylinders von einem zylindrischen Eingreifkörper 500 mit den darüber hinausragenden Vorsprüngen 210 von einem Rotationselement 200 auf einer flachen Seite eines eben angeordneten Flachriemens 100 parallel zu seiner Längsrichtung.

Weiter wird der senkrechte Abstand zwischen zwei in Längsrichtung des Flachriemens 100 aufeinander folgenden Seiten eines Verbindungselement 102 bei einem Eingriff eines Flachriemens 100 mit seiner Reihenanordnung mit Durchbrüchen 101 in ein Rotationselement 200, welches als ein genormtes stirnverzahntes Zahnrad mit einer Evolventenverzahnung zum Kämmen mit dem Bezugsprofil gemäß DIN 867 bzw. ISO 53 ausgebildet ist, für einen radialen Eingriffhöhenbereich, bei welchem die radiale Höhe durch die radiale Koordinate y bestimmt ist, deren Ursprung auf dem Teilkreisdurchmesser $d_0$ des Zahnrads positioniert ist, und welche innerhalb folgender Grenzen definiert ist:

$$0 \leq y < h_{ap}$$

durch folgende Beziehung bestimmt:

$$u(y) = (m \cdot \pi)/2 + (2 \cdot \pi \cdot y)/z + 2 \cdot y \cdot \tan \alpha_p - \Delta_1$$

und wird der senkrechte Abstand zwischen zwei in Längsrichtung des Flachriemens 100 aufeinander folgenden Seiten eines Durchbruchs 101 für denselben Höhenbereich
durch folgende Beziehung bestimmt:

$$v(y) = (m \cdot \pi)/2 - 2 \cdot y \cdot \tan \alpha_p + \Delta_1$$

und wird der senkrechte Abstand zwischen zwei senkrecht zur Längsrichtung des Flachriemens 100 aufeinanderfolgenden Seiten eines Durchbruchs 101 für denselben Höhenbereich durch folgende Beziehung bestimmt:

$$w = b + \Delta_2$$

Und weiter wird der senkrechte Abstand zwischen zwei in Längsrichtung des Flachriemens 100 aufeinander folgenden Seiten eines Verbindungselement 102 bei einem Eingriff eines Flachriemens 100 mit seiner Reihenanordnung mit Durchbrüchen 101 in ein Rotationselement 200, welches als ein genormtes Kettenzahnrad mit einer Verzahnung nach DIN 8196 zum Eingreifen in Rollenketten gemäß DIN 8187 und DIN 8188 ausgebildet ist, für einen radialen Eingriffhöhenbereich, bei welchem die radiale Höhe durch die radiale Koordinate y* bestimmt ist, deren Ursprung auf einem Kreis von dem Zahnrad liegt, dessen Durchmesser d* folgender Beziehung genügt:

$$d* = P \cdot \cot \alpha$$

und welche innerhalb folgender Grenzen definiert ist:

$$0 \leq y* < k$$

durch folgende Beziehung bestimmt:

$$u(y*) = P \cdot (\alpha \cdot \cot \alpha - 1) + d_1 + 2 \cdot \alpha \cdot y* + 2 \cdot y* \cdot \tan \gamma - \Delta_3$$

und wird der senkrechte Abstand zwischen zwei in Längsrichtung des Flachriemens 100 aufeinander folgenden Seiten eines Durchbruchs 101 für denselben Höhenbereich
durch folgende Beziehung bestimmt:

$$v(y*) = P - d_1 - 2 \cdot y* \cdot \tan \gamma + \Delta_3$$

wobei $\gamma$ beispielsweise folgender Beziehung genügt:

$$16° \leq \gamma \leq 22,5° \text{ oder } 13° \leq \gamma \leq 17°$$

und wird der senkrechte Abstand zwischen zwei senkrecht zur Längsrichtung des Flachriemens 100 aufeinanderfolgenden Seiten eines Durchbruchs 101 für denselben Höhenbereich
durch folgende Beziehung bestimmt:

$$w = B + \Delta_4$$

ALLGEMEINE BESCHREIBUNG VON AUSFÜHRUNGSFORMEN - BESCHREIBUNG DER BAUTEILE - WELLE

Eine Welle 600 kann beispielsweise eine lange Passfeder 601, oder n kurze Passfedern 602 und n+1 Wälzlager 603, oder n steuerbare Ziehkeilgetriebe 400 und n+1 Passfedern 604 von mittlerer Länge umfassen.

ALLGEMEINE BESCHREIBUNG VON AUSFÜHRUNGSFORMEN - BESCHREIBUNG DER BAUTEILE - STIRNVERZAHNTE ZAHNRÄDER IM DIREKTEN EINGRIFF MIT EINEM EINGREIFKÖRPER

Darüber hinaus kann in besonderen Anwendungsfällen der Synchronflachriementrieb zusätzlich zu den oben genannten Bauteilen zumindest ein einzelnes stirnverzahntes Zahnrad 200 umfassen.

ALLGEMEINE BESCHREIBUNG VON AUSFÜHRUNGSFORMEN - BESCHREIBUNG DER BAUTEILE - ZUSATZFORMELEMENTE

Die an zumindest einem Verbindungselement 102 angebrachten beispielsweise hülsenförmigen Zusatzformelemente 121, welche ein Verbindungselement umschließen, können einen Querschnitt beispielsweise in Form eines Kreises, einer "0" oder einer "8" aufweisen.

ALLGEMEINE BESCHREIBUNG VON AUSFÜHRUNGSFORMEN - KONSTRUKTION DER BAUTEILE

Nachfolgend wird die Konstruktion der einzelnen Bauteile beschrieben.

ALLGEMEINE BESCHREIBUNG VON AUSFÜHRUNGSFORMEN - KONSTRUKTION DER BAUTEILE - PARAMETER

Die wesentlichen bestimmenden Parameter für die Werkstoffauswahl für die einzelnen Bauteile und für die Dimensionierung der einzelnen Bauteile sind: das Übersetzungsverhältnis zwischen den einzelnen Eingreifkörpern 500, die Größe des zu übertragenden Drehmoments, die Umlaufgeschwindigkeit des Flachriemens 100, die Umgebungstemperatur, die Größe des verfügbaren Bauraums, der Haftreibungskoeffizient zwischen Flachriemen 100 und Riemenscheibenlauffläche 302, und Art und Umfang der Verschmutzungsimmission von der Umgebung.

ALLGEMEINE BESCHREIBUNG VON AUSFÜHRUNGSFORMEN - KONSTRUKTION DER BAUTEILE - WERKSTOFFE

Zunächst werden auf Basis der Umgebungsbedingungen die Werkstoffe für die einzelnen Bauteile gewählt, wobei Metallwerkstoffe für einen Einsatz bei einer hohen Umgebungstemperatur für die einzelnen Bauteile besonders geeignet sind. Alternativ dazu kann bei einer niedrigen Umgebungstemperatur beispielsweise ein Kunststoff oder ein Mischwerkstoff für die Bauteile verwendet werden.

Die Welle 600 kann aus einem Werkzeugstahl, einem rostfreien Stahl, oder einem sonstigen geeigneten Werkstoff bestehen.

Das Rotationselement 200 kann aus einem Werkzeugstahl, einem rostfreien Stahl, aus einem Gusseisenwerkstoff, oder einem sonstigen geeigneten Werkstoff bestehen.

Die Riemenscheibe 300 kann aus einem Werkzeugstahl, einem rostfreien Stahl, aus einem Gusseisenwerkstoff, oder einem sonstigen geeigneten Werkstoff bestehen.

Die Zugschicht des Flachriemens 100 kann aus einzelnen Bändern 110 mit jeweils einem unterschiedlichen Werkstoff bestehen. Vorteilhafterweise sind die Bänder 110 bei Bestehen aus Metall zur Erhöhung der Zugfestigkeit kaltgewalzt. Die Bänder 110 können aus den Metallen, X46Cr13, X5CrNi18-10, X4CrNi18-12, X10CrNi18-8, X5CrNiMo17-12-2, X2CrNiMo17-12-2, X2CrNiMo18-14-3, X2CrNiMo18-15-3, X6CrNiMoTi17-12-2, AlCuMg2, AlMg3, AlMgSi1, AlZnMgCu, C100, C125W, C70, Ck101, Ck60, Ck67, Ck75, Ck80, CuBe2Pb, CuFe2.5P, CuMg0.3, CuMg0.6, CuNi1.3Si0.25, CuNi12Zn24, CuNi12Zn25Pb1, CuNi15Sn8, CuNi18Zn19Pb1, CuNi18Zn20, CuNi2.0Si0.5Zn1Sn0.5, CuNi2.6Si0.6Zn0.8Sn0.4, CuNi2Be, CuNi30Mn1Fe, CuNi44Mn1, CuNi9Sn2, CuNiBe0.5, CuSn0.2, CuSn0.2Mg0.1Ag, CuSn2Zn10, CuSn3Zn9, CuSn4, CuSn5, CuSn8, CuZn23A13Co, CuZn28, CuZn36, CuZn37, CuZn37Pb2, CuZn38Pb2, DC01, DC02, Durinox, Durnico, FeCr20A15, FeNi28Co21, FeNi29Co18, FeNi36, HyMu 80, HyMu 800, Nb, Ni, NiBe2, NiCr15Fe, NiCr20, NiCu30Fe, NiMo16Cr15W, NiMo28, Phynox, RFe80, Ta, Ti, Zr, CuBe2, CuCo0.5Be, CuCo2Be, CuNi1.2Be, CuSn6, CuFe2P, CuNi2Si, CuNi3Si, CuNi3Si1Mg, CuCrAgFeTiSi, aus den thermoplastischen Kunststoffen Polyamid, Polyester, Polypropylen, oder einem sonstigen geeigneten Werkstoff bestehen.

Die Reibschicht kann aus Chloropren-Kautschuk, Nitril-Kautschuk, Fluor-Kautschuk, einem thermoplastischen Polyurethan, oder einem sonstigen geeigneten Werkstoff bestehen. Sie kann an den Zugsträngen 103 eines Flachriemens oder an den Riemenscheibenlaufflächen 302 angebracht werden. Alternativ dazu können an der jeweiligen Oberfläche harte Werkstoffpartikel, wie beispielsweise Karbidpartikel, Nitridpartikel, Boridpartikel oder Diamantpartikel verankert werden. In einer nassen Umgebung sind die Reibschichten an den Riemenscheibenlaufflächen 302 beispielsweise kraftfahrzeugreifenprofilartig (mit Rillen, Löchern, Fischgrätenmuster, etc.) zum Ableiten der Flüssigkeit ausgebildet.

ALLGEMEINE BESCHREIBUNG VON AUSFÜHRUNGSFORMEN - KONSTRUKTION DER BAUTEILE - ROTATIONSELEMENTTYP

Jetzt wird der Rotationselementtyp ausgewählt, welcher einheitlich bei einem Synchronflachriementrieb verwendet wird, wobei der Rotationselementtyp beispielsweise entweder ein genormtes stirnverzahntes Zahnrad mit einer Evolventenverzahnung zum Kämmen mit dem Bezugsprofil gemäß DIN 867 bzw. ISO 53 sein kann, oder ein genormtes Kettenzahnrad mit einer Verzahnung nach DIN 8196 zum Eingreifen in Rollenketten gemäß DIN 8187 und DIN 8188, und wobei der erste Typ im Wesentlichen durch den Modul m definiert ist, und der zweite Typ im Wesentlichen durch die Teilung P der Rollenkette;

ALLGEMEINE BESCHREIBUNG VON AUSFÜHRUNGSFORMEN - KONSTRUKTION DER BAUTEILE - RIEMENSCHEIBENLAUFFLÄCHENZYLINDER

Bevor die Durchmesser der Riemenscheibenlaufflächenzylinder der einzelnen Eingreifkörper 500 unter Berücksichtigung der vorhandenen Reihe von genormten stirnverzahnten Zahnrädern oder von genormten Kettenzahnrädern berechnet werden, muss zunächst der minimal zulässige Durchmesser des Riemenscheibenlaufflächenzylinders als Funktion von dem Elastizitätsmodul E des Werkstoffs des Flachriemens, von der zulässigen Spannung $\sigma_{zul}$ des Werkstoffs des Flachriemens und der Dicke $t_0$ des Flachriemens bestimmt werden, wobei die Reibschicht für diese Betrachtung wegen ihres geringen Elastizitätsmoduls nicht berücksichtigt wird. Nach dem Hookeschen Gesetz lässt sich für den minimal zulässigen Durchmesser von einem Riemenscheibenlaufflächenzylinder für einen umlaufenden Flachriemen 100 angeben:

$$d'_{min\ zul} = 2 \cdot E \cdot t_0 / \sigma_{zul}\ .$$

Bei einem Flachriemen 100 in Schichtanordnung erhält man bei einer Dicke t eines einzelnen Bandes 110

$$d'_{min\ zul} \approx 2 \cdot E \cdot t / \sigma_{zul}\ ,$$

und mit Verwendung der Beziehung $t = t_0/n$

$$d'_{min\ zul} \approx 2 \cdot E \cdot t_0 / (n \cdot \sigma_{zul}),$$

wobei man erkennt, dass bei einem Flachriemen 100 aus n Bändern 110 mit einer Gesamtdicke gleich der Gesamtdicke des Flachriemens 100 der minimal zulässige Durchmesser von einem Riemenscheibenlaufflächenzylinder 1/n von dem minimal zulässigen Durchmesser von einem Flachriemen 100 ohne Schichtanordnung mit der gleichen Gesamtdicke ist. Das heißt, für eine kompakte Bauweise mit relativ kleinen Durchmessern ist die Anwendung einer Schichtbauweise für den Flachriemen 100 notwendig.

Danach werden die Durchmesser der Riemenscheibenlaufflächenzylinder der einzelnen Eingreifkörper 500 unter Berücksichtigung der vorhandenen Reihe von genormten stirnverzahnten Zahnrädern oder von genormten Kettenzahnrädern berechnet, wobei für die Auswahl des Modul m bei einem stirnverzahnten Zahnrad oder der Teilung P bei einem Kettenzahnrad der vorhandene Bauraum, das zu übertragende Drehmoment und das gewünschte Übersetzungsverhältnis bestimmend sind, und wobei zunächst der kleinste Durchmesser d' eines Riemenscheibenlaufflächenzylinders von einem Eingreifkörper 500 in einem Synchronflachriementrieb bestimmt wird; und zwar bei der Verwendung eines stirnverzahnten Zahnrads als Rotationselement 200 beispielsweise entsprechend dem Teilkreisdurchmesser $d_0$ gemäß der Beziehung

$$d' = d_0 = m \cdot z\ ;$$

und bei der Verwendung eines Kettenzahnrads als Rotationselement 200 beispielsweise ebenfalls entsprechend dem Teilkreisdurchmesser, aber hier gemäß der Beziehung

$$d' = d = P/\sin \alpha = P/\sin (\pi/Z)\ ;$$

anschließend werden dann die größeren Durchmesser in einem Synchronflachriementrieb entsprechend dem gewünschten Übersetzungsverhältnis Ü gemäß der Beziehung

$$d'_{groß} = d'_{klein}/\ddot{U}$$

bestimmt, wobei

$$\ddot{U} = z_1/z_2 \text{ oder } \ddot{U} = Z_1/Z_2\ ;$$

ALLGEMEINE BESCHREIBUNG VON AUSFÜHRUNGSFORMEN - KONSTRUKTION DER BAUTEILE - REIHENANORDNUNG MIT DURCHBRÜCHEN BEI EINEM EINGRIFF IN EIN GENORMTES STIRNVERZAHNTES ZAHNRAD

In einem nächsten Schritt werden dann die Abmaße der Durchbrüche 101 und der Verbindungselemente 102 von einem Flachriemen 100 auf Basis der oben gewählten Geometrie der Rotationselemente 200 und dem berechneten Durchmesser von dem Riemenscheibenlaufflächenzylinder in Verbindung mit vorherbestimmten Spielmaßen bestimmt, wobei bei der Festlegung der Spielmaße eine möglicherweise beabsichtigte Umschließung der Verbindungselemente 102 mit beispielsweise hülsenartigen Zusatzformelementen 121 zu berücksichtigen ist;

bei der Auswahl von einem genormten stirnverzahnten Zahnrad mit einer Evolventenverzahnung zum Kämmen mit dem Bezugsprofil gemäß DIN 867 bzw. ISO 53 als Rotationselement 200 wird der senkrechte Abstand zwischen zwei in Längsrichtung des Flachriemens 100 aufeinander folgenden Seiten eines Verbindungselement 102 durch folgende Beziehung bestimmt:

$$u(y) = (m \cdot \pi)/2 + (2 \cdot \pi \cdot y)/z + 2 \cdot y \cdot \tan \alpha_p - \Delta_1 \, ,$$

wobei sich die Beziehung mit y = 0 (da beispielsweise d' = $d_0$) vereinfacht zu

$$u(y) = (m \cdot \pi)/2 - \Delta_1 \, ;$$

und
wird der senkrechte Abstand zwischen zwei in Längsrichtung des Flachriemens 100 aufeinander folgenden Seiten eines Durchbruchs 101 durch folgende Beziehung bestimmt:

$$v(y) = (m \cdot \pi)/2 - 2 \cdot y \cdot \tan \alpha_p + \Delta_1 \, ,$$

wobei sich die Beziehung mit y = 0 vereinfacht zu

$$v(y) = (m \cdot \pi)/2 + \Delta_1 \, ,$$

und wird der senkrechte Abstand zwischen zwei senkrecht zur Längsrichtung des Flachriemens 100 aufeinanderfolgenden Seiten eines Durchbruchs 101 durch folgende Beziehung bestimmt:

$$w = b + \Delta_2 \, ,$$

wobei die Norm für die Breite b eines stirnverzahnten Zahnrads keine Werte vorgibt; näherungsweise wird die Breite b beispielsweise so groß wie die Breite einer Riemenscheibenlauffläche ausgebildet.

ALLGEMEINE BESCHREIBUNG VON AUSFÜHRUNGSFORMEN - KONSTRUKTION DER BAUTEILE - REIHENANORDNUNG MIT DURCHBRÜCHEN BEI EINEM EINGRIFF IN EIN GENORMTES KETTENZAHNRAD

Bei der Auswahl von einem genormten Kettenzahnrad mit einer Verzahnung nach DIN 8196 zum Eingreifen in Rollenketten gemäß DIN 8187 und DIN 8188 als Rotationselement 200 wird der senkrechte Abstand zwischen zwei in Längsrichtung des Flachriemens 100 aufeinander folgenden Seiten eines Verbindungselement 102 durch folgende Beziehung bestimmt:

$$u(y^*) = P \cdot (\alpha \cdot \cot \alpha - 1) + d_1 + 2 \cdot \alpha \cdot y^* + 2 \cdot y^* \cdot \tan \gamma - \Delta_3 \, ,$$

wobei

$$y^* = d/2 - d^*/2 \text{ (da beispielsweise } d' = d) \text{ ,}$$

$$d = P/\sin \alpha \text{ ,}$$

$$d^* = P \cdot \cot \alpha \text{ ,}$$

$$\alpha = \pi/Z \text{ ,}$$

$$\gamma = 19° \text{ (beispielsweise) ;}$$

und
und wird der senkrechte Abstand zwischen zwei in Längsrichtung des Flachriemens 100 aufeinander folgenden Seiten eines Durchbruchs 101 durch folgende Beziehung bestimmt:

$$v(y^*) = P - d_1 - 2 \cdot y^* \cdot \tan \gamma + \Delta_3 \text{ ,}$$

wobei der Rollendurchmesser $d_1$ zu der entsprechenden Teilung P aus dem Tabellenwerk der Norm entnommen wird; und wird der senkrechte Abstand zwischen zwei senkrecht zur Längsrichtung des Flachriemens 100 aufeinanderfolgenden Seiten eines Durchbruchs 101 für denselben Höhenbereich
durch folgende Beziehung bestimmt:

$$w = B + \Delta_4 \text{ ,}$$

wobei für die Breite B eines Kettenzahnrads gemäß der Norm mehrere Werte möglich sind; näherungsweise wird die Breite B beispielsweise so groß wie die Breite einer Riemenscheibenlauffläche 302 ausgebildet.

ALLGEMEINE BESCHREIBUNG VON AUSFÜHRUNGSFORMEN - KONSTRUKTION DER BAUTEILE - NORMREIHEN

Mit den oben genannten Beziehungen kann man ein Tabellenwerk erstellen, aus dem dann einfach bei gegebener Geometrie der genormten stirnverzahnten Zahnräder beziehungsweise der genormten Kettenzahnräder die Geometrie der Reihenanordnung mit Durchbrüchen 101 auf dem Flachriemen 100 und die Geometrie der Riemenscheiben 300 bestimmt werden kann. Ein solches Tabellenwerk ist für eine kommerzielle standardisierte weltweite Anwendung der Erfindung notwendig.

Exemplarisch werden nachfolgend zwei Tabellen erstellt, in welchen die Werte für u, v und d' jeweils den Geometriewerten von genormten stirnverzahnten Zahnrädern gemäß DIN 867 (ISO 53) beziehungsweise von genormten Kettenzahnrädern nach DIN 8196 zum Eingreifen in Rollenketten gemäß DIN 8187 und DIN 8188 zugeordnet sind.

Somit erhält man bei genormten stirnverzahnten Zahnrädern gemäß DIN 867 (ISO 53) für u, v, und d' bei Vorgabe von m, z und $\Delta_1$ die Werte gemäß Tabelle 1.

Tabelle 1

| m [mm] | Z | $\Delta_1$ [mm] | u [mm] | v [mm] | d' [mm] |
|--------|-----|--------|--------|--------|---------|
| 5,00 | 10 | 1,00 | 6,85 | 8,85 | 50,00 |
| 5, 00 | 15 | 1,00 | 6,85 | 8,85 | 75,00 |
| 5,00 | 20 | 1,00 | 6,85 | 8,85 | 100,00 |
| 5,00 | 25 | 1,00 | 6,85 | 8,85 | 125,00 |
| 5,00 | 30 | 1,00 | 6,85 | 8,85 | 150,00 |

Und weiter erhält man bei genormten Kettenzahnrädern nach DIN 8196 zum Eingreifen in Rollenketten gemäß DIN 8187 und DIN 8188 für u, v, und d' bei Vorgabe von P, $d_1$, $\gamma$, Z, und $\Delta_3$ die Werte gemäß Tabelle 2.

Tabelle 2

| P [mm] | $d_1$ [mm] | $\gamma$[rad] | Z | $\Delta_3$ [mm] | u [mm] | v [mm] | d' [mm] |
|---|---|---|---|---|---|---|---|
| 15,88 | 10,16 | 0,33 | 10 | 1,00 | 10,29 | 5,85 | 51,40 |
| 15,88 | 10,16 | 0,33 | 15 | 1,00 | **10,24** | **5,90** | 77,10 |
| 15,88 | 10,16 | 0,33 | 20 | 1,00 | 10,29 | 5,85 | 102,80 |
| 15,88 | 10,16 | 0,33 | 25 | 1,00 | 10,38 | 5,76 | 128,50 |
| 15,88 | 10,16 | 0,33 | 30 | 1,00 | 10,49 | 5,65 | 154,20 |

Wie in der Tabelle 2 ersichtlich ist, sind die Werte für u und v bei den einzelnen Zähnezahlen Z verschieden. Das ergibt sich aus den oben genannten Beziehungen für u und v, wobei die Summe aus u und v jeweils 16,14 mm ergibt, also die Teilung auf dem Flachriemen für die unterschiedlichen Zähnezahlen gleich ist. Bei einer Fertigung kann natürlich nur ein Wert für u und v für einen Flachriemen 100 gewählt werden, welcher über mehrere Eingreifkörper 500 mit verschiedenen Durchmessern läuft. Deshalb wird in dieser Reihe u = 10,24 mm (der kleinste Wert der Reihe) gewählt, und für v = 5,90 mm (der größte Wert der Reihe). Darüber hinaus wurde der Wert für d' nur für Z = 10 aus der Beziehung d' = d = P/sin $\alpha$ = P/sin (n/Z) bestimmt. Für die höheren Werte von Z wurde d' aus der Beziehung d'$_{groß}$ = d'$_{klein}$/Ü bestimmt, wobei Ü = $Z_1/Z_2$ ist.

ALLGEMEINE BESCHREIBUNG VON AUSFÜHRUNGSFORMEN - KONSTRUKTION DER BAUTEILE - QUERSCHNITT DER ZUGSTRÄNGE

Daran anschließend wird entsprechend dem zu übertragenden Drehmoment der erforderliche Querschnitt der Zugstränge 103 bestimmt, wobei dieser Querschnitt abhängig von dem vorhandenen Bauraum entweder durch mehrere nebeneinander angeordnete Zugstränge 103 und damit auch Riemenscheiben 300 ausgebildet wird, beispielsweise drei Riemenscheiben 300 bei zwei Rotationselementen 200, oder der erforderliche Querschnitt bei einem kleinen Bauraum in axialer Richtung von einer Welle 600 von einem Eingreifkörper 500 nur durch die minimale Anzahl von zwei Zugsträngen 103 und damit auch zwei Riemenscheiben 300 bei einem Rotationselement 200 ausgebildet wird, in letzterem Fall muss dann die Dicke eines Zugstrangs 103 und damit eines Flachriemens 100 entsprechend größer gewählt werden, wobei vorteilhafterweise zur Reduzierung der Biegesteifigkeit die Flachriemendicke durch eine Schicht aus einzelnen Bändern 110 gebildet wird.

ALLGEMEINE BESCHREIBUNG VON AUSFÜHRUNGSFORMEN - KONSTRUKTION DER BAUTEILE - GEOMETRIE EINER RIEMENSCHEIBE

Auf der Grundlage der oben vorgenommenen Dimensionierung eines Flachriemenzugstrangs 103 kann jetzt die Breite einer Riemenscheibenlauffläche 302 bestimmt werden; sie sollte kleiner oder näherungsweise gleich der Breite eines Flachriemenzugstrangs 103 sein.
Sie sollte insbesondere dann kleiner als die Breite eines Flachriemenzugstrangs 103 sein, wenn an Verbindungselementen 102 eines Flachriemens 100 hülsenartige Zusatzformelemente 121 angebracht sind. Denn dann sollte ein Überstand eines Flachriemenzugstrangs 103 über die kreisförmige Kante, welche eine Riemenscheibenlauffläche 302 auf der einem Rotationselement 200 zugewandten Seite begrenzt, verhindern, dass ein Zusatzformelement 121 an der einem Rotationselement 200 zugewandten Seite einer Riemenscheibe 300 entlang gleitet.
Weiter ist an der einem Rotationselement 200 zugewandten Seite einer Riemenscheibe eine Aussparung 301 vorzusehen; diese Aussparung 301 dient zur Aufnahme eines an einem Verbindungselement 102 angebrachten hülsenartigen Zusatzformelements 121, welches auf beiden Seiten eines Rotationselements 200 herausragt, da ein Durchbruch 101 und damit auch ein Verbindungselement 102 um ein Spiel $\Delta_2$ oder $\Delta_4$ breiter ausgebildet ist als die Verzahnung des Rotationselements 200, um zu ermöglichen, dass ein Zahn 210 eines Rotationselements 200 mit einem seitlichen Spiel ($\Delta_2$/2 oder $\Delta_4$/2) auf beiden Seiten eines Rotationselements 200 in einen Durchbruch 101 eines Flachriemens 100 eingreifen kann, wodurch eine Beschädigung des Flachriemens 100 durch einen eingreifenden Zahn 210 eines Rotationselements 200 verhindert wird, wobei eine notwendige Bedingung für diesen störungsfreien Eingriff eines Zahnes 210 eines Rotationselements 200 in einen Durchbruch 101 mit einem seitlichen Spiel ($\Delta_2$/2 oder $\Delta_4$/2) eine näherungsweise spielfreie Führung des Flachriemens 100 durch die seitlichen Führungselemente 303 in axialer Richtung zur Achse des Eingreifkörpers 500 ist.

ALLGEMEINE BESCHREIBUNG VON AUSFÜHRUNGSFORMEN - KONSTRUKTION DER BAUTEILE - VERBINDUNG VON ROTATIONSELEMENT, RIEMENSCHEIBE UND WELLE

Die n Rotationselemente 200 und die n+1 Riemenscheiben 300 können direkt oder über die Welle 600 stoffschlüssig, formschlüssig, kraftschlüssig oder steuerbar formschlüssig oder kraftschlüssig verbunden werden.

Dabei wird ein stoffschluss geschaffen, indem die n Rotationselemente 200 mit den n+1 Riemenscheiben 300
einen einstückigen Eingreifkörper 500 ausbilden, welcher dann beispielsweise über eine Nut- und Passfeder-Verbindung
601 mit der Welle 600 formschlüssig verbunden wird, oder beispielsweise über ein Ziehkeilgetriebe 400 steuerbar
formschlüssig mit der Welle 600 verbunden wird.

Dabei wird ein Formschluss geschaffen, indem sowohl die n Rotationselemente 200 als auch die n+1 Riemenscheiben 300 beispielsweise über eine Nut- und Passfeder-Verbindung 601 mit einer Welle 600 verbunden werden.

Dabei wird ein Kraftschluss geschaffen, indem beispielsweise sowohl die n Rotationselemente 200 als auch
die n+1 Riemenscheiben 300 über einen Presssitz mit einer Welle 600 verbunden werden.

Dabei wird ein steuerbarer Formschluss geschaffen, indem die n+1 Riemenscheiben 300 beispielsweise über
eine Nut- und Passfeder-Verbindung 604 mit einer Welle 600 verbunden werden, und indem die n Rotationselemente
200 beispielsweise über ein Ziehkeilgetriebe 400 steuerbar formschlüssig mit der Welle 600 verbunden werden.

Dabei wird bei bestimmten Anwendungen ein steuerbarer Formschluss nur zwischen den n Rotationselementen
200 und einer Welle 600 geschaffen, indem die n+1 Riemenscheiben 300 beispielsweise auf Wälzlagern 603 drehbar
von einer Welle 600 gestützt werden, und indem die n Rotationselemente 200 beispielsweise über ein Ziehkeilgetriebe
400 steuerbar formschlüssig mit einer Welle 600 verbunden werden.

Dabei wird ein steuerbarer Kraftschluss (nicht abgebildet) geschaffen, indem beispielsweise axial verschiebbar
mit der Welle 600 verbundene n+1 Riemenscheiben 300 jeweils Reibschichten an den unmittelbar an ein Rotationselement 200 angrenzenden Seitenwänden aufweisen, wobei diese 2·n Reibschichten im Ruhezustand mittels Federkraft
auf angrenzende Seitenwände der n Rotationselemente 200 drücken, welche auf der Welle 600 drehbar gelagert sind.
Dadurch wird ein Kraftschluss zwischen den n+1 Riemenscheiben 300 und den n Rotationselementen 200 hergestellt,
wobei mittels einer Vorrichtung die Wirkung der Federkraft steuerbar aufgehoben werden kann, und damit auch der
erzielte Kraftschluss.

Dabei wird weiter ein steuerbarer Kraftschluss (nicht abgebildet) geschaffen, indem beispielsweise jeweils in
dem Raum zwischen einer axial verschiebbar mit der Welle 600 verbundenen Riemenscheibe 300 und einem angrenzenden Rotationselement 200 eine dünne kreisförmige Reibscheibe mit einem Reibbelag auf beiden Seiten koaxial zu
der Welle 600 angeordnet wird, wobei diese 2·n Reibscheiben im Ruhezustand mittels Federkraft auf angrenzende
Seitenwände der n Rotationselemente 200, welche auf der Welle drehbar gelagert sind, und der n+1 Riemenscheiben
300 drücken, und dadurch ein Kraftschluss zwischen den n+1 Riemenscheiben 300 und den n Rotationselementen 200
über die 2·n Reibscheiben hergestellt wird, und wobei mittels einer Vorrichtung die Wirkung der Federkraft steuerbar
aufgehoben werden kann, und damit auch der erzielte Kraftschluss.

Dabei wird weiter ein steuerbarer Kraftschluss (nicht abgebildet) geschaffen, indem beispielsweise jeweils in
dem Raum zwischen einer axial verschiebbar mit der Welle 600 verbundenen Riemenscheibe 300 und einem angrenzenden Rotationselement 200 eine dünne kreisförmige Reibscheibe mit einem Reibbelag auf beiden Seiten koaxial zu
der Welle 600 angeordnet wird, wobei diese 2·n Reibscheiben durch die Wirkung von zumindest einem in einem Rotationselement 200 und/oder in einer Riemenscheibe 300 angeordneten Elektromagneten auf angrenzende Seitenwände
der n Rotationselemente 200, welche auf der Welle drehbar gelagert sind, und der n+1 Riemenscheiben 300 steuerbar
drücken, und dadurch ein steuerbarer Kraftschluss zwischen den n+1 Riemenscheiben 300 und den n Rotationselementen 200 über die 2·n Reibscheiben hergestellt wird.

Das Herstellen des steuerbaren Formschlusses zwischen einer Welle und einem Rotationselement, oder des
steuerbaren Kraftschlusses zwischen einem Rotationselement und einer Riemenscheibe kann durch mechanische,
hydraulische, pneumatische, oder elektromagnetische Betätigung der Kupplungselemente erfolgen.

ALLGEMEINE BESCHREIBUNG VON AUSFÜHRUNGSFORMEN - KONSTRUKTION DER BAUTEILE - AUSBILDUNG
DES FLACHRIEMENS

Weiter wird ein endloser Flachriemen 100 ausgebildet, wobei die Betriebstemperatur, der Bauraum und das
zu übertragende Drehmoment die Ausführungsform des endlosen Flachriemens 100 bestimmen, und wobei die hier
genannten Konstruktionsprinzipien auch analog bei einem Bau eines offenen Flachriemens 100 angewendet werden
können.

Wobei der Flachriemen 100 beispielsweise für einen beidseitigen Eingriff eines Eingreifkörpers 500 konstruiert
wird, und deshalb normalerweise eine Zugschicht, zwei jeweils auf den gegenüberliegenden Seiten einer Zugschicht angeordnete Reibschichten, und beispielsweise bei einer großen Last Zusatzformelemente 121 umfasst.

Und wobei eine Zugschicht abhängig von Temperatur und Last zumindest aus einem einzigen Band 110 aus beispielsweise Kunststoff oder aus einer kaltgewalzten Metalllegierung besteht.

Und wobei zum Ausbilden einer Zugschicht bei einem endlosen Flachriemen 100 zumindest ein endloses Band 110 dient, welches eine Schicht ausbildet, und/oder zumindest ein offenes spiralförmig aufgewickeltes Band 110, welches auch mehrere Schichten ausbilden kann, wobei bei Bestehen der Zugschicht aus beiden Typen, diese Typen in jeder möglichen Kombination übereinander angeordnet werden können, beispielsweise zunächst ein endloses Band 110, darüber ein offenes spiralförmig aufgewickeltes Band 110, und darüber ein endloses Band 110, oder zunächst zwei endlose Bänder 110, darüber ein offenes spiralförmig aufgewickeltes Band 110, und darüber zwei endlose Bänder 110, oder zunächst ein offenes spiralförmig aufgewickeltes Band 110, darüber zwei endlose Bänder 110, und darüber ein offenes spiralförmig aufgewickeltes Band 110, etc..

Und wobei zum Ausbilden einer Zugschicht bei einem endlosen Flachriemen 100 zumindest ein einziges endloses Band 110 dient, welches eine Schicht ausbildet, und/oder mehrere sich überlappende offene Bänder 110, welche auch mehrere Schichten ausbilden können, wobei die Länge der offenen Bänder 110 deutlich kürzer als die Länge des endlosen Flachriemens 100 sein kann.

Und wobei beispielsweise bei der Ausbildung einer endlosen Zugschicht aus einem aufgewickelten Band 110 nur das außen liegende Ende mit dem unmittelbar darunter angrenzenden Bandabschnitt fest verbunden sein kann, und die anderen sich im Inneren befindenden Wicklungen schwimmend gelagert sein können, das heißt, mit einer geringen Bewegungsfreiheit in Umfangsrichtung von der endlosen Zugschicht.

Und wobei beispielsweise bei der Ausbildung einer endlosen Zugschicht aus einem einzigen endlosen Band 110 und mehreren offenen Bändern 110 die offenen Bänder 110 geringfügig kürzer als das endlose Band 110 sein können und im Inneren des endlosen Bandes 110 angeordnet sein können, und das endlose Band 110 mit den offenen Bändern 110 nur an einer Stelle fest miteinander verbunden sein kann, und die offenen Bänder 110 ansonsten schwimmend gelagert sein können, das heißt, mit einer geringen Bewegungsfreiheit in Umfangsrichtung von der endlosen Zugschicht. Und wobei beispielsweise die Anordnung bei vier Schichten wie folgt beschaffen sein kann: ein endloses Band 110 außen (vierte Schicht), drei offene Bänder innen (erste bis dritte Schicht) und geringfügig kürzer als das endlose Band 110, formschlüssige Verbindung der vier Schichten (Nietverbindung) oder stoffschlüssige Verbindung der vier Schichten (linienartige Schweißverbindung senkrecht zur Längsachse des Flachriemens) an der 07:00 Uhr-Position der kreisförmig ausgerichteten Zugschicht auf einem Verbindungselement 102, die Enden des innersten offenen Bandes 110 (erste Schicht) an der 01:00 Uhr Position, die Enden des an das innerste Band 110 angrenzenden Bandes 110 (zweite Schicht) in 11:00 Uhr-Position, und die Enden des an das endlose äußere Band 110 angrenzenden Bandes 110 (dritte Schicht) in 03:00 Uhr-Position.

Zum Ausbilden einer endlosen Zugschicht aus einer Schichtanordnung mit einzelnen Bändern 110 gibt es zwei Möglichkeiten, die erste besteht darin, zuerst die Schichtanordnung auszubilden, und dann die Reihenanordnung mit Durchbrüchen 101 einzubringen. Bei der zweiten Möglichkeit wird zunächst die Reihenanordnung mit Durchbrüchen 101 in die einzelnen Bänder 110 eingebracht, und wird dann aus diesen einzelnen Bändern 110 eine endlose Zugschicht gebildet.

Insbesondere bei der zweiten Möglichkeit ist die unterschiedliche Länge der Bänder 110 bei kreisförmiger Anordnung der Zugschicht in den einzelnen Schichten zu berücksichtigen. Und zwar ergibt sich als Differenz zwischen dem Innenumfang eines Bandes 110 in der n-ten Schicht (n = 1, 2, 3, ...) und dem Innenumfang eines Bandes 110 in der ersten Schicht (n = 1) bei kreisförmiger Anordnung der Schichtanordnung

$$\delta_n = 2 \cdot \pi \cdot t \cdot (n - 1) \, ,$$

wobei t die Dicke eines Bandes 110 ist.

Bei einem aufgewickelten Band 110 zum Ausbilden einer kreisförmigen Schichtanordnung addieren sich diese einzelnen Längendifferenzen, so dass man hier als Gesamtlängendifferenz

$$\delta_{gesamt} = n \cdot \pi \cdot t \cdot (n - 1)$$

erhält. Das heißt, ein aufgewickeltes Band 110 mit n vollständigen Schichten ist um den Betrag $\delta_{gesamt}$ länger als das n-te Vielfache des Umfangs der ersten Schicht. Daraus folgt bei einer Reihenanordnung mit einer Teilung, welche für die erste Schicht genau passend ist (das heißt, die Länge des Innenumfangs des Bandes 110 in der ersten Schicht ist gleich einem ganzzahligen Vielfachen der Teilung des Bandes 110), dass je weiter sich das aufgewickelte Band 110 in darüber liegende Schichten erstreckt, je größer ist die Verschiebung der Durchbrüche 101, sie überlappen dann nicht mehr genau. Beispielsweise erhält man bei vier Schichten (n = 4) und einer Dicke des Bandes 110 in Höhe von 0,1 mm eine Gesamtverschiebung $\delta_{gesamt}$ in Höhe von 3,77 mm.

Die oben beschriebene Verschiebung bei dieser Fertigungsweise ist natürlich bei der Festlegung der Spielwerte für die Durchbrüche 101 zu berücksichtigen. Näherungsweise sollte deshalb das vorherbestimmte Spiel in Längsrichtung des Flachriemens 100 bei einem Durchbruch 101 ($\Delta_1$ oder $\Delta_3$) doppelt so groß sein wie $\delta_{gesamt}$.

Diese Verschiebung kann reduziert werden, wenn die bereits vorgestanzten Bänder 110 nicht, oder nicht so oft aufgewickelt werden.

Eine mögliche Anordnung könnte sein: ein endloses Band 110 innen (erste Schicht), drei offene Bänder 110 außen (zweite bis vierte Schicht) und gleich lang wie das endlose innere Band 110, formschlüssige Verbindung der vier Schichten (Nietverbindung) oder stoffschlüssige Verbindung der vier Schichten (linienartige Schweißverbindung senkrecht zur Längsachse des Flachriemens) an der 07:00 Uhr-Position der kreisförmig ausgerichteten Zugschicht auf einem Verbindungselement 102, wobei an dieser Verbindungsstelle die Verbindungselemente 102 der Bänder 110 der einzelnen Schichten genau übereinander positioniert sind, also keine Verschiebung aufweisen, und weiter die Enden des Bandes 110 in der zweiten Schicht an der 01:00 Uhr Position, die Enden des Bandes 110 in der dritten Schicht in 11:00 Uhr-Position, und die Enden des äußeren Bandes 110 in der vierten Schicht in 03:00 Uhr-Position. Bei dieser Anordnung beträgt mit t = 0,1 mm die maximale Verschiebung in der zweiten Schicht $\Delta_2/2$ (= 0,31 mm), die maximale Verschiebung in der dritten Schicht $8 \cdot \Delta_3/12$ (= 0,84 mm), und die maximale Verschiebung in der vierten Schicht $8 \cdot \Delta_4/12$ (= 1,26 mm).

Bei der ersten Möglichkeit zum Ausbilden einer endlosen Zugschicht, welche darin besteht, zuerst die Schichtanordnung auszubilden, und dann die Reihenanordnung mit Durchbrüchen 101 einzubringen, konnte bisher überraschenderweise dieses Verschiebungsproblem nicht festgestellt werden.

ALLGEMEINE BESCHREIBUNG VON AUSFÜHRUNGSFORMEN - KONSTRUKTION DER BAUTEILE - AUSBILDUNG VON ZUSATFORMELEMENTEN

Weiter können Zusatzformelemente 121, welche zumindest ein Verbindungselement 102 von diesem endlosen Flachriemen 100 umschließen, beispielsweise hülsenförmig ausgebildet sein, wobei sie mit oder ohne Längsschlitz ausgebildet sein können, und wobei sie aus Metall, Kunststoff, einem Mischwerkstoff oder einem anderen Werkstoff gefertigt sein können, und beispielsweise auch in Form einer Spiralfeder ausgebildet sein können, und wobei die Länge der Hülse beispielsweise geringfügig kleiner ist als die Breite eines Durchbruchs 101, und wobei der Querschnitt des Zusatzformelements 121 beispielsweise zwei senkrecht zueinander angeordnete Symmetrieachsen aufweisen kann, und der Querschnitt beispielsweise die Form eines Kreises, einer "0" oder einer "8" aufweisen kann, wobei jeweils der untere und obere Bogen der "0" und der "8" kreisbogenförmig sein können, jeweils mit einem Radius näherungsweise gleich der Hälfte von dem senkrechten Abstand zwischen zwei in Längsrichtung des Flachriemens 100 aufeinanderfolgenden Seiten eines Verbindungselements 102, wobei die Längsachsen der "0" und der "8" in einem gestreckten Bereich des Flachriemens 100 parallel zu einer flachen Seite des Flachriemens 100 ausgerichtet sind, und entlang einem Umschlingungsumfang zwischen einem Flachriemen 100 und einem zylindrischen Eingreifkörper 500 im Wesentlichen tangential zu dem Riemenscheibenlaufflächenzylinder ausgerichtet sind, wobei das hülsenförmige Zusatzformelement 121 bei einem kreisförmigen Querschnitt einen Längsschlitz über seine gesamte Länge zum Aufnehmen des Verbindungselements 102 aufweist, wobei der Schlitz parallel zur Längsachse des hülsenförmigen Zusatzformelements 121 ausgerichtet ist, und wobei die Normalen des sich gegenüberliegenden Schlitzflächenpaars parallel zueinander ausgerichtet sind, und wobei die Normalen des sich gegenüberliegenden Schlitzflächenpaars zu einer Ebene, welche sich zwischen einer inneren Schlitzkante und der Längssymmetrieachse des hülsenförmigen Zusatzformelements 121 aufspannt, einen Winkel von näherungsweise 45° ausbilden, und wobei das hülsenförmige Zusatzformelement 121 bei einem Querschnitt in Form einer "0" und einer "8" einen Längsschlitz über seine gesamte Länge aufweist, wobei der Schlitz bei der Querschnittsform einer "8" entlang der Längssymmetrieachse des hülsenförmigen Zusatzformelements 121 verläuft, und wobei der Schlitz bei der Querschnittsform einer "0" auf einer abgeflachten Seite parallel zu der Längssymmetrieachse des hülsenförmigen Zusatzformelements 121 verläuft, wobei die Normalen des sich gegenüberliegenden Schlitzflächenpaars parallel zueinander ausgerichtet sind, und wobei die Normalen des sich gegenüberliegenden Schlitzflächenpaars parallel zu einer tangentialen Ebene von einer abgeflachten Seite ausgerichtet sind.

Und wobei Zusatzformelemente 121, welche zumindest ein Verbindungselement 102 von diesem endlosen Flachriemen 100 umschließen, auch plattenförmig sein können, und beispielsweise Bestandteile eines Bandes 110 sein können, beispielsweise, indem beim Stanzen der Durchbrüche 101 eines Bandes 110 bei zumindest einem Durchbruch 101 das auszustanzende Teil, beispielsweise symmetrisch in einer Richtung senkrecht zur Längsseite eines Flachriemens 100 geteilt, mit den in Längsrichtung des Flachriemens aufeinanderfolgenden Seiten eines Verbindungselements 102 verbunden bleibt, wobei ein Teil dann beispielsweise zumindest ein darüber liegendes Verbindungselement 102 von angrenzenden Bändern 110 teilweise bedecken kann, nachdem es entsprechend umgebogen wurde, und wobei der andere Teil dann beispielsweise zumindest ein darunter liegendes Verbindungselement 102 von angrenzenden Bändern 110 teilweise bedecken kann, nachdem es entsprechend umgebogen wurde, oder wobei beide mit einem Verbindungselement 102 verbundenen Teile beispielsweise zumindest ein darüber liegendes Verbindungselement 102 von angrenzenden Bändern 110 teilweise bedecken können, nachdem sie entsprechend umgebogen wurden, oder beispielsweise zumindest ein darunter liegendes Verbindungselement 102 von angrenzenden Bändern 110 teilweise bedecken können, nachdem sie entsprechend umgebogen wurden, und wobei mehrere so ergänzte Verbindungselemente 102 in einer Reihenanordnung, beispielsweise jeweils zumindest ein darüber liegendes Verbindungselement 102 von angrenzenden Bändern 110 teilweise bedecken können, nachdem sie entsprechend umgebogen wurden, und wobei mehrere so ergänzte Verbindungselemente 102 in einer Reihenanordnung, beispielsweise abwechselnd jeweils zumindest ein darüber liegendes Verbindungselement 102 von angrenzenden Bändern 110, und danach zumindest ein darunter liegendes Verbindungselement 102 von angrenzenden Bändern 110, und so weiter, teilweise bedecken können.

Und wobei Zusatzformelemente 121, welche zumindest ein Verbindungselement 102 von diesem endlosen Flachriemen 100 umschließen, auch bandförmig sein können, wobei sie um zumindest ein Verbindungselement 102 spiralförmig herumgewickelt werden.

Und wobei Zusatzformelemente 121 auch in einer anderen Form ausgebildet werden können, bei welcher sie ein Verbindungselement 102 nicht umschließen.

Und wobei durch eine Befestigung eines Zusatzformelements 121 an einem Verbindungselement 102 beispielsweise die Biegesteifigkeit um eine Achse senkrecht zur Längsachse des Flachriemens 100 nicht verändert wird, und sich ein Verbindungselement 102 beim Umlaufen um einen Eingreifkörper 500 so kreisbogenförmig ausrichten kann, wie die auf beiden Seiten angrenzenden und sich auf jeweiligen Riemenscheibenlaufflächen 302 radial abstützenden Flachriemenzugstrangelemente 103, so dass zwischen diesen angrenzenden Flachriemenzugstrangelementen 103 und dem Verbindungselement 102 beim Umlaufen um einen Eingreifkörper 500 keine materialermüdenden Biegespannungen durch eine unterschiedliche Krümmung erzeugt werden können.

ALLGEMEINE BESCHREIBUNG VON AUSFÜHRUNGSFORMEN - KONSTRUKTION DER BAUTEILE - AUSBILDUNG DER REIBPAARUNGEN

Weiter werden die Reibpaarungen zwischen den Flachriemenzugsträngen 103 und den Riemenscheibenlaufflächen 302 ausgebildet.

Wobei in einer trockenen Umgebung im Temperaturbereich bis 200°C die Reibschichten der Flachriemenzugstränge 103 entsprechend der Maximaltemperatur aus einem Kautschukwerstoff oder einem thermoplastischen Polyurethan ausgebildet werden, wobei die Zugschicht entsprechend der Maximaltemperatur aus einer kaltgewalzten Stahllegierung oder aus einem Kunststoff besteht, und wobei die Oberflächen der Riemenscheibenlaufflächen 302 entsprechend der Maximaltemperatur aus einem Stahlwerkstoff oder aus einem Gusseisenwerkstoff oder aus einem Kunststoff bestehen.

Und wobei alternativ dazu in einer trockenen Umgebung im Temperaturbereich bis 200°C die Oberflächen der Riemenscheibenlaufflächen 302 entsprechend der Maximaltemperatur aus einem Kautschukwerstoff oder einem ther-moplastischen Polyurethan ausgebildet werden, wobei die Zugschicht entsprechend der Maximaltemperatur aus einer kaltgewalzten Stahllegierung oder aus einem Kunststoff besteht, und wobei keine Reibschichten an den Flachriemenzugsträngen 103 ausgebildet werden.

Und wobei in einer trockenen Umgebung mit einer Betriebstemperatur über 200°C die Flachriemenzugstränge 103 bei einer kaltgewalzten Stahllegierung als Zugschicht statt mit einer Reibschicht, mit Karbidpartikeln, Nitridpartikeln, Boridpartikeln oder Diamantpartikeln als Reibelemente ausgebildet werden, und die Oberflächen der Riemenscheibenlaufflächen 302 aus einem Stahlwerkstoff oder aus einem Gusseisenwerkstoff.

Und wobei alternativ dazu in einer trockenen Umgebung mit einer Betriebstemperatur über 200°C die Flachriemenzugstränge 103 bei einer kaltgewalzten Stahllegierung als Zugschicht ohne Reibelemente ausgebildet werden, und die Oberflächen der Riemenscheibenlaufflächen 302 aus einem Stahlwerkstoff oder aus einem Gusseisenwerkstoff mit Karbidpartikeln, Nitridpartikeln, Boridpartikeln oder Diamantpartikeln.

Und wobei in einer nassen Umgebung (Wasser, Öl, etc.) die Reibschichten an den Riemenscheibenlaufflächen beispielsweise kraftfahrzeugreifenprofilartig (mit Rillen, Löchern, Fischgrätenmuster, etc.) zum Ableiten der Flüssigkeit ausgebildet werden.

ALLGEMEINE BESCHREIBUNG VON AUSFÜHRUNGSFORMEN - KONSTRUKTION DER BAUTEILE - AUSFÜHRUNGSFORMEN DES FLACHRIEMENS

Bis zu einer Betriebstemperatur von 100°C und einer geringen Last wird der endlose Flachriemen 100 beispielsweise aus einem endlosen Band 110 aus Polyamid als Zugschicht mit zwei Reibschichten aus Chloropren-Kautschuk gebildet.

Bis zu einer Betriebstemperatur von 100°C und einer mittleren Last wird der endlose Flachriemen 100 beispielsweise aus mehreren endlosen Bändern 110 aus einer kaltgewalzten Stahllegierung als Zugschicht gebildet, wobei die mehreren endlosen Bänder 110 auf ausgewählten gleichbeabstandeten Verbindungselementen 102 senkrecht zur Längsachse des Flachriemens 100 linienartig beispielsweise mit Widerstandsschweißrollennahten miteinander verschweißt werden, und mit zwei Reibschichten aus Nitril-Kautschuk versehen.

Bis zu einer Betriebstemperatur von 100°C und einer hohen Last wird der endlose Flachriemen 100 beispielsweise aus einem offenen aufgewickelten Band 110 mit mehreren Wickelschichten aus einer kaltgewalzten Stahllegierung als Zugschicht gebildet, wobei die Wickelschichten auf ausgewählten gleichbeabstandeten Verbindungselementen 102 senkrecht zur Längsachse des Flachriemens 100 linienartig beispielsweise mit Widerstandsschweißrollennahten miteinander verschweißt werden, und mit zwei Reibschichten aus Nitril-Kautschuk versehen, und mit Zusatzformelementen 121 beispielsweise in der Form einer "8".

Bis zu einer Betriebstemperatur von 200°C und einer geringen Last wird der endlose Flachriemen 100 beispielsweise aus einem endlosen Band 110 aus einer kaltgewalzten Stahllegierung als Zugschicht und mit zwei Reibschichten aus Fluor-Kautschuk gebildet.

Bis zu einer Betriebstemperatur von 200°C und einer mittleren Last wird der endlose Flachriemen 100 beispielsweise aus mehreren endlosen Bändern 110 aus einer kaltgewalzten Stahllegierung als Zugschicht gebildet, wobei die mehreren endlosen Bänder auf ausgewählten gleichbeabstandeten Verbindungselementen 102 senkrecht zur Längsachse des Flachriemens 100 linienartig beispielsweise mit Widerstandsschweißrollennahten miteinander verschweißt werden, und mit zwei Reibschichten aus Fluor-Kautschuk versehen.

Bis zu einer Betriebstemperatur von 200°C und einer hohen Last wird der endlose Flachriemen 100 beispielsweise aus einem offenen aufgewickelten Band 110 mit mehreren Wickelschichten aus einer kaltgewalzten Stahllegierung als Zugschicht gebildet, wobei die Wickelschichten auf ausgewählten gleichbeabstandeten Verbindungselementen 102 senkrecht zur Längsachse des Flachriemens 100 linienartig beispielsweise mit Widerstandsschweißrollennahten miteinander verschweißt werden, und mit zwei Reibschichten aus Fluor-Kautschuk versehen, und mit Zusatzformelementen 121 beispielsweise in der Form einer "8".

Über einer Betriebstemperatur von 200°C und einer geringen, mittleren oder hohen Last werden bei entsprechender Konfiguration der Zugschicht aus einer kaltgewalzten stahllegierung mit oder ohne Zusatzformelemente 121 keine Reibschichten vorgesehen, oder werden Karbidpartikel, Nitridpartikel, Boridpartikel oder Diamantpartikel als Reibelemente aufgebracht.

ALLGEMEINE BESCHREIBUNG VON AUSFÜHRUNGSFORMEN - KONSTRUKTION DER BAUTEILE - AUSBILDUNG DER LAGERUNG DER EINGREIFKÖRPER

Weiter wird die Lagerung der Eingreifkörper 500 ausgebildet; die Wellen 600 können je nach der Beschaffenheit des Bauraums beidseitig oder einseitig drehbar gelagert werden, wobei es für einen störungsfreien Lauf des Flachriemens wichtig ist, dass erstens die Wellen 600 eines Synchronflachriementriebs parallel zueinander ausgerichtet werden, zweitens die Achse des Riemenscheibenlaufflächenzylinders des jeweiligen Eingreifkörpers entsprechend der Längssymmetrieachse der jeweiligen Welle ausgerichtet ist, und drittens gedachte Geraden, welche Tangenten an die kreisförmige Begrenzung der einzelnen Riemenscheibenlaufflächen 302 angrenzend an ein Führungselement 303 bilden, zwei parallel zueinander angeordnete Ebenen im Abstand einer Breite eines Flachriemens 100 aufspannen.

Wobei zum Einstellen der Spannung des Flachriemens 100 eine Welle 600 von zumindest einem Eingreifkörper 500 verschiebbar gelagert wird.

ALLGEMEINE BESCHREIBUNG VON AUSFÜHRUNGSFORMEN - FERTIGUNG DER BAUTEILE - QUALITÄTSSICHERUNG

Bevor mit einem Fertigungsverfahren die Massenproduktion aufgenommen werden kann, muss es in seinen einzelnen Schritten qualifiziert werden.

Nach Freigabe der Massenproduktion muss zur Qualitätssicherung und damit zur Erzielung einer hohen Zuverlässigkeit des Synchronflachriementriebs begleitend zur Fertigung ein Qualitätsmanagementverfahren installiert werden. Es umfasst beispielsweise eine stichprobenartige Überprüfung der Werkstoffkennwerte des Rohmaterials, das genaue Dokumentieren der einzelnen Materiallieferungen zur Identifizierung des Herstellers mit Aufbewahrung von Materialproben, das Einprägen von individuellen Seriennummern auf den Bauteilen und ihre Dokumentation mit Querbezug zum Fertigungsprozess zur späteren Identifizierung von Schwachstellen im Fertigungsprozess bei Rückrufaktionen, das Untersuchen der Bänder 110 auf Schwachstellen mittels eines Röntgenverfahrens, das stichprobenartige Überprüfen der Fertigungstoleranzen, das stichprobenartige Verifizieren der Zugfestigkeit von Flachriemen 100 mittels Zugversuchen, und Dauerbelastungstests mit einer Schwingungsbelastung, Temperaturzyklen und einer Belastung durch korrosionsfördernde Mittel.

ALLGEMEINE BESCHREIBUNG VON AUSFÜHRUNGSFORMEN - FERTIGUNG DER BAUTEILE - WERKSTOFFE

Die Werkstoffe für die einzelnen Bauteile sind im Abschnitt Konstruktion aufgelistet.

ALLGEMEINE BESCHREIBUNG VON AUSFÜHRUNGSFORMEN - FERTIGUNG DER BAUTEILE - RIEMENSCHEIBE

Eine Riemenscheibe 300 wird ausgehend von einem geschmiedeten oder gegossenen Rohling mittels eines bekannten Spanbearbeitungsverfahrens in die entsprechende Form gebracht. Bei einer Riemenscheibe 300 aus einem Metallwerkstoff kann die gewünschte Oberflächenrauhigkeit auf einer Lauffläche mittels einer bekannten Schleifbearbeitung geschaffen werden.

ALLGEMEINE BESCHREIBUNG VON AUSFÜHRUNGSFORMEN - FERTIGUNG DER BAUTEILE - ROTATIONSELEMENT

Ein Rotationselement wird ausgehend von einem geschmiedeten oder gegossenen Rohling mittels eines bekannten Spanbearbeitungsverfahrens in die entsprechende Form gebracht. Bei einem Rotationselement 200 aus einem Metallwerkstoff kann ein gewünschter Härtegrad der Verzahnungsoberfläche durch ein bekanntes Oberflächenhärteverfahren geschaffen werden.

ALLGEMEINE BESCHREIBUNG VON AUSFÜHRUNGSFORMEN - FERTIGUNG DER BAUTEILE- WELLE

Eine Welle 600 wird ausgehend von einem geschmiedeten oder gegossenen Rohling mittels eines bekannten Spanbearbeitungsverfahrens in die entsprechende Form gebracht. Bei einer Welle 600 aus einem Metallwerkstoff kann die gewünschte Oberflächenrauhigkeit mittels einer bekannten Schleifbearbeitung geschaffen werden. Bei einem Ziehkeilgetriebe 400 aus einem Metallwerkstoff werden die Oberflächen der Elemente (Kugeln, Klauen, Keile, etc.), welche den Formschluss zwischen Welle 600 und Zahnrad 200 steuerbar herstellen, mit einem bekannten Oberflächenhärteverfahren gehärtet.

ALLGEMEINE BESCHREIBUNG VON AUSFÜHRUNGSFORMEN - FERTIGUNG DER BAUTEILE - EINGREIFKÖRPER

Ein Eingreifkörper 500 wird ausgebildet, indem die entsprechende Anzahl von Rotationselementen 200, Riemenscheiben 300, und Kupplungselementen unter Verwendung der entsprechenden Maschinenelemente (Passfedern, Wälzlager, Federn, Schrauben, etc.) mittels eines bekannten Montageverfahrens auf einer Welle 600 montiert werden.

ALLGEMEINE BESCHREIBUNG VON AUSFÜHRUNGSFORMEN - FERTIGUNG DER BAUTEILE- SPANNROLLE

Eine Spannrolle wird ausgebildet, indem die entsprechende Anzahl von Rotationselementen 200 und Riemenscheiben 300 unter Verwendung der entsprechenden Maschinenelemente (Passfedern, Wälzlager, Schrauben, etc.) mittels eines bekannten Montageverfahrens auf einer Welle 600 montiert werden.

ALLGEMEINE BESCHREIBUNG VON AUSFÜHRUNGSFORMEN - FERTIGUNG DER BAUTEILE- STIRNVERZAHNTE ZAHNRÄDER IM DIREKTEN EINGRIFF MIT EINEM EINGREIFKÖRPER

Ein stirnverzahntes Zahnrad wird ausgehend von einem geschmiedeten oder gegossenen Rohling mittels eines bekannten Spanbearbeitungsverfahrens in die entsprechende Form gebracht. Bei einem stirnverzahnten Zahnrad aus einem Metallwerkstoff kann ein gewünschter Härtegrad der Verzahnungsoberfläche durch ein bekanntes Oberflächenhärteverfahren geschaffen werden.

ALLGEMEINE BESCHREIBUNG VON AUSFÜHRUNGSFORMEN - FERTIGUNG DER BAUTEILE- FLACHRIEMEN

Um ein Band 110 mit ausgestanzten Löchern in einem vorgegebenen Lochbild zu erzeugen, ist es bekannt, das Band 110 diskontinuierlich zwischen einer Lochstanze hindurchzuführen. Diese Lochstanze besteht aus zwei Platten zwischen denen das Band 110 hindurchläuft. In der Unterplatte, die die Matrize darstellt, sind Stanzlöcher mit scharfen Rändern angeordnet, wahrend die Oberplatte zur Führung von Stanz-Lochstempeln dient. Zum Stanzvorgang werden die beiden Platten gegeneinander gedrückt, so dass das dazwischenliegende Band 110 gepresst und sicher gehalten wird. Danach werden die Stanz-Lochstempel heruntergedrückt, um im Zusammenwirken mit den Löchern der unteren Matrize die Löcher aus dem Band 110 auszustanzen. Nach dem Stanzvorgang werden dann die Metallplatten wieder voneinander entfernt, und wird das Band 110 um eine Bearbeitungsbreite weitergeschoben oder weitergezogen.

Dieser Stanzvorgang ist diskontinuierlich und daher verhältnismäßig langsam, die Stanzwerkzeuge sind außerordentlich aufwändig and daher teuer. Zum Stanzen von dünnen Bändern 110 in Folienstarke müssen die Stanzwerkzeuge mit äußerster Präzision hergestellt sein und auch oft nachgeschliffen werden. Bei der diskontinuierlichen Bewegung von einem sehr dünnen Band 110, beispielsweise in Folienstärke, ergeben sich auch Probleme im Zusammenhang mit der Planlage, dem glatten Durchzug des Bandes 110, das bei der Bewegung, insbesondere beim Anfahren und wieder Abbremsen, besondere Vorkehrungen erforderlich macht, damit es nicht faltet oder knittert. Auch ergeben sich besondere Probleme beim diskontinuierlichen Lochen dadurch, dass eine äußerst feinfühlige und genaue Ausrichtung des Bandes 110 erforderlich wird unter Zuhilfenahme von Fühlern und Feinvorschub, um zu erreichen, dass der Abstand zwischen zwei durch aufeinanderfolgende Stanzvorgänge erzeugte Lochreihen genau dem Abstand entspricht, der innerhalb der Lochreihen besteht, die mittels eines einzigen Stanzvorganges erzeugt sind.

In dem Deutschen Gebrauchsmuster G9017365.1 (30.01.1992) wurde eine Vorrichtung offengelegt, mit welcher in wirtschaftlicher Weise ein gelochtes Metallband 110 herzustellen ist. Diese Vorrichtung zum Lochen von Bändern 110 aus Folien oder Blech ist gekennzeichnet durch, ein etwa waagerecht liegendes Walzenpaar zwischen dem das Metallband 110 hindurchtransportiert wird, wobei die obere Walze mit Lochstempeln versehen ist, und die untere Walze mit einem Belag aus einem elastisch-flexiblen Material versehen ist, in den die Lochstempel der oberen Walze unter Verformung des Belages eintauchen, sowie durch dem Walzenpaar vor- und nachgeordnete Führungs- und Transportrollen für das Metallband 110, wobei beispielsweise die nachgeordneten Rollen und/oder die Walzen angetrieben sind.

Derartige Stanzwerkzeuge lassen sich verhältnismäßig einfach und kostengünstig herstellen. Es ist sogar möglich, die obere mit Lochstempeln versehene Walze auszutauschen gegen eine andere derartige Walze, wenn es erforderlich wird, die Lochstempel anzuschärfen, oder wenn ein anderes Lochbild erzeugt werden soll. Ein Austausch der unteren Walze ist dabei nicht erforderlich. Weiterhin erlaubt diese Vorrichtung ein kontinuierliches Arbeiten, wobei die Durchlaufgeschwindigkeit in einem weiten Bereich variabel ist, und nachgeordnete Vorrichtungen, beispielsweise zum Wickeln des gelochten Bandes 110 angepasst werden können.

Beispielsweise sind die Lochstempel der Oberwalze radial zu ihrer Drehachse angeordnet, so dass der Stanz- bzw. Eintauchvorgang der Lochstempel in das Metallband 110 und den darunter liegenden verformbaren Belag der Unterwalze in Form eines Abwälzvorganges erfolgt - das Loch in dem Metallband 110 also nicht durch gleichzeitiges Abtrennen des Materials in seinem ganzen Umfang erfolgt, sondern das Material geschert wird, wodurch eine wesentlich feinere, genauere Arbeitsweise erfolgt und eine Gratbildung weitgehend vermieden wird.

Dazu ist es vorteilhaft, dass die Lochstempel der Oberwalze um etwa die halbe Stärke des Metallbandes 110 in das Elastomer der Unterwalze eintauchen, wobei das Elastomer der Unterwalze beispielsweise eine Shore-Härte von mindestens 90 aufweist. Diese Härte hat sich in der Praxis als besonders vorteilhaft bei der Bearbeitung von sehr dünnen Metallbändern 110 herausgestellt.

Zweckmäßig hat die Unterwalze, die mit dem Elastomer beschichtet ist, einen größeren Durchmesser als die obere Lochwalze. Aufgrund dieser Durchmesserdifferenz wird die Scherwirkung beim Lochen verbessert, die Lochstempel treffen nicht immer wieder auf die gleiche Stelle der Elastomer-Beschichtung der Unterwalze, so dass diese auf ihrer gesamten Oberfläche gleichmäßig beansprucht wird, und es ist einfacher einen Austausch der Oberwalze mit den Lochstempeln vorzunehmen.

Zweckmäßig ist die Vorrichtung derart ausgebildet, dass das Walzenpaar in der Mündung eines darunter angeordneten Trichters zum Auffangen der Stanzabfalle gelagert ist, und dazu kann vorteilhaft auch an der unteren Walze eine angetriebene Abstreifwalze für anhaftende Stanzabfalle angeordnet sein. So wird erreicht, dass die Stanzabfalle sicher gesammelt werden und die Gefahr ausgeschaltet ist, dass Stanzabfalle die nachfolgenden Bearbeitungsstationen in irgendeiner Weise beeinträchtigen. Dazu kann das Metallband 110 auch im Bereich der Trichteröffnung einen Abstreifer für haftengebliebene Stanzabfalle passieren. Dieser Abstreifer besteht zweckmäßig aus einer oder mehreren Bürsten, die über und/oder unter dem Metallband 110 angeordnet sind.

Vorteilhaft sind dem Lochwalzenpaar nachgeordnet Führungs - und/oder Abzugsrollen als Glättrollen oder -Walzen für das gelochte Metallband 110 ausgebildet. Diese Glättrollen oder - Walzen sind vorteilhaft mit einstellbaren Andruckmitteln in Form von Federn oder Druckkolben gegeneinander gedrückt.

Mittels dieses Glättrollen oder -Walzenpaares, das zweckmäßig außerhalb des Sammeltrichters für die Stanzabfälle angeordnet ist, wird sichergestellt, dass eventuell eingetretene geringfügige Verformungen des Metallbandes 110, insbesondere im Bereich der Lochungen, dort in Form von vorstehenden Graten, geglättet und in die Ebene des hindurchtransportierten Metallbandes 110 zurückgedrückt werden, damit bei nachfolgender Bearbeitung bzw. weiterer Verformung keine Hindernisse vorhanden sind.

Aufgrund der Möglichkeit, Metallbänder 110 kontinuierlich in gewünschter Weise und sehr schonend zu lochen, besteht auch die Möglichkeit, diese Bänder 110 sogleich anschließend in geeigneten Vorrichtungen zu reinigen, zu prüfen, auf ein vorherbestimmtes Maß mit entsprechend gewünschter Form der Enden zu schneiden und in sonstiger Weise nachzubehandeln.

Beispielsweise kann ein Band 110, bei welchem die zumindest eine Reihenanordnung mit Durchbrüchen 101

EP 2 245 338 B1

ausgestanzt wurde, erneut eine Walze mit Lochstempeln durchlaufen, um bei diesem zweiten Durchgang zusätzlich zu den Durchbrüchen 101 ein Lochbild mit gleichmäßig über die Gesamtfläche des Bandes verteilten Löchern zu erhalten. Ein solches Lochbild kann vorteilhaft sein, wenn dieses Band dann in einer endlosen oder offenen Bauweise beispielsweise mit Polyurethan als Reibschicht umgossen werden soll.

Das Rohmaterial für diese Verarbeitung mit einer Walze mit Lochstempeln zur Herstellung von Bändern 110 mit zumindest einer Reihenanordnung mit Durchbrüchen 101 sind normalerweise auf Rollen gewickelte Bänder 110 von einem unterschiedlichen Werkstoff, beispielsweise aus Metall oder Kunststoff, mit einer Breite und Dicke, welche beide beispielsweise den gewünschten Endmaßen entsprechen.

Die Walze mit Lochstempeln kann aber auch dünnwandige Rohre mit zumindest einer Schicht aus Metall oder Kunststoff mit mehreren nebeneinander positionierten Reihenanordnungen mit Durchbrüchen 101 versehen, wobei ein dünnwandiges Rohr mit einer Schichtanordnung durch Aufwickeln einer Platte aus Metall oder Kunststoff über einer Walze erhalten wird, oder durch das Übereinanderanordnen von nahtlosen Rohren, oder durch das Zusammenfügen von gewickelten Rohren und nahtlosen Rohren zu einer Rohreinheit.

Und wobei ein nahtloses Metallrohr beispielsweise erhalten wird, durch das Aneinanderpressen von zwei parallelen abschließenden Kopfflächen einer dünnen Platte, das Entlangfahren mit einem Laserstrahl entlang der Berührungsfläche in der Ebene der Berührungsfläche, das Abkühlen, das Abschleifen von über die Querschnittsform der Platte hinausgetretenem Metall, das Glühen, das Reinigen der Oberfläche, das Walzen, und das Schneiden der Längsseiten.

Und wobei ein nahtloses Kunststoffrohr beispielsweise erhalten wird, durch das Aneinanderpressen von zwei parallelen abschließenden Kopfflächen einer dünnen Platte, das Entlangfahren mit einem Laserstrahl entlang der Berührungsfläche in der Ebene der Berührungsfläche, das Abkühlen, das Abschleifen von über die Querschnittsform der Platte hinausgetretenem Kunststoff, das Reinigen der Oberfläche, das Walzen, und das Schneiden der Längsseiten.

Bei der Bearbeitung von dünnwandigen Rohren mit zumindest einer Schicht aus Metall oder Kunststoff in der Walze mit Lochstempeln wird das Rohr mit seiner ganzen Länge auf die Unterwalze der Vorrichtung und auf zumindest eine einstellbare Spannrolle aufgeschoben. Nach Herstellen der notwendigen Spannung mittels der Spannrolle kann dann die Bewegung von dem dünnwandigen Metallrohr zum Abwälzen der Walze mit Lochstempeln durch eine antreibende Spannrolle oder beispielsweise durch außen am Umfang der Unterwalze sich andrückende antreibende Führungsrollen erfolgen.

Das Abtrennen von einzelnen endlosen Bändern 110 mit zumindest einer Reihenanordnung mit Durchbrüchen 101 kann während des Stanzvorganges oder beispielsweise auf einer entsprechenden zweiten Vorrichtung mit Walzen und Schneidwerkzeugen nach einem Reinigen, Prüfen, oder einem sonstigen Nachbehandeln erfolgen.

Weiter können die Bänder 110 mit zumindest einer Reihenanordnung mit Durchbrüchen 101 auch aus ruhenden dünnen Platten oder aus durchlaufenden dünnen Bändern 110 mittels eines gebündelten Hochenergiestrahls, beispielsweise eines Laserstrahls oder Hochdruckwasserstrahls, computergesteuert gefertigt werden. Ein Reinigen, Prüfen, oder ein sonstiges Nachbehandeln erfolgt nach dieser Schneidbearbeitung.

Anschließend können diese offenen und/oder endlosen Bänder 110 von der Zugschicht stoffschlüssig, beispielsweise durch Schweißen (auch Kunststoffschweißen), durch Löten (Hartlöten oder Weichlöten), und durch Kleben, und/oder formschlüssig, beispielsweise durch Befestigen von Zusatzformelementen 121, durch Umgießen mit einem nach einem Aushärten oder Abkühlen elastischen formstabilen Werkstoff, beispielsweise mit einem thermoplastischen Polyurethan, wobei in diesem Fall die verwendeten Bänder 110 beispielsweise mit einem Lochmuster (zum Durchdringen mit dem Verbindungswerkstoff) versehen sind, und durch Zusammennieten, und/oder kraftschlüssig, beispielsweise durch Haften aufgrund von Haftreibung, wobei die Haftreibung der Bänder 110 untereinander, beispielsweise durch das Aufbringen von harten Werkstoffpartikeln (Karbidpartikel, Nitridpartikel, Boridpartikel oder Diamantpartikel) auf deren Oberfläche, erhöht werden kann, an sich selbst und/oder an anderen Bändern 110 befestigt werden, wobei die einzelnen Bänder 110 auch aus einem unterschiedlichen Werkstoff bestehen können, und wobei ein endloser Flachriemen 100 auch nur als Zugschicht ohne Reibschichten ausgebildet werden kann.

Bei Bestehen aus einem Metallwerkstoff können diese offenen und/oder endlosen Bänder 110 von der Zugschicht durch Befestigen mittels beispielsweise Widerstandsschweißpunkten, oder Widerstandsschweißrollennahten, oder Laserstrahlschweißpunkten an sich selbst und/oder an anderen Bändern 110 in einer Schichtanordnung einen endlosen Flachriemen 100 ausbilden, wobei eine linienartige, auf der flachen Seite der Teile eines Bandes 110 und/oder der Bänder 110 verlaufende Schweißverbindung zwischen den Teilen eines Bandes 110 und/oder zwischen Bändern 110 senkrecht zur Längsachse des Flachriemens 100 ausgerichtet wird, um die Flexibilität des Flachriemens 100 aufrechtzuerhalten.

Diese linienartige Schweißverbindung kann zumindest zwei Teile eines Bandes 110 oder zumindest zwei Bänder 110 verbinden, wobei die linienartige Schweißverbindung auf zumindest einem Verbindungselement 102 längs der zwei in Längsrichtung des Flachriemens 100 aufeinanderfolgenden Seiten unmittelbar angrenzend an diese Seiten verlaufen kann, oder längs der senkrecht zur Längsachse des Flachriemens 100 ausgerichteten Symmetrieachse eines Verbindungselements 102 zwischen diesen Seiten, und wobei sich diese linienartigen Schweißverbindungen auf zu-

25

mindest einem Verbindungselement 102 auch über den Bereich eines Verbindungselements 102 hinaus in den Bereich der Zugstränge 103 erstrecken kann.

Bei der Fertigung eines endlosen Bandes 110 aus einem offenen Metallband 110 mit sich überlappenden Enden wird beispielsweise das Rollennahtschweißverfahren angewendet. Bei dem Rollennahtschweißverfahren werden die zu verbindenden sich überlappenden Enden eines Metallbandes 110 zwischen den beiden Rollen hindurchgeführt, wobei die Rollen mit Strom, beispielsweise mit Wechselstrom, beaufschlagt sind. Durch den Stromfluss durch die sich überlappenden zwei Enden des Metallbandes 110 zwischen den beiden Schweißrollen erfolgt ein Aufschmelzen des Berührungsbereichs der Enden des Metallbandes 110, wodurch zwischen den beiden Enden eine Schweißnaht gebildet wird, welche die beiden Enden miteinander verbindet.

Beispielsweise wird bei der Fertigung eines endlosen Bandes 110 aus einem offenen Metallband 110 mit sich überlappenden Enden das in US 3,596,043 (27.07.1971) offengelegte Verfahren als Rollennahtschweißverfahren angewendet, bei welchem die Rollen auf einem bandartigen Draht aus einer Kupferlegierung abrollen, welcher jeweils zwischen eine Rolle und eine Oberfläche eines Metallbandes 110 eingefügt ist, wobei der Draht in einer längs des Umfangs einer Rolle verlaufenden Nut geführt wird, und auf einer einem Metallband 110 gegenüberliegen Seite flach ausgebildet ist.

Weiter wird bei der Fertigung eines endlosen Bandes 110 aus einem offenen Metallband 110 mit sich überlappenden Enden beispielsweise zumindest eine erste über die ganze Breite des Bandes verlaufende Rollennaht im Überlappungsbereich senkrecht zur Längsachse des Metallbandes 110 ausgebildet, bei welcher eine Kante des oberen flachen bandförmigen Drahtes der oberen Rolle genau über einer Endkante des oberen überlappenden Metallbandes 110 positioniert ist, oder mit einem geringen Überstand über die Endkante von diesem Metallband 110 hinausragt, und eine zweite über die ganze Breite des Bandes 110 verlaufende Rollennaht im Überlappungsbereich senkrecht zur Längsachse des Metallbandes 110 ausgebildet, bei welcher eine Kante des unteren flachen bandförmigen Drahtes der unteren Rolle genau unter einer Endkante des unteren überlappenden Metallbandes 110 positioniert ist, oder mit einem geringen Überstand über die Endkante von diesem Metallband 110 hinausragt.

Bei der Fertigung eines endlosen Bandes 110 aus einem offenen Kunststoffband 110 aus den thermoplastischen Werkstoffen Polypropylen, Polyester, oder Polyamid mit sich überlappenden Enden wird beispielsweise das bekannte Heizkeilverfahren angewendet, wobei die Schweißlinien wie oben bei dem Rollennahtschweißverfahren beschrieben positioniert werden. Als alternative Schweißverfahren eignen sich auch das bekannte Reibschweißverfahren und das bekannte Ultraschallverfahren.

Bei der Fertigung eines endlosen Bandes 110 aus einem offenen Metallband 110 oder einem Kunststoffband 110 mit sich überlappenden Enden können statt der Schweißlinien in einem Überlappungsbereich auch Schweißpunkte aufgebracht werden, beispielsweise mit stabförmigen an der Spitze abgeflachten Elektroden bei Metallbändern 110 oder mit stabförmigen an der Spitze abgeflachten Heizstäben bei Kunststoffbändern 110. Und zwar derart, dass sich in dem Überlappungsbereich ein Schweißpunktbild mit gleichmäßig verteilten Schweißpunkten ergibt.

Bei der Fertigung eines endlosen Bandes 110 aus einem offenen Metallband 110 oder einem Kunststoffband 110 mit sich überlappenden Enden können statt der Schweißlinien oder der Schweißpunkte auch Nietverbindungen in einem Überlappungsbereich vorgesehen werden. Beispielsweise werden die Nieten im Überlappungsbereich dann jeweils mittig auf einem Verbindungselement 102 angeordnet, wobei darauf zu achten ist, dass die Durchmesser der kreisförmigen Löcher zum Aufnehmen der Nieten geringfügig größer als die Schaftdurchmesser der verwendeten Nieten im gestauchten Zustand sind. Dadurch wird bei dem Stauchvorgang eine Beschädigung des Verbindungselements 102 vermieden. Außerdem sollte ein Niet aus einem relativ weichen Werkstoff bestehen, beispielsweise aus Kupfer. Weiter wird beispielsweise ein Halbrundniet nach DIN 660 verwendet, welcher von einer vorherbestimmten Seite in das mittige beispielsweise ausgestanzte kreisförmige Loch auf einem Verbindungselement 102 eingeführt wird. Danach wird eine dünne Scheibe mit einem Außendurchmesser näherungsweise gleich dem Außendurchmesser des Kopfes und einem Innendurchmesser näherungsweise gleich dem Durchmesser des gestauchten Schaftes auf den herausragenden Schaft geschoben bis sie an dem Band 110 anliegt, und wird der weiche Niet unter Verwendung von einem Setzwerkzeug vorsichtig gestaucht. Die hier verwendete Nietverbindung kann auch in Verbindung mit einem Zusatzformelement angewendet werden. Beispielsweise weisen die Enden der Bänder 110 bei Anwendung dieser Verbindungsart auf beiden Längsseiten ab einem vorherbestimmten Abstand zum Ende eine Abschrägung 111 um einen vorherbestimmten Winkel auf.

Die oben für die Fertigung eines endlosen Bandes 110 aus einem offenen Kunststoffband 110 oder einem offenen Metallband 110 mit sich überlappenden Enden beschriebenen Schweißverfahren und das Nietverfahren eignen sich natürlich auch zum Verbinden einer Schichtanordnung mit mehr als zwei Schichten und können auch außerhalb des Überlappungsbereiches angewendet werden.

ALLGEMEINE BESCHREIBUNG VON AUSFÜHRUNGSFORMEN - FERTIGUNG DER BAUTEILE- ZUSATZFORMELEMENTE

Die Zusatzformelemente 121, welche zumindest ein Verbindungselement 102 von einem endlosen Flachriemen 100 umschließen, werden beispielsweise hülsenförmig ausgebildet, wobei sie mit oder ohne Längsschlitz ausgebildet sein können, und wobei sie aus Metall, Kunststoff, einem Mischwerkstoff oder einem anderen Werkstoff gefertigt sein können, und beispielsweise auch in Form einer Spiralfeder ausgebildet sein können, und wobei die Länge der Hülse beispielsweise geringfügig kleiner ist als die Breite eines Durchbruchs, und wobei der Querschnitt des Zusatzformelements 121 beispielsweise zwei senkrecht zueinander angeordnete Symmetrieachsen aufweisen kann, und der Querschnitt beispielsweise die Form eines Kreises, einer "0" oder einer "8" aufweisen kann, wobei jeweils der untere und obere Bogen der "0" und der "8" kreisbogenförmig sind, jeweils mit einem Radius näherungsweise gleich der Hälfte von dem senkrechten Abstand zwischen zwei in Längsrichtung des Flachriemens 100 aufeinanderfolgenden Seiten eines Verbindungselements 102.

Das hülsenförmige Zusatzformelement 121 weist bei einem kreisförmigen Querschnitt einen Längsschlitz über seine gesamte Länge zum Aufnehmen des Verbindungselements 102 auf, wobei der Schlitz parallel zur Längsachse des hülsenförmigen Zusatzformelements 121 ausgerichtet ist, und wobei die Normalen des sich gegenüberliegenden Schlitzflächenpaars parallel zueinander ausgerichtet sind, und wobei die Normalen des sich gegenüberliegenden Schlitzflächenpaars zu einer Ebene, welche sich zwischen einer inneren Schlitzkante und der Längssymmetrieachse des hülsenförmigen Zusatzformelements 121 aufspannt, einen Winkel von näherungsweise 45° ausbilden. In diesem Fall wird das Zusatzformelement beispielsweise aus einem Messingrohr nach DIN 1755 aus CuZn37 gefertigt. Das Rohr kann auf dem Markt erworben werden, und wird dann in einer handhabbaren Länge mittels eines spanbearbeitenden Verfahrens mit dem oben genannten Längsschlitz versehen, wobei die Schlitzbreite geringfügig größer als die Dicke einer Flachriemenzugschicht ist. Danach werden die hülsenförmigen Zusatzformelemente 121 von diesem Rohrstück entsprechend der gewünschten Länge, welche beispielsweise geringfügig kleiner als die Breite eines Durchbruchs 101 ist, abgeschnitten und endbearbeitet. Jetzt können sie auf die Verbindungselemente 102 aufgeschoben werden.

Bei einem Querschnitt in Form einer "0" oder einer "8" werden die hülsenförmigen Zusatzformelemente 121 aus einem Metallband 110 mit einer Breite, welche beispielsweise geringfügig kleiner als die Breite eines Durchbruchs 101 ist, beispielsweise aus dem Werkstoff der Zugschicht, mittels einer Presse geformt, wobei bei einem Querschnitt in Form einer "8" zumindest ein Ende von den beiden in der Nähe des Kreuzungspunktes der Symmetrieachsen des Querschnitts liegenden Enden noch nicht in seiner Zielposition positioniert ist, sondern von diesem Kreuzungspunkt entfernt angeordnet ist, so dass dieses Endteil mit der Längssymmetrieachse des Querschnitts circa einen Winkel von 60° bildet. Dadurch kann das Verbindungselement 102 des Flachriemens 100 in die "8" eingeführt werden, wobei dann nach diesem Einführen das abstehende Ende mit einem stumpfen Werkzeug in seine Zielposition gebogen wird.

Bei einem Querschnitt in Form einer "0" kann das von der Presse gefertigte hülsenförmige Zusatzformelement 121 ohne weitere Bearbeitung auf ein Verbindungselement 102 aufgeschoben werden.

ALLGEMEINE BESCHREIBUNG VON AUSFÜHRUNGSFORMEN - ANWENDUNGSBEREICHE VON AUSFÜHRUNGSFORMEN

Die erfindungsgemäßen Synchronflachriementriebe können in Getrieben, Motoren, Förderanlagen, etc. als Primärantriebe, Sekundärantriebe, etc. zum Übertragen und Übersetzten von Drehmomenten und Drehzahlen, als Schaltelemente zum Schalten zwischen verschiedenen Übersetzungen, und als Kupplungen zum Unterbrechen des Kraftflusses angewendet werden.

Bei den erfindungsgemäßen Synchronflachriementrieben kann eine beliebige Kombination aus Eingreifkörpern mit den verschiedenen Verbindungsarten zwischen Rotationselement und Riemenscheibe, zwischen Rotationselement und Welle, zwischen Riemenscheibe und Welle, und zwischen Eingreifkörper und Welle bei einer einstückigen Bauweise eines Eingreifkörpers angewendet werden.

Dabei können die erfindungsgemäßen Synchronflachriementriebe nebeneinander angeordnet sein, wobei zumindest eine Wellenverbindung zwischen angrenzenden Synchronflachriementrieben ausgebildet ist, und/oder übereinander angeordnet sein, wobei zumindest eine Riemenverbindung zwischen angrenzenden Synchronflachriementrieben ausgebildet ist. Dadurch ist es möglich, den Kraftfluss dreidimensional zu leiten.

Weiter können die Eingreifkörper 500 auch als Planetenelemente eines Planetengetriebes angeordnet sein, wobei das Hohlrad durch einen endlosen Flachriemen ausgebildet ist, und das Zentralrad durch einen Eingreifkörper oder ein stirnverzahntes Zahnrad. Dabei können mehrere derart ausgebildete Planetengetriebe hintereinander angeordnet sein, wobei zumindest eine Wellenverbindung zwischen angrenzenden Planetengetrieben ausgebildet ist.

ALLGEMEINE BESCHREIBUNG VON AUSFÜHRUNGSFORMEN - BETRIEB VON AUSFÜHRUNGSFORMEN

Bei Betrieb können bei der Verwendung von Metallbändern 110 als Zugschicht Schäden frühzeitig erfasst werden, indem beispielsweise die Leitfähigkeit gemessen wird, oder mit einer Wirbelstromsonde der umlaufende Flachriemen 100 berührungslos auf Risse untersucht wird.

Weiter kann der umlaufende Flachriemen 100 durch periodische Impulse im System zu transversalen Schwingungen angeregt werden, wobei die Antwortamplitude der freischwingenden Flachriemenstrecke umso größer ist, je näher die Erregungsfrequenz an der Eigenfrequenz der freischwingenden Flachriemenstrecke liegt. Vorteilhafterweise kann das Anbringen eines Zusatzformelements 121 hier dämpfend wirken. Denn angesichts der geringen Masse des Flachriemens wirkt ein Zusatzformelement als Punktmasse, welche die schwingende Flachriemenstrecke durchläuft. Dabei verändert sich während des Durchlaufens ständig die Eigenfrequenz der Flachriemenstrecke. Der Flachriemen 100 wird also ständig verstimmt und kann bei einer gegebenen Erregungsfrequenz nicht in seiner Eigenfrequenz Energie aufnehmen. Damit bleibt die Amplitude begrenzt.

Für einen Betrieb ist es vorteilhaft, dass bei gerader Zähnezahl von Rotationselementen 200 die Anzahl der Durchbrüche 101 auf einem endlosen Flachriemen 100 ungerade ist, und bei einer ungeraden Zähnezahl von Rotationselementen 200 die Anzahl der Durchbrüche 101 auf einem endlosen Flachriemen 100 gerade ist. Dadurch wird die Rendezvousfrequenz zwischen einem bestimmten Zahn 210 und einem bestimmten Durchbruch 101 erniedrigt und drückt beispielsweise ein kleiner Überstand auf einem Durchbruch 101 oder auf einem Zahn 210 nicht so häufig auf seinen Rendezvouspartner. Damit kommt es zu einer gleichmäßigeren Abnutzung des Synchronflachriementriebs.

BESCHREIBUNG EINER SPEZIELLEN ERSTEN AUSFÜHRUNGSFORM

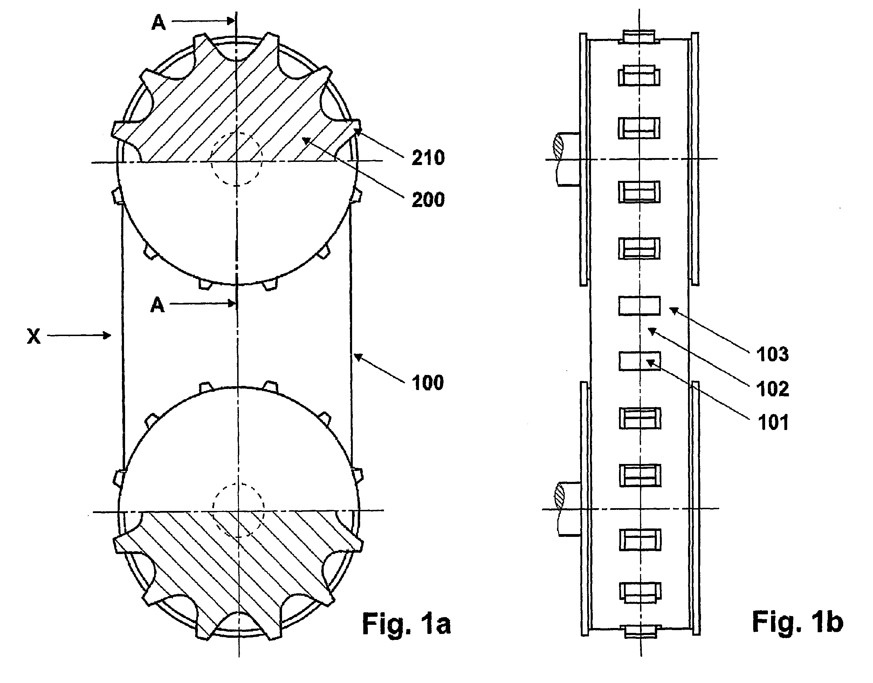

Mit Bezug auf die Figuren 1a bis 1i wird eine Ausführungsform der Erfindung dargestellt. In dieser Ausführungsform der Erfindung sind zwei Eingreifkörper 500 über einen Flachriemen 100 drehbar miteinander verbunden, wobei beide Eingreifkörper 500 jeweils ein Kettenzahnrad als Rotationselement 200 aufweisen, und wobei der endlose Flachriemen 100 aus einem endlosen Band 110 besteht.

Die hier beschriebene Ausführungsform des erfindungsgemäßen Synchronflachriementriebs ist für einen Betrieb in einer trockenen Umgebung mit einer Betriebstemperatur von circa 150°C, einer Übertragungsleistung von 2,09 kW, einem zu übertragenden Drehmoment in Höhe von 2,0 Nm und einer Drehzahl der Eingreifkörper 500 in Höhe von 10.000 U/min vorgesehen.

Mit Bezug auf die Figur 1a kann der Flachriemen 100 im Uhrzeigersinn oder entgegen dem Uhrzeigersinn umlaufen. Beide Eingreifkörper 500 sind identisch ausgebildet und können in einer antreibenden Betriebsart oder in einer angetriebenen Betriebsart verwendet werden.

Mit Bezug auf die Figuren 1a und 1b umfasst jeder Eingreifkörper 500 jeweils ein Rotationselement 200 und zwei Riemenscheiben 300, welche von einer gemeinsamen Welle 600 gestützt werden.

Mit Bezug auf die Figur 1c kann ein Eingreifkörper 500 in einer einstückigen Bauweise mittels einer Passfeder 601 formschlüssig mit einer Welle 600 verbunden sein; mit Bezug auf die Figur 1d kann ein Eingreifkörper 500 auch aus einzelnen Komponenten gebildet werden, hier aus zwei Riemenscheiben 300 und einem dazwischen angeordneten Rotationselement 200, wobei die einzelnen Elemente unmittelbar aneinander angrenzend mittels einer langen Passfeder 601 mit einer Welle 600 formschlüssig verbunden sind; mit Bezug auf die Figur 1e kann bei einer getrennten Ausbildung von Riemenscheiben 300 und dem dazwischen angeordneten Rotationselement 200 nur das Rotationselement 200 mittels einer kurzen Passfeder 602 formschlüssig mit der Welle 600 verbunden sein, wobei die an das Kettenzahnrad angrenzenden Riemenscheiben 300 auf Wälzlagern 603 von der Welle 600 gestützt werden; mit Bezug auf die Figur 1f können bei einer getrennten Ausbildung von Riemenscheiben 300 und dem dazwischen angeordneten Rotationselement 200 die beiden Riemenscheiben 300 jeweils mittels einer Passfeder 604 von mittlerer Länge formschlüssig mit der Welle 600 verbunden sein, wobei das Rotationselement 200 mittels eines Ziehkeilgetriebes 400 mit der Welle 600 steuerbar formschlüssig verbunden werden kann, und wobei die Welle 600 in diesem Fall als eine Hohlwelle ausgebildet ist.

Mit Bezug auf die Figur 1a und Figuren 1c bis 1f wurde das Rotationselement 200 als ein Kettenzahnrad ausgebildet, und zwar als ein genormtes Kettenzahnrad nach DIN 8196 zum Eingreifen in eine Rollenkette nach DIN 8187 mit folgenden Normmaßen:

$B$ = 8,7 mm;
$Z$ = 12;
$P$ = 15,875 mm;
$d_1$ = 10,16 mm;
$\alpha$ = $\pi/Z$ = $\pi/12$ = 0,2618 rad;
$d$ = $P/\sin \alpha$ = 15,875 mm/sin 0,2618 rad = 61,34 mm;
$d^*$ = $P \cdot \cot \alpha$ = 15,875 mm $\cdot$ cot 0,2618 rad = 59,25 mm;

$\gamma \quad = 19°$.

Als Werkstoff wurde für das Kettenzahnrad eine Chrom-Molybdän-Nickel-Stahllegierung ausgewählt.

Mit Bezug auf die Figuren 1c bis 1f wurden die zwei baugleichen äußeren Riemenscheiben 300 bezüglich der Breite $b_{op}$ und des Durchmessers d' von dem Riemenscheibenlaufflächenzylinder mit folgenden Maßen ausgebildet:

$$b_{op} \quad = b_r + b_w + b_g = 2,0 \text{ mm} + 7,0 \text{ mm} + 2,0 \text{ mm} = 11,0 \text{ mm};$$

$$d' \quad = d = 61,34 \text{ mm};$$

wobei die axiale Breite $b_r$ der Aussparung 301 und die Breite $b_g$ des Führungselements 303 jeweils zu 2,0 mm gewählt wurden, und die Breite $b_w$ der Riemenscheibenlauffläche zu 7,0 mm, und wobei der Durchmesser d' von dem Riemenscheibenlaufflächenzylinder gleich dem Teilkreisdurchmesser d von dem Kettenzahnrad gewählt wurde.

Als Basiswerkstoff für die Riemenscheiben 300 wurde ebenfalls eine Chrom-Molybdän-Nickel-Stahllegierung ausgewählt.

Nach dem Bestimmen der Breitenmaße von dem Kettenzahnrad 200 und den Riemenscheiben 300 lässt sich die Breite $b_{eb}$ des Eingreifkörpers 500 aus der Beziehung

$$b_{eb} \quad = n \cdot B + (n+1-2) \cdot b_{ip} + 2 \cdot b_{op}$$

bestimmen, und man erhält für n = 1

$$b_{eb} \quad = B + 2 \cdot b_{op} = 8,7 \text{ mm} + 2 \cdot 11,0 \text{ mm} = 30,7 \text{ mm}.$$

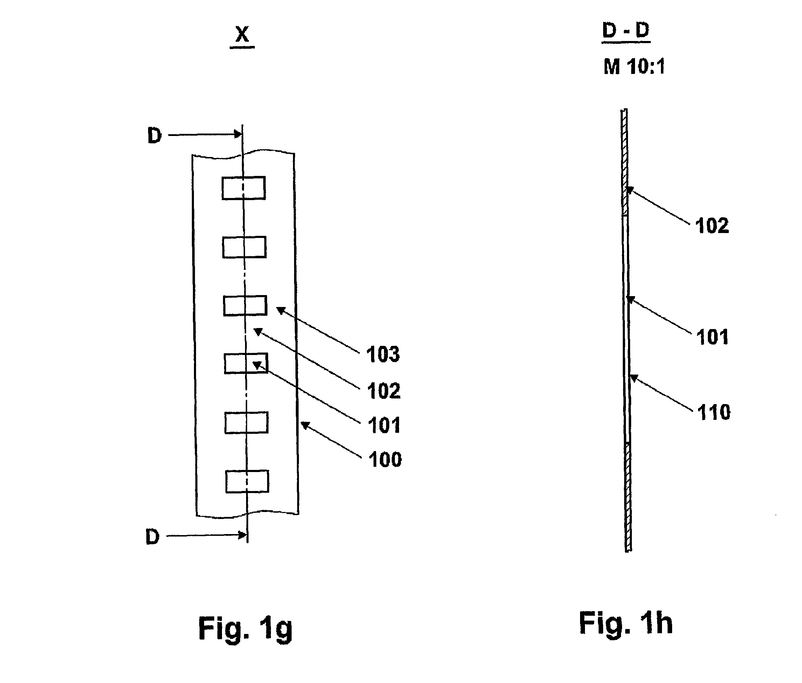

Mit Bezug auf die Figur 1g ist die Reihenanordnung mit Durchbrüchen 101 auf der flachen Seite des Flachriemens 100 symmetrisch zur Längsachse des Flachriemens 100 angeordnet.

Die Geometrie der Reihenanordnung mit Durchbrüchen 101 auf dem Flachriemen 100 wird durch die Geometrie des Kettenzahnrads, den gewählten Durchmesser des Riemenscheibenlaufflächenzylinders, und die gewählten Spielwerte bestimmt.

Somit erhält man mit der oben definierten Geometrie von dem Kettenzahnrad 200 und den Riemenscheiben 300 zusammen mit den gewählten Spielwerten:

$\Delta_3 \quad = 1,00 \text{ mm};$
$\Delta_4 \quad = 2,00 \text{ mm};$

zunächst für y*

$$y* \quad = d/2 - d*/2 = 61,34 \text{ mm} /2 - 59,25 \text{ mm}/2 = 1,04 \text{ mm};$$

und dann für den senkrechten Abstand zwischen zwei in Längsrichtung des Flachriemens 100 aufeinander folgenden Seiten eines Verbindungselements 102

$$u(y*) = P \cdot (\alpha \cdot \cot \alpha - 1) + d_1 + 2 \cdot \alpha \cdot y*$$
$$+ 2 \cdot y* \cdot \tan \gamma - \Delta_3$$

nach Einsetzen der Werte
u(1,04 mm) = 10,06 mm;
und dann für den senkrechten Abstand zwischen zwei in Längsrichtung des Flachriemens 100 aufeinander folgenden Seiten eines Durchbruchs 101

$$v(y^*) = P - d_1 - 2 \cdot y^* \cdot \tan \gamma + \Delta_3$$

nach Einsetzen der Werte
v(1,04 mm) = 6,00 mm;
und schließlich für den senkrechten Abstand zwischen zwei senkrecht zur Längsrichtung des Flachriemens 100 aufeinander folgenden Seiten eines Durchbruchs 101

$$w = B + \Delta_4$$

nach Einsetzen der Werte
w = 10,70 mm.

Die Breite $b_0$ für den Flachriemen ergibt sich aus der Beziehung:

$$b_0 \quad = b_{eb} - 2 \cdot b_g \quad = 30,7 \ mm - 2 \cdot 2,0 \ mm = 26,70 \ mm;$$

somit erhält man für die Breite $b_c$ eines Flachriemenzugstrangs 103

$$b_c = (b_0 - w)/2$$

nach Einsetzen der Werte
$b_c$ = 8,00 mm.

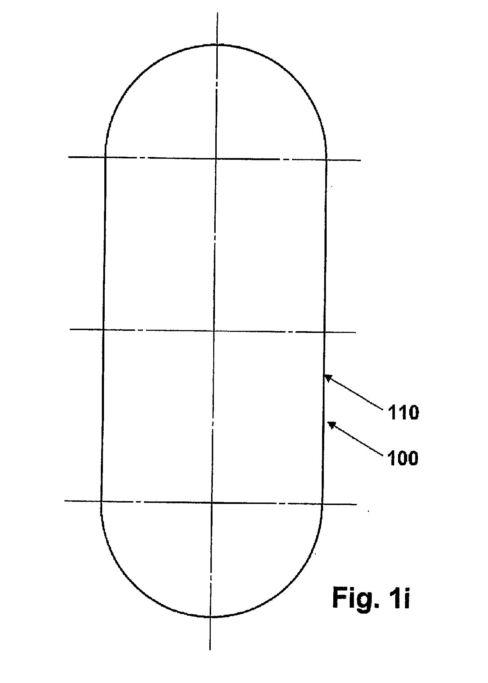

Mit Bezug auf Figur 1h und Figur 1i umfasst der Flachriemen 100 ein endloses Band 110, wobei das Band 110 nur eine Schicht ausbildet, und aus einem dünnwandigen geschweißten Rohr mittels der oben beschriebenen Walzenstanzvorrichtung gefertigt wurde. Als Werkstoff für das Band 110 wurde die kaltgewalzte Stahllegierung X6CrNiMoTi17-12-2 (1.4571) gewählt. Dieser Werkstoff besitzt eine hohe Temperaturbeständigkeit, ist gut schweißbar und erfordert nach dem Schweißen keine Wärmebehandlung.

Der gewählte Werkstoff besitzt im kaltgewalzten Zustand eine Zugfestigkeit von 1200 N/mm$^2$, jedoch wurde für das Schweißen und die höhere Betriebstemperatur ein Sicherheitsfaktor von vier gewählt, so dass für die Bestimmung der Dicke des Bandes 110 mit einer zulässigen Spannung von 300 N/mm$^2$ gerechnet wurde.

Der Durchmesser des Riemenscheibenlaufflächenzylinders wurde oben gemäß der Beziehung d'= d = 61,34 mm bestimmt. Somit ergibt sich bei einem vorgegebenen Drehmoment in Höhe von 2,0 Nm eine zu übertragende Zugkraft durch die Zugstränge 103 in Höhe von 65,21 N. Und daraus kann man bei einer oben bestimmten Gesamtbreite von beiden Zugsträngen in Höhe von 16,0 mm und der zulässigen Gesamtspannung in Höhe von 300 N/mm$^2$ die Dicke des Bandes berechnen, und man erhält 0,0136 mm, wobei jedoch 0,4 mm gewählt wurde.

Jetzt wird noch überprüft, ob die ermittelte Dicke $t_0$ des Flachriemens die Bedingung für den minimalen zulässigen Durchmesser einer Riemenscheibenlauffläche erfüllt. Und man erhält unter Anwendung der Beziehung d'$_{min zul}$ = 2 · E · to/ $\sigma_{zul}$ mit einem Elastizitätsmodul in Höhe von 185.000 N/mm$^2$ für d'$_{min zul}$ einen Wert in Höhe von 49,33 mm. Das heißt, der gewählte Durchmesser d'= 61,34 mm kann auch aus Sicht der bei einem Umlauf auftretenden Biegespannung im Band 110 akzeptiert werden.

Keines der Verbindungselemente 102 von dem Band 110 weist eine Verstärkung auf. Jedoch kann zum Verstimmen des Bandes 110 an ausgewählten Verbindungselementen 102 ein Zusatzformelement 121 (nicht abgebildet) angebracht werden.

Der Flachriemen 100 umfasst nur ein endloses Band 110, welches als Zugschicht ausgebildet ist, wobei auf Reibschichten sowohl am Band 110 als auch an den Riemenscheibenlaufflächen 302 verzichtet wird. Jedoch können zum Einstellen eines gewünschten Haftreibungskoeffizienten sowohl die Oberfläche des Bandes 110 als auch die Riemenscheibenlaufflächen 302 mittels eines bekannten Beschichtungsverfahrens mit harten Werkstoffpartikeln, wie beispielsweise Karbidpartikel, Nitridpartikel, Boridpartikel oder Diamantpartikel versehen werden.

Zum Einstellen der Spannung des Synchronflachriementriebs kann die Welle 600 des oberen Eingreifkörpers 500 mit Bezug auf die Figur 1a entlang der Symmetrieachse des Synchronflachriementriebs nach oben bewegt werden, und in dieser Position dann befestigt werden. Alternativ dazu kann auch eine Verschiebung des unteren Eingreifkörpers 500 in entgegengesetzter Richtung vorgesehen werden.

Bei Betrieb kann gemäß Figur 1f mittels des Ziehkeilgetriebes 400 eine formschlüssige Verbindung zwischen einer Welle 600 und einem Kettenzahnrad 200 hergestellt werden. Dies erfolgt beispielsweise bei einigen Anwendungen erst nach dem Beschleunigen und dem Stabilisieren der Drehgeschwindigkeit. Bei anderen Anwendungen wird gerade während der Beschleunigungsphase oder der Verzögerungsphase eine formschlüssige Verbindung zwischen einer Welle 600 und einem Kettenzahnrad 200 hergestellt. Weiter kann eine formschlüssige Verbindung zwischen einer Welle 600 und einem Kettenzahnrad 200 mittels des Ziehkeilgetriebes 400 automatisch hergestellt werden, wenn mittels Sensoren und einer Rechnereinheit eine Differenz zwischen den Drehzahlen der Riemenscheiben von den verschiedenen Eingreifkörpern erfasst wird.

Weiter wird der umlaufende Flachriemen 100 ständig mit einer Wirbelstromsonde (nicht abgebildet) berührungslos auf Risse untersucht, wobei die Sonde das Messsignal an eine Auswerte - und Anzeigeeinheit (nicht abgebildet) übermittelt.

BESCHREIBUNG VON ZUSÄTZLICHEN SPEZIELLEN ZWEITEN UND DRITTEN AUSFÜHRUNGSFORMEN

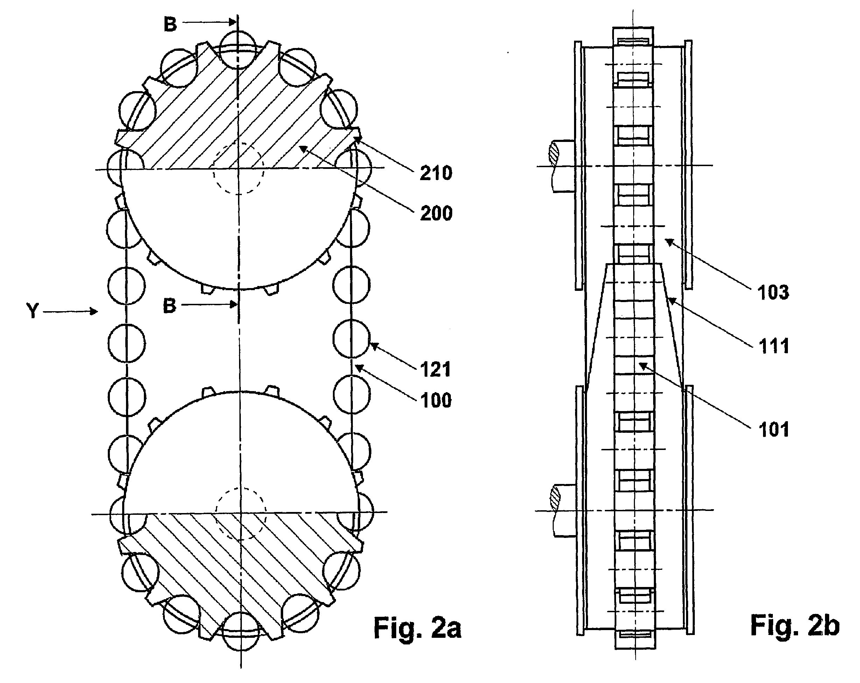

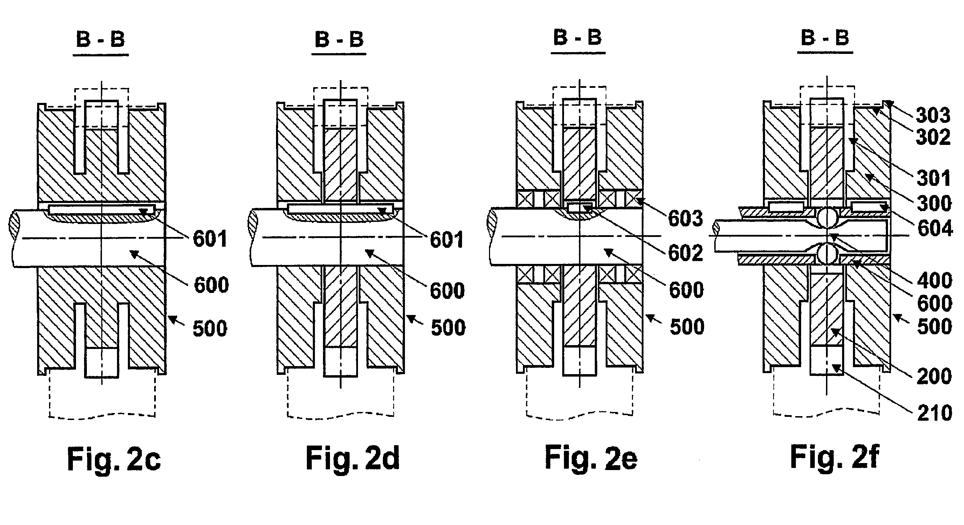

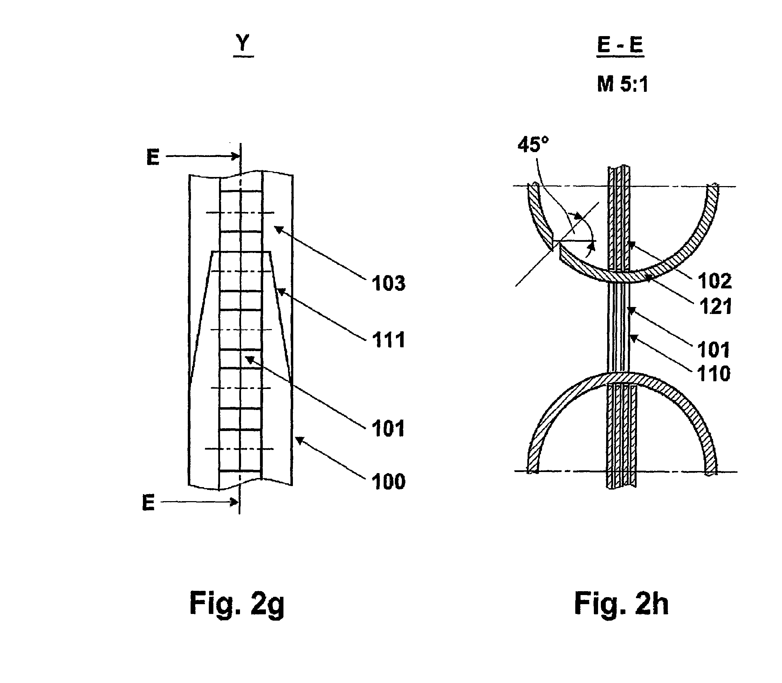

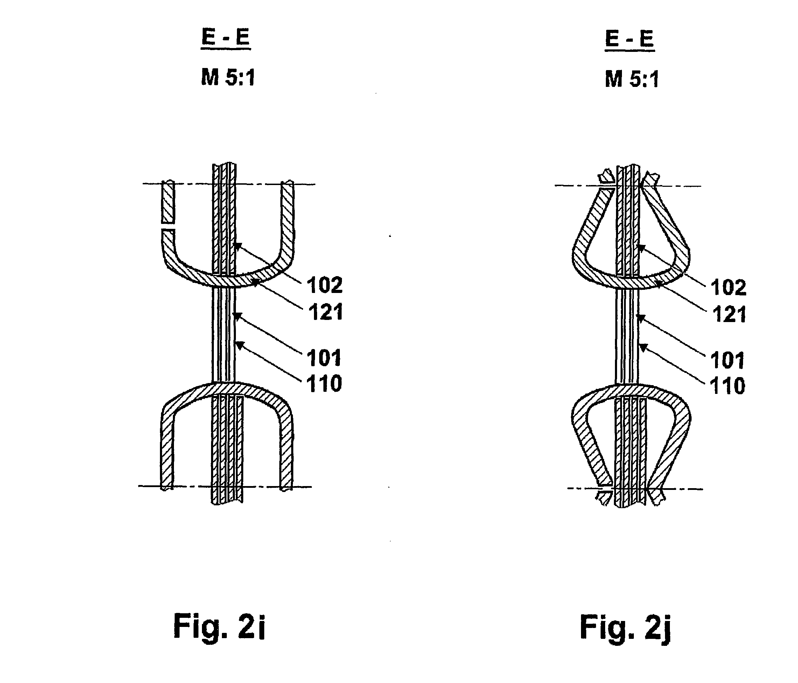

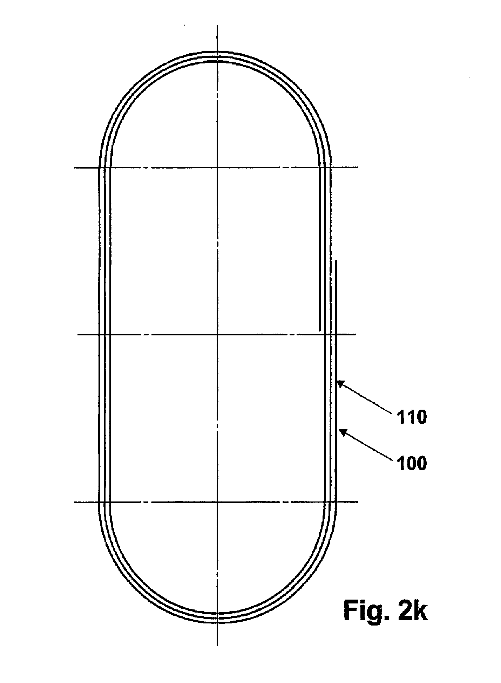

Mit Bezug auf die Figuren 2a bis 2k wird eine weitere Ausführungsform der Erfindung dargestellt. In dieser Ausführungsform der Erfindung sind zwei Eingreifkörper 500 über einen Flachriemen 100 drehbar miteinander verbunden, wobei beide Eingreifkörper 500 jeweils ein Kettenzahnrad als Rotationselement 200 aufweisen, und wobei der endlose Flachriemen 100 aus einem offenen spiralförmig aufgewickelten Band 110 besteht, und wobei der Flachriemen 100 an seinen Verbindungselementen 102 mit Zusatzformelementen 121 versehen ist, und wobei die Enden des Bandes 110 jeweils auf beiden Längsseiten ab einem vorherbestimmten Abstand zum Ende mit einer Abschrägung 111 um einen vorherbestimmten Winkel versehen sind.

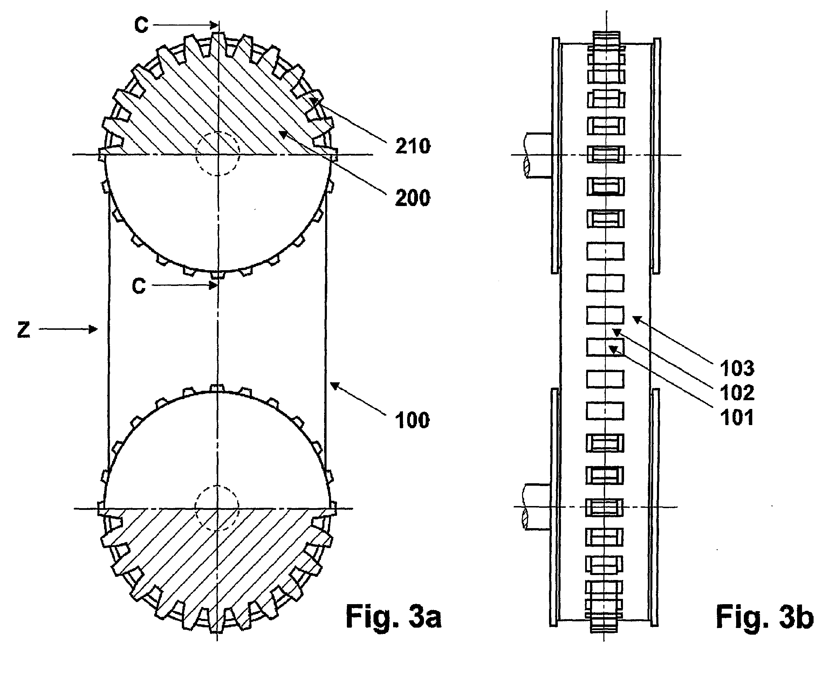

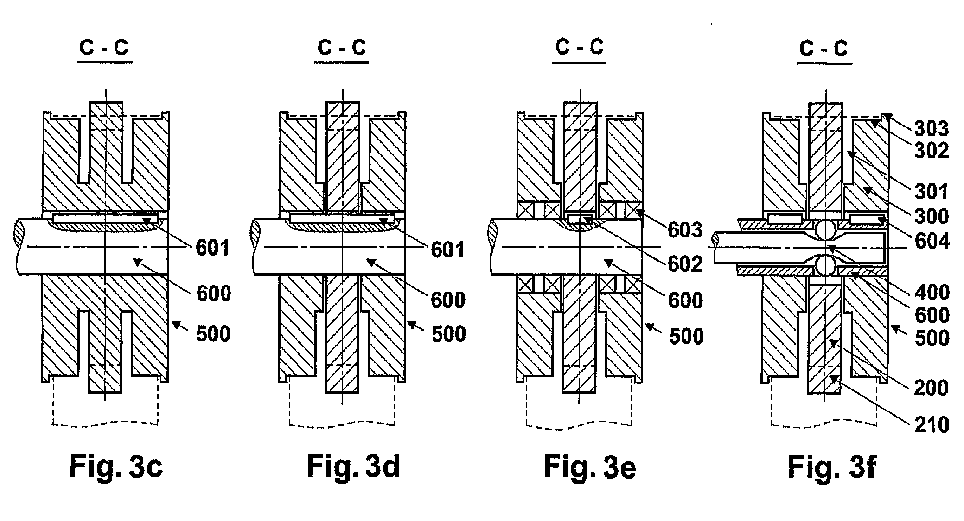

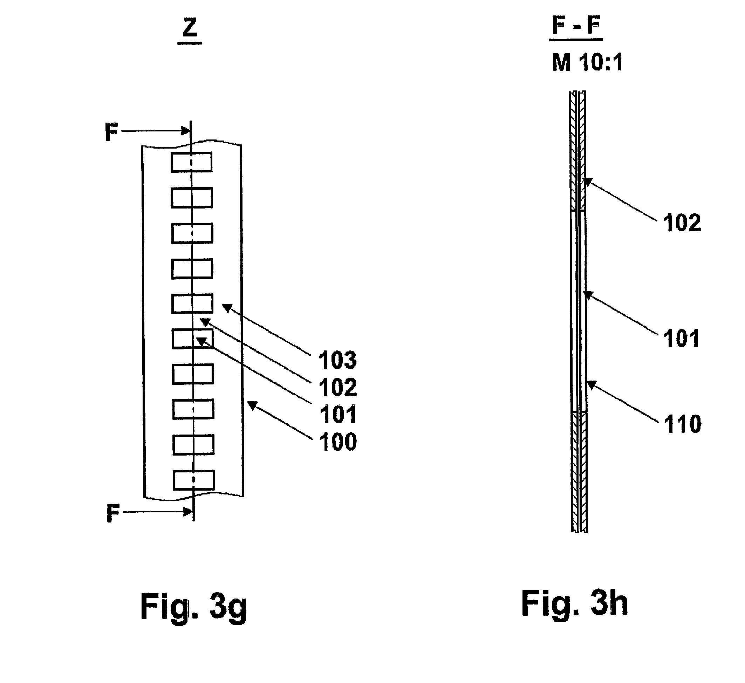

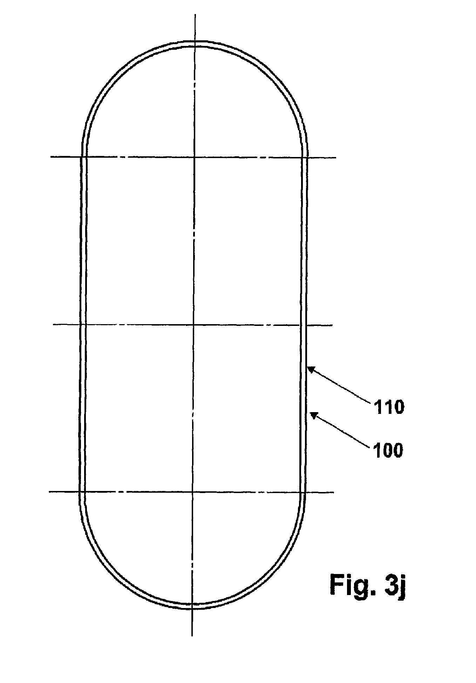

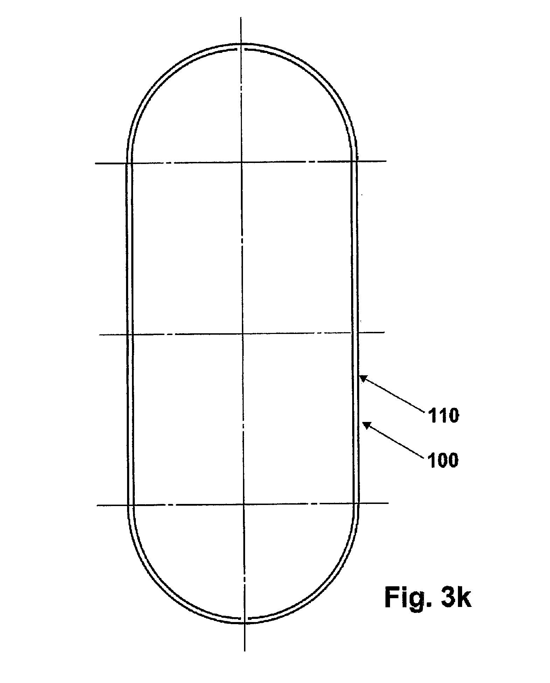

Eine weitere Ausführungsform der Erfindung ist in den Figuren 3a bis 3h und 3j bis 3k dargestellt. In dieser Ausführungsform der Erfindung sind zwei Eingreifkörper 500 über einen Flachriemen 100 drehbar miteinander verbunden, wobei beide Eingreifkörper 500 jeweils ein stirnverzahntes Zahnrad als Rotationselement 200 aufweisen, und wobei der endlose Flachriemen 100 gemäß Figur 3j aus zwei endlosen Bändern 110 in einer Schichtanordnung mit zwei Schichten besteht, und wobei der endlose Flachriemen 100 gemäß Figur 3k aus einer Schichtanordnung mit zwei Schichten besteht, wobei die innere Schicht durch zwei offene Bänder 110 ausgebildet wird, welche jeweils in der 12:00 Uhr-Position und in der 06:00 Uhr-Position aneinanderstoßen, und wobei die äußere Schicht durch ein endloses Band 110 ausgebildet wird.

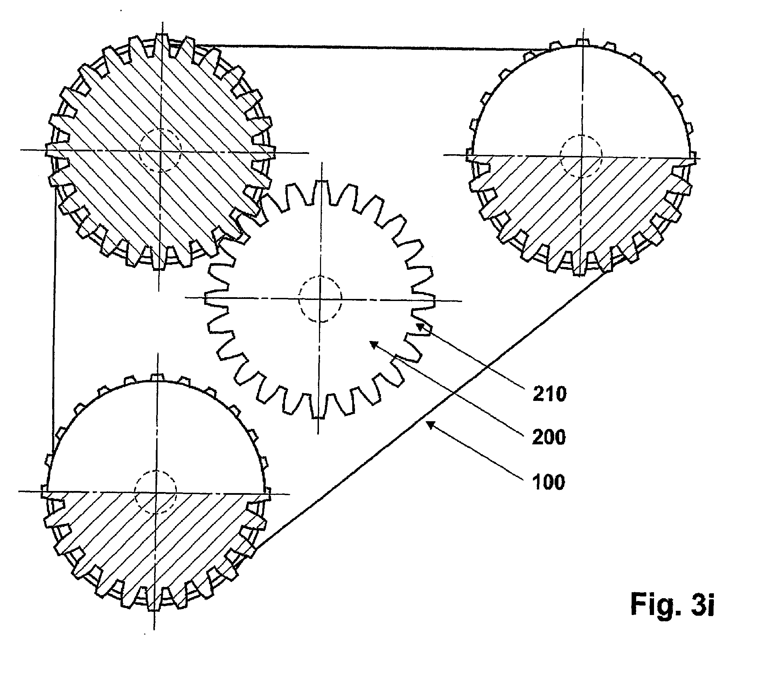

Eine weitere Ausführungsform der Erfindung ist in der Figur 3i dargestellt. In dieser Ausführungsform der Erfindung sind drei Eingreifkörper 500 über einen Flachriemen 100 drehbar miteinander verbunden, wobei die drei Eingreifkörper 500 jeweils ein stirnverzahntes Zahnrad 200 als Rotationselement 200 aufweisen, und wobei sich zusätzlich ein einzelnes stirnverzahntes Zahnrad 200 im Eingriff mit einem Eingreifkörper 500 befindet.

SCHLUSSFOLGERUNG, BESCHREIBUNG VON ALTERNATIVEN AUSFÜHRUNGSFORMEN UND ANWENDUNGSBEREICH DER ERFINDUNG

ERZIELBARE VORTEILE DURCH DIE ERFINDUNG

Anhand der oben vorgenommenen Beschreibung von verschiedenen Ausführungsformen wurde erkennbar, dass mit einer einfachen Konstruktion reibungsfreie Getriebe für die unterschiedlichen Lastbereiche hergestellt werden können.

Im Einzelnen werden dadurch folgende Vorteile erzielt:

a) durch einen steuerbaren Formschluss zwischen einem Rotationselement 200, welches sich seitlich neben einer Riemenscheibe 300 befindet, zu einer Riemenscheibe 300 koaxial angeordnet ist, und in dessen Vorsprünge 210 die Flachriemendurchbrüche 101 eingreifen, und einer Riemenscheibe 300 kann steuerbar eine Synchronisierung der Drehbewegung zwischen Riemenscheiben 300 von Eingreifkörpern 500 im Synchronflachriementrieb hergestellt werden;

b) beim Eingreifen eines Flachriemendurchbruchs 101 in einen Vorsprung 210 von einem Rotationselement 200 treten keine Reibungsverluste auf, da der Eingriff rein wälzend erfolgt und sich ein Flachriemendurchbruch 101 nur tangential zu einem Riemenscheibenlaufflächenzylinder auf einem Vorsprung 210 von einem Rotationselement 200 abstützt, wodurch ein Wirkungsgrad des erfindungsgemäßen Synchronflachriementriebs von nahe 1,00 erzielt wird;

c) auf einer Riemenscheibenlauffläche 302 befindet sich kein Vorsprung 210, so dass der Umlauf eines Flachriemenzugstrangs ungestört erfolgt;

d) als Rotationselemente 200 können herkömmliche oder genormte stirnverzahnte Zahnräder oder Kettenzahnräder verwendet werden;

e) durch das Ausbilden der Flachriemendurchbrüche 101 entsprechend den genormten stirnverzahnten Zahnrädern oder Kettenzahnrädern und entsprechend von geeigneten Durchmessern der Riemenscheibenlaufflächenzylinder wird das Normensystem der Maschinenelemente der Antriebstechnik um eine Reihe von genormten Flachriemen 100 und um eine Reihe von genormten Riemenscheiben 300 von einem Synchronflachriementrieb erweitert;

f) die verschiedenen Typen von Eingreifkörpern 500 können in unterschiedlicher Kombination und Anzahl, treibend oder angetrieben, im Uhrzeigersinn rotierend oder entgegen dem Uhrzeigersinn rotierend, als Teil oder als kein Teil einer Spannvorrichtung, als Spannrolle mit oder ohne Verzahnung 210 bei dem zumindest einem Rotationselement 200, mit kleinen oder großen Durchmessern, auf beiden flachen Seiten eines offenen oder geschlossenen Flachriemens 100 im Eingriff mit einem Flachriemen 100 sein;

g) die Eingreifkörper 500 können durch die Verwendung von Normteilen kostengünstig hergestellt werden;

h) ein zylindrischer Eingreifkörper 500 mit einem stirnverzahnten Zahnrad als Rotationselement 200 kann zusätzlich zu einem Eingriff in einen Flachriemen 100 im Eingriff mit zumindest einem stirnverzahnten Zahnrad sein;

i) ein Flachriemen wird seitlich von einem Führungselement 303 geführt, welches angrenzend an eine Längsseite eines Flachriemens auf einer Riemenscheibenmantelfläche entlang des Riemenscheibenumfangs angeordnet ist, wobei dadurch die bei einer seitlichen Führung des Flachriemens 100 durch einen Vorsprung 210 auftretenden Reibungsverluste vermieden werden und der Verschleiß reduziert wird;

j) ein Flachriemen 100 kann in einer endlosen oder offenen Bauform aus einzelnen einfach herzustellenden Bändern 110 bestehen, wobei die Bänder 110 als Meterware in einem kontinuierlichen Prozess gefertigt und geprüft werden können, und wobei dadurch der Flachriemen 100 kostengünstig gefertigt werden kann;

k) ein Flachriemen 100 in einer endlosen oder offenen Bauform aus mehreren einzelnen kaltgewalzten Metallbändern 110 in einer Schichtanordnung besitzt eine höhere Zugfestigkeit als ein Flachriemen 100 aus einem einzigen Metallband mit einer Dicke gleich der Summe der Dicken der einzelnen Bänder;

l) ein Flachriemen 100 in einer endlosen oder offenen Bauform aus mehreren einzelnen Bändern 110 in einer Schichtanordnung besitzt eine deutlich geringere Biegesteifigkeit als ein Flachriemen 100 aus einem einzigen Band 110 mit einer Dicke gleich der Summe der Dicken der einzelnen Bänder 110;

m) einzelne Verbindungselemente 102 zwischen Flachriemendurchbrüchen 101 können eine Verstärkung mit einer zusätzlichen Masse aufweisen, wobei dadurch ein gestreckter freischwingender Flachriemenabschnitt beim Durchlaufen der Verstärkung verstimmt wird und somit nicht in Resonanz gerät;

n) bei entsprechender Werkstoffauswahl kann der Synchronflachriementrieb auch in einer Ölumgebung angewendet werden;

o) bei entsprechender Werkstoffauswahl kann der Synchronflachriementrieb auch bei einer höheren Umgebungstemperatur als ein Zahnriementrieb angewendet werden;

p) geringer gleichmäßiger Verschleiß der Eingreifkörper 500 durch die Wahl einer ungeraden (geraden) Anzahl von Flachriemendurchbrüchen 101 von einem endlosen Flachriemen 100 bei einer geraden (ungeraden) Zähnezahl bei den Eingreifkörpern 500;

q) bei Betrieb können bei der Verwendung von Metallbändern 110 als Zugschicht Schäden frühzeitig erfasst werden, indem beispielsweise die Leitfähigkeit gemessen wird, oder mit einer Wirbelstromsonde der umlaufende Flachriemen 100 berührungslos auf Risse untersucht wird;

r) bei geeigneter Ausbildung der Getriebewälzlager (Schmierstoffreservoir, Kunststoff-Stahl-Wälzpaarung, etc.) kann ein Getriebe mit erfindungsgemäßen Synchronflachriementrieben ohne Schmieröl ausgebildet werden.

BESCHREIBUNG VON ALTERNATIVEN AUSFÜHRUNGSFORMEN UND ANWENDUNGSBEREICH DER ERFINDUNG

Obwohl meine oben vorgenommene Beschreibung viele Spezifikationen enthält, sollten diese nicht als Einschränkungen für den Anwendungsbereich der Erfindung interpretiert werden, sondern eher als Veranschaulichung von einigen Ausführungsformen davon. Viele alternative Ausführungsformen sind möglich.

Die nachfolgend beschriebenen alternativen Ausführungsformen sind nicht in den Zeichnungen abgebildet, jedoch kann ein Fachmann die hier aufgezeigten alternativen Ausführungsformen mit Hilfe der oben vorgenommenen allgemeinen Beschreibung von Ausführungsformen verstehen.

BESCHREIBUNG VON ALTERNATIVEN AUSFÜHRUNGSFORMEN - SYNCHRONFLACHRIEMENTRIEB

Bei bestehenden Getriebekonstruktionen mit genormten stirnverzahnten Zahnrädern kann die Bewegungsübertragung zwischen parallelen Achsen mittels eines erfindungsgemäßen Flachriemens ausgeführt werden, indem entsprechend axial ausgerichtete Zahnräder auf benachbarten parallelen Achsen jeweils auf beiden Seiten mit gleich ausgebildeten erfindungsgemäßen Riemenscheiben ergänzt werden, welche auf diesen Achsen beispielsweise von Wälzlagern gestützt werden und Führungselemente für den Flachriemen aufweisen, wobei sich der Flachriemen auf diesen Riemenscheibenpaaren dann radial zu den Achsen abstützt, und wobei sich der Flachriemen auf den Zahnrädern nur tangential zu einem Riemenscheibenlaufflächenzylinder abstützt.

In einem Synchronflachriementrieb können erfindungsgemäße Eingreifkörper und normal ausgebildete Riemenscheiben über den erfindungsgemäßen Flachriemen verbunden sein. Es können auch nur normale Riemenscheiben über den erfindungsgemäßen Flachriemen verbunden sein.

BESCHREIBUNG VON ALTERNATIVEN AUSFÜHRUNGSFORMEN - BAUTEILE - EINGREIFKÖRPER

Ein Eingreifkörper wird durch n Riemenscheiben (n = 1, 2, 3, ...) und n+1 koaxiale Rotationselemente ausgebildet, wobei eine Riemenscheibe zwischen einem Paar von koaxialen Rotationselementen positioniert ist.

Ein Eingreifkörper wird durch n Riemenscheiben (n = 1, 2, 3, ...) und n koaxiale Rotationselemente ausgebildet, wobei entsprechend der jeweiligen axialen Richtung von einem Eingreifkörper jeweils eine Riemenscheibe auf ein Rotationselement folgt, oder ein Rotationselement auf eine Riemenscheibe.

BESCHREIBUNG VON ALTERNATIVEN AUSFÜHRUNGSFORMEN - BAUTEILE - VERBINDUNG ZWISCHEN WELLE UND EINGREIFKÖRPER

Die Verbindung zwischen einer Welle und einem Rotationselement beziehungsweise zwischen einer Welle und einer Riemenscheibe kann als eine Magnetpulverkupplung, Strömungskupplung, Fliehkraftkupplung, Freilaufkupplung, oder Rutschkupplung ausgebildet sein.

Eine Welle kann mehrere Eingreifkörper jeweils mit gleichen oder verschiedenen Verbindungstypen zwischen Welle und Rotationselement oder zwischen Rotationselement und Riemenscheibe stützen, wobei die Eingreifkörper auf der Welle nebeneinander angeordnet sind. Weiter können auf einer Welle neben Eingreifkörpern auch Zahnräder oder normale Riemenscheiben angeordnet sein.

Ein Eingreifkörper kann von einer Welle elastisch gestützt werden. Weiter kann eine Welle von einem Eingreifkörper von einem Gehäuse elastisch gestützt werden. Und schließlich kann die Übertragung der Antriebskräfte von einer Welle über einen Eingreifkörper auf einen Flachriemen über elastische Kraftübertragungselemente erfolgen.

BESCHREIBUNG VON ALTERNATIVEN AUSFÜHRUNGSFORMEN - BAUTEILE - ROTATIONSELEMENT

Zumindest eines von den Rotationselementen eines Eingreifkörpers kann geteilt sein, wobei zumindest ein Teilabschnitt eines Rotationselements entfernt sein kann.

Die Rotationselemente eines Eingreifkörpers können unterschiedlich breit sein, und sie können aus einem unterschiedlichen Werkstoff gefertigt sein.

Der Fußbereich der Verzahnung eines Rotationselements kann in radialer Richtung bis zu dem Durchmesser von dem Riemenscheibenlaufflächenzylinder mit einem Werkstoff gefüllt sein. Der Kopfbereich der Verzahnung eines Rotationselements kann in radialer Richtung bis nahe an den Durchmesser des Riemenscheibenlaufflächenzylinders entfernt sein.

Bei einer Ausbildung eines Rotationselements als stirnverzahntes Zahnrad kann dieses Zahnrad neben einer Evolventenverzahnung auch eine Zykloidenverzahnung, eine Konchoidenverzahnung, oder eine Triebstockverzahnung aufweisen. Weiter können Rotationselemente als stirnverzahnte Zahnräder mit einer Schrägstirnradverzahnung, einer Doppelschrägstirnradverzahnung, oder einer bogenförmigen Verzahnung ausgebildet sein. Die Rotationselemente können weiter n Zähne (n = 1, 2, 3, ...) aufweisen.

Und weiter kann die Verzahnungsoberfläche eines Rotationselements an den Stützflächen für ein Flachriemenverbindungselement elastisch ausgebildet sein.

BESCHREIBUNG VON ALTERNATIVEN AUSFÜHRUNGSFORMEN - BAUTEILE - RIEMENSCHEIBE

Eine Riemenscheibe kann auch nicht zylindrisch ausgebildet sein.

Die äußeren Riemenscheiben von einem Eingreifkörper können auch ohne die seitlichen Führungselemente ausgebildet sein.

Eine Riemenscheibe kann auch ohne ringförmige Aussparung angrenzend an ein Rotationselement ausgebildet sein.

Der Durchmesser des Riemenscheibenlaufflächenzylinders kann auch kleiner als der Teilkreisdurchmesser eines als Zahnrad ausgebildeten angrenzenden Rotationselements sein.

Zumindest eine von den Riemenscheiben eines Eingreifkörpers kann geteilt sein, wobei zumindest ein Teilabschnitt einer Riemenscheibe entfernt sein kann.

Die Riemenscheiben eines Eingreifkörpers können unterschiedlich breit sein, und sie können aus einem unterschiedlichen Werkstoff gefertigt sein.

BESCHREIBUNG VON ALTERNATIVEN AUSFÜHRUNGSFORMEN - BAUTEILE - FLACHRIEMEN

Bei einem Flachriemen können die einzelnen Bänder auch unterschiedlich dick sein.

Bei einem Flachriemen können die einzelnen Bänder auch aus einem unterschiedlichen Werkstoff gefertigt sein.

Zumindest ein Ende eines offenen Bandes kann auch nicht abgeschrägt sein oder sich auf eine andere Weise verjüngen, beispielsweise indem nur eine Seite abgeschrägt ist, oder es können auch nur die Ecken abgerundet sein.

Bei einem Flachriemen kann ein Band in zumindest einer Schicht auch zumindest einmal geteilt sein, wobei zumindest ein Teilabschnitt eines Bandes auch entfernt sein kann.

Die Erzeugende der Reihenanordnung mit Durchbrüchen auf einem Flachriemen kann auch das Abwälzen eines Eingreifkörpers mit den oben genannten Merkmalen auf einer flachen Seite eines eben angeordneten Flachriemens parallel zu seiner Längsrichtung sein.

Zumindest eine Ecke von zumindest einem Durchbruch kann als Kreisabschnitt ausgebildet sein, wobei der Mittelpunkt des Kreises, welcher den Kreisabschnitt bildet, auch außerhalb der Seitenlinien liegen kann, welche die Ecken bilden.

Zumindest eine Seitenlinie von zumindest einem Durchbruch kann die Form einer periodischen Sägezahnkurve, Sinuskurve, oder Rechteckkurve aufweisen.

Die Breite eines Zugstrangs kann gleich groß wie, kleiner als, oder größer als die Breite eines Durchbruchs sein.

Ein Flachriemen kann auch in einer offenen Bauform ausgebildet sein.

Eine Reibschicht kann auf beiden Seiten eines Flachriemens ausgebildet sein. Sie kann auch nur auf einer Seite eines Flachriemens ausgebildet sein, und sie kann auch nur auf zumindest einem Zugstrang ausgebildet sein.

Zur Verbindung von Teilen eines Bandes und/oder von Bändern können auch Nietverbindungen vorgesehen werden, wobei die Nietverbindungen auch auf den Zugsträngen ausgebildet werden können, und wobei eine Öffnung zur Aufnahme eines Niets auch ein Langloch sein kann, welches sich mit seiner Länge parallel zu der Längsachse des Flachriemens erstreckt.

Die Verbindung von Teilen eines Bandes und/oder von Bändern kann auch mittels schmaler Bänder, Fäden, Drähte, oder Ringe erfolgen, welche durch Öffnungen auf dem Flachriemen geführt werden.

SCHLUSSFOLGERUNG

Somit sollte der Anwendungsbereich der Erfindung durch die beigefügten Ansprüche und ihre rechtliche Äquivalenz bestimmt werden und nicht durch die angegebenen Beispiele.

**Patentansprüche**

**1.**　Synchronflachriementrieb, welcher umfasst, zumindest einen zylindrischen Antriebseingreifskörpor und zumindest einen zylindrischen angetriebenen Eingreifskörper, einen Flachriemen (100) mit einem Paar von flachen Seiten und einem Paar von Längsseiten in einer offenen oder geschlossenen Bauweise, und eine Spannvorrichtung für den Flachriemen (100),

wobei die Eingreifskörper auf welcher sich der Flachriemen (100) radial abstützt in Umgangsrichtung in einer Reihenanordnung senkrecht zur Eingreifskörper achse in gleichen Umfangsabständen gleiche radial herausragende Vorsprünge über die gesamte Umfangsrichtung aufweisen,

und der Flachriemen (100) parallel zu seiner Längsrichtung auf einer flachen Seite in einer Reihenanordnung in gleichen Abständen gleiche Durchbrüche über seine gesamt Länge aufweist, welche in die Vorsprünge der Eingreifskörper entlang dem Umschlingungsumfang zwischen dem Flachriemen (100) und dem jeweiligen Eingreifskörper eingreifen, wobei zwischen zwei Durchbrüchen in Längsrichtung des Flachriemens (100) jeweils ein Verbindungselement ausgebildet ist, und wobei auf beiden Seiten einer Reihenanordnung mit Durchbrüchen in Längsrichtung des Flachriemens (100) jeweils ein Zugstrang ausgebildet ist,

und wobei die Eingreifkörper jeweils zumindest eine Reihenanordnung mit Vorsprüngen aufweisen, und die Anzahl der Reihenanordnungen mit Durchbrüchen auf dem Flachriemen (100) mit der Anzahl der Reihenanordnungen mit Vorsprüngen auf den Eingreifkörpern übereinstimmt,

und wobei

die zumindest eine Reihenanordnung mit Vorsprüngen (210) mit der Reihenanordnung mit Durchbrüchen (101) nur seitlich neben einer Riemenscheibe (300) über einem koaxial zu einer Riemenscheibe (300) angeordneten Rotationselement (200) im Eingriff ist, welches mit einer Riemenscheibe (300) stoffschlüssig oder formschlüssig oder kraftschlüssig oder steuerbar formschlüssig oder kraftschlüssig verbunden ist, wobei ein Rotationselement (200) zwischen einem Paar von koaxialen Riemenscheiben (300) positioniert ist, und wobei zumindest ein Rotationselement (200) und zumindest zwei koaxiale Riemenscheiben (300) einen zylindrischen Eingreifkörper (500) ausbilden, und

sich der Flachriemen (100) entlang dem Umschlingungsumfang des zylindrischen Eingreifkörpers (500) radial zur Achse eines Riemenscheibenlaufflächenzylinders im Wesentlichen nur auf einer Riemenscheibenlauffläche abstützt, und sich der Flachriemen (100) entlang dem Umschlingungsumfang des zylindrischen Eingreifkörpers (500) auf einem Rotationselement (200) im Wesentlichen nur tangential zu einem Riemenscheibenlaufflächenzylinder abstützt, und

wobei die Erzeugende der Reihenanordnung mit Durchbrüchen (101) auf dem Flachriemen (100) das Abwälzen eines Riemenscheibenlaufflächenzylinders von dem zylindrischen Eingreifkörper (500) mit den darüber hinausragenden Vorsprüngen (210) von dem Rotationselement (200) auf einer flachen Seite eines eben angeordneten Flachriemens (100) parallel zu seiner Längsrichtung ist, **dadurch gekennzeichnet, dass** das Rotationselement (200) als ein stirnverzahntes Zahnrad zum Kämmen mit gleichartigen Zahnrädern ausgebildet ist.

2. Synchronflachriementrieb nach Anspruch 1, **dadurch gekennzeichnet, dass** das Rotationselement (200) zylindrisch mit einer vorherbestimmten Breite und einem vorherbestimmten Durchmesser ausgebilde ist, und einen zylinderförmigen Eingreifbereich umfasst, welcher in Umfangsrichtung in einer Reihenanordnung senkrecht zur Rotationselementachse in gleichen Umfangsabständen gleiche radial herausragende Vorsprünge (210) über die gesamte Umfangsrichtung aufweist.

3. Synchronflachriementrieb nach einem oder mehreren der vorangegangenen Ansprüche , **dadurch gekennzeichnet, dass** das Rotationselement (200) als ein genormtes stirnverzahntes Zahnrad oder genormtes Kettenzahnrad ausgebildet ist.

4. Synchronflachriementrieb nach einem oder mehreren der vorangegangenen Ansprüche , **dadurch gekennzeichnet, dass** das Rotationselement (200) als ein genormtes stirnverzahntes Zahnrad mit einer Evolventenverzahnung zum Kämmen mit dem Bezugsprofil gemäß DIN 867 bzw. ISO 53 oder als genormtes Kettenzahnrad mit einer Verzahnung nach DIN 8196 zum Eingreifen in Rollenketten gemäß DIN 8187 und DIN 8188 ausgebildet ist.

5. Synchronflachriementrieb nach einem oder mehreren der vorangegangenen Ansprüche , **dadurch gekennzeichnet, dass** das Rotationselement (200) mit einem zylinderförmigen Eingreifbereich mit einer Reihenanordnung mit Vorsprüngen (210) ausgebildet ist, welche sich maximal über die gesamte Breite des Rotationselements erstrecken und in Lastrichtung elastisch beispielsweise als bogenförmige Flachfedern ausgebildet sind.

6. Synchronflachriementrieb nach Anspruch 1, **dadurch gekennzeichnet, dass** das Rotationselement (200) und eine Riemenscheibe (300) von derselben Welle (600) gestützt werden.

7. Synchronflachriementrieb nach Anspruch 1, **dadurch gekennzeichnet, dass** das Rotationselement (200) stoffschlüssig fest oder kraftschlüssig fest oder formschlüssig fest oder steuerbar formschlüssig fest oder formschlüssig drehbar mit einer Welle (600) verbunden ist.

8. Synchronflachriementrieb nach Anspruch 1, **dadurch gekennzeichnet, dass** das Rotationselement (200) zum Eingreifen in die Vorsprünge von einem Ziehkeilgetriebe (400) zum Herstellen einer formschlüssigen Verbindung zwischen einem Rotationselement (200) und einer Welle (600) ausgebildet ist.

9. Synchronflachriementrieb nach Anspruch 1, **dadurch gekennzeichnet, dass** die Riemenscheibe (300) mit einem Durchmesser des Riemenscheibenlaufflächenzylinders größer oder gleich einem Zahnradteilkreisdurchmesser und kleiner als ein Zahnradkopfkreisdurchmesser eines als Zahnrad ausgebildeten Rotationselements (200) und mit einer vorherbestimmten Breitet ausgebildet ist.

10. Synchronflachriementrieb nach Anspruch 1, **dadurch gekennzeichnet, dass** die Riemenscheibe (300) mit einer koaxial zur Riemenscheibenachse angeordneten ringförmigen Aussparung (301), angrenzend an ein Rotationselement (200), axial zur Riemenscheibenachse beginnend an einer Riemenscheibenseitenwand und endend in einem vorherbestimmten Abstand zu dieser Seitenwand, radial zur Riemenscheibe beginnend an einer vorherbestimmten radialen Höhe und endend an der Mantelfläche ausgebildet ist.

11. Synchronflachriementrieb nach Anspruch 10, **dadurch gekennzeichnet, dass** das Riemenscheibe (300) angrenzend an die ringförmige Aussparung (301) eine zylindrische Riemenscheibenlauffläche (302), mit einer axialen Breite kleiner oder näherungsweise gleich der Breite eines Flachriemenzugstrangs (103) umfasst.

12. Synchronflachriementrieb nach Anspruch 1, **dadurch gekennzeichnet, dass** die an einer Seite von einem zylindrischen Eingreifkörper (500) positionierte Riemenscheibe (300) auf ihrer Mantelfläche angrenzend an eine Längsseite eines Flachriemens (100) entlang des Riemenscheibenumfangs ein seitliches Führungselement (303) für den Flachriemen umfasst.

13. Synchronflachriementrieb nach Anspruch 1, **dadurch gekennzeichnet, dass** die Riemenscheibe (300) stoffschlüssig fest oder kraftschlüssig fest oder formschlüssig fest oder formschlüssig drehbar mit einer Welle (600) verbunden ist.

14. Synchronflachriementrieb nach Anspruch 1, **dadurch gekennzeichnet, dass** der Flachriemen (100) in einer endlosen oder offenen Bauform mit zumindest einem einzelnen Band (110) in einer Schichtanordnung aus zumindest einer Schicht ausgebildet ist, wobei die einzelnen Bänder (110) in einer Schicht mit ihren Enden überlappend, aneinanderstoßend oder im Abstand voneinander angeordnet sind, und wobei ein einzelnes Band (110) auch mehrere Schichten bildet, wobei es aufgewickelt oder gefaltet ist, und wobei auch ein einzelnes Band (110) als endloses Band (110) Teil einer Schichtanordnung ist.

15. Synchronflachriementrieb nach Anspruch 1, **dadurch gekennzeichnet, dass** der Flachriemen (100) aus einzelnen offenen Bändern (110) und/oder endlosen Bändern (110) besteht, die durch stoffschlüssiges und/oder formschlüssiges und/oder kraftschlüssiges Befestigen an sich selbst und/oder an anderen Bändern (110) in einer Schichtanordnung eine offene oder geschlossene Bauform des Flachriemens (100) ausbilden.

16. Synchronflachriementrieb nach Anspruch 1, **dadurch gekennzeichnet, dass** die Ecken und Kanten des Flachriemens (100) mit Rundungen versehen sind.

17. Synchronflachriementrieb nach Anspruch 1, **dadurch gekennzeichnet, dass** der Flachriemen (100) mit einer Reihenanordnung mit Durchbrüchen (101) ausgebildet ist, deren Umrisse bei einem Eingriff des Flachriemens (100) in ein stirnverzahntes Zahnrad mit einer Geradstirnradverzahnung eine Rechteckform aufweisen, bei einem Eingriff des Flachriemens in ein stirnverzahntes Zahnrad mit einer Schrägstirnradverzahnung eine Parallelogrammform aufweisen, bei einem Eingriff des Flachriemens in ein stirnverzahntes Zahnrad mit einer Doppelschrägstirnradverzahnung eine Doppelparallelogrammform aufweisen, und bei einem Eingriff des Flachriemens (100) in ein Kettenzahnrad eine Rechteckform aufweisen, und wobei sich die Formen in einer Richtung senkrecht zu einer flachen Seite eines Flachriemens (100) nach Position und Größe nicht verändern, und wobei die Seitenwände eines Durchbruchs (101) zwischen einem Paar von flachen Seiten eines Flachriemens (100) senkrecht zu dem Paar von flachen Seiten eines Flachriemens (100) ausgerichtet sind.

18. Synchronflachriementrieb nach Anspruch 1, **dadurch gekennzeichnet, dass** der Flachriemen (100) eine Reihenanordnung mit Durchbrüchen (101) aufweist welche in ein Rotationselement (200) eingreifen, welches als ein genormtes stirnverzahntes Zahnrad mit einer Evolventenverzahnung zum Kämmen mit dem Bezugsprofil gemäß DIN 867 bzw. ISO 53 ausgebildet ist.
wobei der senkrechte Abstand zwischen zwei in Längsrichtung des Flachriemens (100) aufeinander folgenden Seiten eines Verbindungselements (102),
für einen radialen Eingriffhöhenbereich, bei welchem die radiale Höhe durch die radiale Koordinate y bestimmt ist, deren Ursprung auf dem Teilkreisdurchmesser $d_0$ des Zahnrads positioniert ist, und welche innerhalb folgender Grenzen definiert ist:

$$0 \leq y < h_{ap}$$

folgender Beziehung genügt:

$$u(y) = (m \cdot \pi)/2 + (2 \cdot \pi \cdot y)/z + 2 \cdot y \cdot \tan \alpha_p - \Delta_1$$

und wobei der senkrechte Abstand zwischen zwei in Längsrichtung des Flachriemens (100) aufeinander folgenden Seiten eines Durchbruchs (101) für denselben Höhenbereich
folgender Beziehung genügt:

$$v(y) = (m \cdot \pi)/2 - 2 \cdot y \cdot \tan \alpha_p + \Delta_1$$

und wobei der senkrechte Abstand zwischen zwei senkrecht zur Längsrichtung des Flachriemens (100) aufeinander folgenden Seiten eines Durchbruchs (101) für denselben Höhenbereich folgender Beziehung genügt:

$$w = b + \Delta_2$$

wobei

b die Zahnbreite des Zahnrads ist,
$d_0$ der Teilkreisdurchmesser des Zahnrads ist,
$h_{ap}$ die Kopfhöhe der Verzahnung des Zahnrads ist,
m der Modul der Verzahnung des Zahnrads ist,
u(y) der senkrechte Abstand zwischen zwei in Längsrichtung des Flachriemens (100) aufeinander folgenden Seiten eines Verbindungselements (102) ist,
v(y) der senkrechte Abstand zwischen zwei in Längsrichtung des Flachriemens (100) aufeinander folgenden Seiten eines Durchbruchs (101) ist,
w die Breite des Durchbruchs (101) ist,
y eine radiale Höhenkoordinate mit Ursprung auf dem Teilkreis des Zahnrads ist,
z die Zähnezahl des Zahnrads ist,
$\alpha_p$ der halbe Flankenwinkel eines Zahnes der Verzahnung des Zahnrads ist und gleich 20° ist,
$\Delta_1$ ein vorherbestimmtes Spiel in Längsrichtung des Flachriemens ist,
$\Delta_2$ ein vorherbestimmtes Spiel senkrecht zur Längsrichtung des Flachriemens ist;
$\pi$ die Kreiszahl ist,

19. Synchronflachriementrieb nach Anspruch 1, **dadurch gekennzeichnet, dass** der Flachriemen (100) eine Reihenanordnung mit Durchbrüchen (101) aufweist, welche in ein Rotationselement (200) eingreifen, welches als ein genormtes Kettenzahnrad mit einer Verzahnung nach DIN 8196 zum Eingreifen in Rollenketten gemäß DIN 8187 und DIN 8188 ausgebildet ist,
wobei der senkrechte Abstand zwischen zwei in Längsrichtung des Flachriemens (100) aufeinander folgenden Seiten eines Verbindungselements (102),
für einen radialen Eingriffhöhenbereich, bei welchem die radiale Höhe durch die radiale Koordinate y* bestimmt ist, deren Ursprung auf einem Kreis des Zahnrads liegt, dessen Durchmesser d* folgender Beziehung genügt:

$$d* = P \cdot \cot \alpha$$

und welche innerhalb folgender Grenzen definiert ist:

$$0 \leq y* < k$$

folgender Beziehung genügt:

$$u(y) = P \cdot (\alpha \cdot \cot \alpha - 1) + d_1 + 2 \cdot \alpha \cdot y^*$$
$$+ 2 \cdot y^* \cdot \tan \gamma - \Delta_3$$

und wobei der senkrechte Abstand zwischen zwei in Längsrichtung des Flachriemens (100) aufeinander folgenden Seiten eines Durchbruchs (101) für denselben Höhenbereich folgender Beziehung genügt:

$$v(y) = P - d_1 - 2 \cdot y^* \cdot \tan \gamma + \Delta_3$$

wobei y vorzugsweise folgender Beziehung genügt:

$$16° \leq \gamma \leq 22{,}5° \text{ oder } 13° \leq \gamma \leq 17°$$

und wobei der senkrechte Abstand zwischen zwei senkrecht zur Längsrichtung des Flachriemens (100) aufeinander folgenden Seiten eines Durchbruchs (101) für denselben Höhenbereich folgender Beziehung genügt:

$$w = B + \Delta_4$$

wobei

B die Zahnbreite des Kettenzahnrads ist,
$d^*$ der Ursprungskreis für die Koordinate $y^*$ ist,
$d_1$ der Rollendurchmesser einer Gelenkkette ist,
k die Zahnkopfhöhe der Verzahnung des Kettenzahnrads ist,
P die Teilung der Verzahnung des Kettenzahnrads ist,
u(y) der senkrechte Abstand zwischen zwei in Längsrichtung des Flachriemens (100) aufeinander folgenden Seiten eines Verbindungselements (102) ist,
v(y) der senkrechte Abstand zwischen zwei in Längsrichtung des Flachriemens aufeinander folgenden Seiten eines Durchbruchs (101) ist,
w die Breite des Durchbruchs (101) ist,
$y^*$ eine radiale Höhenkoordinate mit Ursprung auf dem Kreis mit dem Durchmesser $d^*$ ist,
Z die Zähnezahl des Kettenzahnrads ist,
$\alpha$ der halbe Teilungswinkel der Verzahnung des Kettenzahnrads ist und gleich $n/Z$ ist,
y der Zahnflankenwinkel der Verzahnung des Kettenzahnrads ist,
$\Delta_3$ ein vorherbestimmtes Spiel in Längsrichtung des Flachriemens (100) ist,
$\Delta_4$ ein vorherbestimmtes Spiel senkrecht zur Längsrichtung des Flachriemens (100) ist.

20. Synchronflachriementrieb nach Anspruch 1, **dadurch gekennzeichnet, dass** der Flachriemen (100) an zumindest einem Verbindungselement (102) eine Verstärkung durch einen vorherbestimmten Werkstoff und/oder eine vorherbestimmte Form und/oder das Befestigen eines Zusatzformelements (121) aufweist, wobei das Zusatzformelement (121) das Verbindungselement (102) umschließt und beispielsweise als bogenförmige Flachfeder ausgebildet ist.

21. Synchronflachriementrieb nach Anspruch 1, **dadurch gekennzeichnet, dass** eine zylindrische Spannrolle als Teil einer Spannvorrichtung des Synchronflachriementriebs, identisch mit dem aus zumindest einem Rotationselement (200) und zumindest zwei Riemenscheiben (300) gebildeten zylindrischen Eingreifkörper (500) ist, wobei das Rotationselement (200) mit oder ohne Verzahnung ausgebildet ist.

22. Synchronflachriementrieb nach Anspruch 1, **dadurch gekennzeichnet, dass** die zylindrischen Eingreifkörper (500) Teile einer Spannvorrichtung sind.

23. Synchronflachriementrieb nach Anspruch 1, **dadurch gekennzeichnet, dass** zylindrischen Eingreifkörper (500) und Spannrollen mit unterschiedlichen Durchmessern auf beiden flachen Seiten eines offenen oder geschlossenen Flachriemens (100) mit dem Flachriemen (100) im Eingriff sind.

24. Synchronflachriementrieb nach Anspruch 1, **dadurch gekennzeichnet, dass** die zylindrischen Eingreifkörper (500) im Eingriff mit einem Flachriemen (100) sind, wobei alle Rotationselemente (200) eine gerade oder eine ungerade Zähnezahl aufweisen, und wobei bei gerader Zähnezahl die Anzahl der Durchbrüche (101) auf einem endlosen Flachriemen (100) ungerade ist, und bei ungerader Zähnezahl die Anzahl der Durchbrüche (101) auf einem endlosen Flachriemen (100) gerade ist.

25. Synchronflachriementrieb nach Anspruch 1, **dadurch gekennzeichnet, dass** der zylindrische Eingreifkörper (500) mit zumindest einem als stirnverzahnten Zahnrad ausgebildeten Rotationselement im Eingriff mit einem Flachriemen (100) und zumindest einem stirnverzahnten Zahnrad steht,

26. Synchronflachriementrieb nach Anspruch 1, **dadurch gekennzeichnet, dass** der zylindrischer Eingreifkörper (500) im Eingriff mit einem Flachriemen (100) steht, wobei zumindest ein Rotationselement (200) ohne Verzahnung ausgebildet ist.


**Claims**

1. Synchronous flat belt drive, which comprises, at least one cylindrical driving engaging body and at least one cylindrical driven engaging body, a flat belt (100) having a pair of flat sides and a pair of longitudinal sides with an opened or closed construction, and a tensioning device for the flat belt (100),
whereas the engaging bodies, on which the flat belt (100) radially supports, have in circumference direction in a series arrangement perpendicularly to the engaging body axis with identical circumference distances identical radially projecting projections over the total circumference direction,
and the flat belt (100) has parallel to its longitudinal direction at a flat side in a series arrangement with identical distances identical apertures over its total length, which engage with the projections of the engaging bodies along the winding circumference between the flat belt (100) and the respective engaging body, whereas between two apertures in longitudinal direction of the flat belt (100) each one connecting member is formed, and whereas at both sides of a series arrangement of apertures in longitudinal direction of the flat belt (100) each one tension cord is formed, and whereas the engaging bodies each have at least one series arrangement of projections, and the number of the series arrangements of apertures at the flat belt (100) corresponds to the number of the series arrangements of projections at the engaging bodies, and whereas
the at least one series arrangement of projections (210) is in engagement with the series arrangement of apertures (101) only laterally beside a pulley (300) above a coaxially to a pulley (300) arranged rotation member (200), which is connected to a pulley (300) material jointly or form jointly or friction jointly or controllably form jointly or friction jointly, whereas a rotation member (200) is positioned between a pair of coaxial pulleys (300), and whereas at least one rotation member (200) and at least two coaxial pulleys (300) form a cylindrical engaging body (500), and
the flat belt (100) along the winding circumference of the cylindrical engaging body (500) supports radially to the axis of a pulley working surface cylinder essentially only on a pulley working surface, and the flat belt (100) along the winding circumference of the cylindrical engaging body (500) supports on a rotation member (200) essentially only tangentially to a pulley working surface cylinder, and
whereas the generatrix of the series arrangement of apertures (101) at the flat belt (100) is the rolling of a pulley working surface cylinder of the cylindrical engaging body (500) with the above that projecting projections (210) of the rotation member (200) on a flat side of a planely arranged flat belt (100) parallel to its longitudinal direction, **characterised in that**
the rotation member (200) is formed as a face gear for meshing with gears of similar type.

2. Synchronous flat belt drive according to claim 1 **characterised in that** the rotation member (200) is formed cylindrical having a predetermined width and a predetermined diameter, and comprises a cylindrical engaging area, which has in circumference direction in a series arrangement perpendicularly to the rotation member axis with identical circumference distances identical radially projecting projections (210) over the total circumference direction.

3. Synchronous flat belt drive according to one or several of the previous claims **characterised in that** the rotation member (200) is formed as a standardised face gear or a standardised sprocket.

**4.** Synchronous flat belt drive according to one or several of the previous claims **characterised in that** the rotation member (200) is formed as a standardised face gear having an involute tooth system for meshing with the reference profile according to DIN 867 respectively ISO 53 or as a standardised sprocket having a tooth system according to DIN 8196 for engaging with roller chains according to DIN 8187 and DIN 8188.

**5.** Synchronous flat belt drive according to one or several of the previous claims **characterised in that** the rotation member (200) is formed having a cylindrical engaging area with a series arrangement of projections (210), which maximal extend over the total width of the rotation member and are formed elastic in load direction for example as arc shaped flat springs.

**6.** Synchronous flat belt drive according to one or several of the previous claims **characterised in that** the rotation member (200) and a pulley (300) are supported by the same shaft (600).

**7.** Synchronous flat belt drive according to one or several of the previous claims **characterised in that** the rotation member (200) is connected to a shaft (600) in a material joint manner firmly or in a friction joint manner firmly or in a form joint manner firmly or in a controllable form joint manner firmly or in a form joint manner rotatably.

**8.** Synchronous flat belt drive according to one or several of the previous claims **characterised in that** the rotation member (200) is formed for engaging with the projections of a pulling wedge gear (400) for establishing of a form joint connection between a rotation member (200) and a shaft (600).

**9.** Synchronous flat belt drive according to one or several of the previous claims **characterised in that** the pulley (300) is formed having a diameter of the pulley working surface cylinder greater than or equal to a gear pitch circle diameter and less than a gear head circle diameter of a rotation member (200) formed as a gear and having a predetermined width.

**10.** Synchronous flat belt drive according to one or several of the previous claims **characterised in that** the pulley (300) is formed having an annular recess (301) arranged coaxially to the pulley axis, adjacent to a rotation member (200), axially to the pulley axis starting at a pulley side wall and ending at a predetermined distance to this side wall, radially to the pulley starting at a predetermined radial height and ending at the circumferential surface.

**11.** Synchronous flat belt drive according to claim 10 **characterised in that** the pulley (300) comprises adjacent to the annular recess (301) a cylindrical pulley working surface (302) having an axial width less than or approximately equal to the width of a flat belt tension cord (103).

**12.** Synchronous flat belt drive according to one or several of the previous claims **characterised in that** the pulley (300) positioned at a side of a cylindrical engaging body (500) comprises on its circumferential surface adjacent to a longitudinal side of a flat belt (100) along the pulley circumference a lateral guiding member (303) for the flat belt.

**13.** Synchronous flat belt drive according to one or several of the previous claims **characterised in that** the pulley (300) is connected to a shaft (600) in a material joint manner firmly or in a friction joint manner firmly or in a form joint manner firmly or in a form joint manner rotatably.

**14.** Synchronous flat belt drive according to one or several of the previous claims **characterised in that** the flat belt (100) is formed with an endless or opened construction having at least one single strip (110) with a layer configuration of at least one layer, whereas the individual strips (110) are arranged in a layer with their ends overlapping, abutting or with distance to each other, and whereas a single strip (110) also forms several layers, whereas it is wound up or folded, and whereas also a single strip (110) is as an endless strip (110) part of a layer configuration.

**15.** Synchronous flat belt drive according to one or several of the previous claims **characterised in that** the flat belt (100) consists of individual opened strips (110) and/or endless strips (110), which form in a layer configuration an opened or closed construction of the flat belt (100) by a material joint and/or form joint and/or friction joint fixing to itself and/or to other strips (110).

**16.** Synchronous flat belt drive according to one or several of the previous claims **characterised in that** the corners and the edges of the flat belt (100) are provided with roundings.

**17.** Synchronous flat belt drive according to one or several of the previous claims **characterised in that** the flat belt (100) is formed having a series arrangement of apertures (101), whose contours have a rectangle shape with an engagement of the flat belt (100) with a face gear having a spur gear tooth system, have a parallelogram shape with an engagement of the flat belt with a face gear having a helical gear tooth system, have a double parallelogram shape with an engagement of the flat belt with a face gear having a double helical gear tooth system, and have a rectangle shape with an engagement of the flat belt (100) with a sprocket, and whereas the shapes do not change with reference to position and size in a direction perpendicularly to a flat side of a flat belt (100), and whereas the side walls of an aperture (101) between a pair of flat sides of a flat belt (100) are perpendicularly aligned to the pair of flat sides of a flat belt (100).

18. Synchronous flat belt drive according to one or several of the previous claims **characterised in that** the flat belt (100) has a series arrangement of apertures (101), which engage with a rotation member (200), which is formed as a standardised face gear having an involute tooth system for meshing with the reference profile according to DIN 867 respectively ISO 53,

whereas the perpendicular distance between two in the longitudinal direction of the flat belt (100) succeeding sides of a connecting member (102),

for a radial engagement height region, with which the radial height is defined by the radial coordinate y, whose origin is positioned at the pitch circle diameter do of the gear, and which is defined within the following boundaries:

$$0 \leq y < h_{ap}$$

satisfies the following relationship:

$$u(y) = (m \cdot \pi)/2 + (2 \cdot \pi \cdot y)/z + 2 \cdot y \cdot \tan \alpha_p - \Delta_1$$

and whereas the perpendicular distance between two in the longitudinal direction of the flat belt (100) succeeding sides of an aperture (101) for the same height region
satisfies the following relationship:

$$v(y) = (m \cdot \pi)/2 - 2 \cdot y \cdot \tan \alpha_p + \Delta_1$$

and whereas the perpendicular distance between two perpendicularly to the longitudinal direction of the flat belt (100) succeeding sides of an aperture (101) for the same height region
satisfies the following relationship:

$$w = b + \Delta_2$$

whereas

b is the gear tooth width,
$d_0$ is the gear pitch circle diameter,
$h_{ap}$ is the gear tooth system addendum,
m is the gear tooth system modulus,
u(y) is the perpendicular distance between two in longitudinal direction of the flat belt (100) succeeding sides of a connecting member (102),
v(y) is the perpendicular distance between two in longitudinal direction of the flat belt (100) succeeding sides of an aperture (101),
w is the width of the aperture (101),
y is a radial height coordinate having the origin at the gear pitch circle,
z is the gear teeth number,
$\alpha_p$ is the half tooth flank angle of the gear tooth system and is equal to 20°,
$\Delta_1$ is a predetermined clearance in longitudinal direction of the flat belt,
$\Delta_2$ is a predetermined clearance perpendicularly to the longitudinal direction of the flat belt,
$\Pi$ is the circle constant.

**19.** Synchronous flat belt drive according to one or several of the previous claims **characterised in that** the flat belt (100) has a series arrangement of apertures (101), which engage with a rotation member (200), which is formed as a standardised sprocket having a tooth system according to DIN 8196 for engaging with roller chains according to DIN 8187 and DIN 8188,

whereas the perpendicular distance between two in the longitudinal direction of the flat belt (100) succeeding sides of a connecting member (102),

for a radial engagement height region, with which the radial height is defined by the radial coordinate y*, whose origin is positioned at a circle of the sprocket, whose diameter d* satisfies the following relationship:

$$d* = P \cdot \cot \alpha$$

and which is defined within the following boundaries:

$$0 \leq y* < k$$

satisfies the following relationship:

$$u(y) = P \cdot (\alpha \cdot \cot \alpha - 1) + d_1 + 2 \cdot \alpha \cdot y* + 2 \cdot y* \cdot \tan \gamma - \Delta_3$$

and whereas the perpendicular distance between two in the longitudinal direction of the flat belt (100) succeeding sides of an aperture (101) for the same height region

satisfies the following relationship:

$$v(y) = P - d_1 - 2 \cdot y* \cdot \tan \gamma + \Delta_3$$

whereas y preferably satisfies the following relationship:

$$16° \leq \gamma \leq 22,5° \text{ or } 13° \leq \gamma \leq 17°$$

and whereas the perpendicular distance between two perpendicularly to the longitudinal direction of the flat belt (100) succeeding sides of an aperture (101) for the same height region

satisfies the following relationship:

$$w = B + \Delta_4$$

whereas

B is the sprocket tooth width,
d* is the origin circle diameter for the coordinate y*,
$d_1$ is the roller diameter of a roller chain,
k is the tooth tip height of the sprocket tooth system,
P is the pitch of the sprocket tooth system,
u(y) is the perpendicular distance between two in the longitudinal direction of the flat belt (100) succeeding sides of a connecting member (102),
v(y) is the perpendicular distance between two in the longitudinal direction of the flat belt succeeding sides of an aperture (101),
w is the width of the aperture (101),
y* is a radial height coordinate having origin at the circle with the diameter d* of the sprocket,
Z is the sprocket teeth number,

$\alpha$ is the half pitch angle of the sprocket tooth system and is equal to n/Z,

y is the tooth flank angle of the sprocket tooth system,

$\Delta_3$ is a predetermined clearance in the longitudinal direction of the flat belt (100),

$\Delta_4$ is a predetermined clearance perpendicularly to the longitudinal direction of the flat belt (100).

20. Synchronous flat belt drive according to one or several of the previous claims **characterised in that** the flat belt (100) has with at least one connecting member (102) a reinforcement by a predetermined material and/or a predetermined shape and/or the fixing of an additional form member (121), whereas the additional form member (121) encloses the connecting member (102) and is formed for example as an arc shaped flat spring.

21. Synchronous flat belt drive according to one or several of the previous claims **characterised in that** a cylindrical tensioning pulley as part of a tensioning device of the synchronous flat belt drive is identical to the cylindrical engaging body (500) formed of at least one rotation member (200) and at least two pulleys (300), whereas the rotation member (200) is formed with or without tooth system.

22. Synchronous flat belt drive according to one or several of the previous claims **characterised in that** the cylindrical engaging bodies (500) are parts of a tensioning device.

23. Synchronous flat belt drive according to one or several of the previous claims **characterised in that** the cylindrical engaging bodies (500) and tensioning pulleys having different diameters are in engagement with the flat belt (100) at both flat sides of an opened or closed flat belt (100).

24. Synchronous flat belt drive according to one or several of the previous claims **characterised in that** the cylindrical engaging bodies (500) are in engagement with a flat belt (100), whereas all rotation members (200) have an even or an uneven number of teeth, and whereas with an even number of teeth the number of the apertures (101) at an endless flat belt (100) is uneven, and with an uneven number of teeth the number of the apertures (101) at an endless flat belt (100) is even.

25. Synchronous flat belt drive according to one or several of the previous claims **characterised in that** the cylindrical engaging body (500) having at least one rotation member formed as a face gear is in engagement with a flat belt (100) and at least one face gear.

26. Synchronous flat belt drive according to one or several of the previous claims **characterised in that** the cylindrical engaging body (500) is in engagement with a flat belt (100), whereas at least one rotation member (200) is formed without tooth system.

## Revendications

1. Transmission synchrone à courroie plate, laquelle comprend, au moins un corps d'engrènement cylindrique entraînant et au moins un corps d'engrènement cylindrique entraînée, une courroie plate (100) avec une paire de côtés plats et une paire de côtés longitudinaux avec une construction ouverte ou fermée, et un dispositif de tension pour la courroie plate (100),

tandis que les corps d'engrènement, sur lesquels la courroie plate (100) s'appuie radialement, ont en direction circonférentielle dans une rangée perpendiculairement à axe de corps d'engrènement avec des distances circonférentielles identiques parties saillantes identiques faisant saillie radialement sur la direction circonférentielle entière, et la courroie plate (100) a parallèlement à sa direction longitudinale sur un côté plat dans une rangée avec distances identiques des trous identiques sur toute sa longueur, lesquelles engagent avec les parties saillantes des corps d'engrènement le long de la circonférence d'enlacement entre la courroie plate (100) et le corps d'engrènement respectif, tandis que entre deux trous en direction longitudinale de la courroie plate (100) chacun un élément connectant est formé, et tandis que sur deux côtés d'une rangée de trous en direction longitudinale de la courroie plate (100) chacun une corde de traction est formée,

et tandis que les corps d'engrènement chacun ont au moins une rangée de parties saillantes, et le numéro des rangées de trous à la courroie plate (100) correspond au numéro des rangées de parties saillantes aux corps d'engrènement, et tandis que la au moins une rangée de parties saillantes (210) est engrenée avec la rangée de trous (101) uniquement latéralement à côté d'une poulie à courroie (300) sur un élément rotatif (200) disposé coaxialement par rapport à une poulie à courroie (300), lequel est connecté à une poulie à courroie (300) en connexion moyennant matériel ou en connexion moyennant forme ou en connexion moyennant force de frottement ou contrôlablement en connexion moyennant forme ou en connexion moyennant force de frottement, tandis que un élément rotatif (200) est positionné entre une paire de poulies à courroie (300) coaxiales, et tandis que au moins un élément rotatif (200) et au moins deux poulies à courroie (300) coaxiales forment un corps d'engrènement (500) cylindrique, et

la courroie plate (100) le long de la circonférence d'enlacement du corps d'engrènement (500) cylindrique s'appuie radialement au axe d'une surface de roulement cylindrique de poulie à courroie essentiellement uniquement sur une surface de roulement de poulie à courroie, et la courroie plate (100) le long de la circonférence d'enlacement du corps d'engrènement (500) cylindrique s'appuie sur un élément rotatif (200) essentiellement uniquement tangentiellement à une surface de roulement cylindrique de poulie à courroie, et

tandis que la génératrice de la rangée de trous (101) à la courroie plate (100) correspond au roulement d'une surface de roulement cylindrique de poulie à courroie du corps d'engrènement (500) cylindrique avec les parties saillantes (210) faisant saillie sur cette du élément rotatif (200) sur un côté plat d'une planement disposée courroie plate (100) parallèlement à sa direction longitudinale, **caractérisée en ce que**

le élément rotatif (200) est formé comme une roue dentée à denture frontale pour engrenant avec des roues dentées de même type.

2. Transmission synchrone à courroie plate selon revendication 1 **caractérisée en ce que** le élément rotatif (200) est formé cylindrique avec une largeur prédéterminée et un diamètre prédéterminé, et comprend une zone d'engrènement cylindrique, laquelle a en direction circonférentielle dans une rangée perpendiculairement au axe du élément rotatif avec distances circonférentielles identiques parties saillantes (210) identiques faisant saillie radialement sur la direction circonférentielle entière.

3. Transmission synchrone à courroie plate selon un ou plusieurs des revendications précédentes **caractérisée en ce que** le élément rotatif (200) est formé comme une roue dentée à denture droite standardisée ou un pignon standardisé.

4. Transmission synchrone à courroie plate selon un ou plusieurs des revendications précédentes **caractérisée en ce que** le élément rotatif (200) est formé comme une roue dentée à denture droite standardisée avec un système de dent à développante pour engrenant avec le profil de référence selon DIN 867 respectivement ISO 53 ou comme un pignon standardisé avec un système de dent selon DIN 8196 pour engrenant avec chaînes à rouleaux selon DIN 8187 et DIN 8188.

5. Transmission synchrone à courroie plate selon un ou plusieurs des revendications précédentes **caractérisée en ce que** le élément rotatif (200) est formé avec a cylindrique zone d'engrènement avec une rangée de parties saillantes (210), lesquelles s'étendent au maximum sur la largeur entière du élément rotatif et sont formées élastiques en direction de la charge par exemple comme ressorts plats en forme d'arc.

6. Transmission synchrone à courroie plate selon un ou plusieurs des revendications précédentes **caractérisée en ce que** le élément rotatif (200) et une poulie à courroie (300) sont appuyés par le même arbre (600).

7. Transmission synchrone à courroie plate selon un ou plusieurs des revendications précédentes **caractérisée en ce que** le élément rotatif (200) est connecté à un arbre (600) en connexion moyennant matériel fermement ou en connexion moyennant force de frottement fermement ou en connexion moyennant forme fermement ou en connexion contrôlable moyennant forme fermement ou en connexion moyennant forme rotativement.

8. Transmission synchrone à courroie plate selon un ou plusieurs des revendications précédentes **caractérisée en ce que** le élément rotatif (200) est formé pour engrenant avec les parties saillantes d'une engrenage à coin tractable (400) pour faisant d'une connexion moyennant forme entre un élément rotatif (200) et un arbre (600).

9. Transmission synchrone à courroie plate selon un ou plusieurs des revendications précédentes **caractérisée en ce que** la poulie à courroie (300) est formée avec un diamètre d'une surface de roulement cylindrique de poulie à courroie supérieur ou égal à un diamètre de cercle primitif de roue dentée et moins d'un diamètre de cercle de tête de roue dentée d'un élément rotatif (200) formé comme une roue dentée et avec une largeur prédéterminée.

10. Transmission synchrone à courroie plate selon un ou plusieurs des revendications précédentes **caractérisée en ce que** la poulie à courroie (300) est formée avec une échancrure annulaire (301) disposée coaxialement par rapport à l'axe de poulie à courroie, adjacente à un élément rotatif (200), axialement par rapport à l'axe de poulie à courroie commençante à une paroi latérale de poulie à courroie et terminante à une distance prédéterminée par rapport à cette paroi latérale, radialement par rapport à la poulie à courroie commençante à une hauteur radiale prédéterminée et terminante à la surface circonférentielle.

11. Transmission synchrone à courroie plate selon revendication 10 **caractérisée en ce que** la poulie à courroie (300) comprend adjacente à la échancrure annulaire (301) une surface de roulement cylindrique de poulie à courroie (302) avec une largeur axiale inférieur ou approximativement égale à la largeur d'une corde de traction de courroie plate (103).

12. Transmission synchrone à courroie plate selon un ou plusieurs des revendications précédentes **caractérisée en ce que** la poulie à courroie (300) positionnée à un côté d'un corps d'engrènement cylindrique (500) comprend sur sa surface circonférentielle adjacent à un côté longitudinal d'une courroie plate (100) le long de la circonférence de poulie à courroie un élément de guidage latéral (303) pour la courroie plate.

13. Transmission synchrone à courroie plate selon un ou plusieurs des revendications précédentes **caractérisée en ce que** la poulie à courroie (300) est connectée à un arbre (600) en connexion moyennant matériel fermement ou en connexion moyennant force de frottement fermement ou en connexion moyennant forme fermement ou en connexion moyennant forme rotativement.

14. Transmission synchrone à courroie plate selon un ou plusieurs des revendications précédentes **caractérisée en ce que** la courroie plate (100) est formée avec une construction sans fin ou ouverte avec au moins une individuelle bande (110) avec un ensemble de couches d'au moins une couche, tandis que les bandes individuelles (110) sont disposées en une couche avec leurs fins se chevauchantes, se touchantes ou avec distance les unes aux autres, et tandis que une individuelle bande (110) aussi forme plusieurs couches, tandis que elle est enroulée ou pliée, et tandis que aussi une individuelle bande (110) est comme une bande sans fin (110) partie d'un ensemble de couches.

15. Transmission synchrone à courroie plate selon un ou plusieurs des revendications précédentes **caractérisée en ce que** la courroie plate (100) se compose de bandes individuelles ouvertes (110) et/ou de bandes sans fin (110), lesquelles forment dans un ensemble de couches une construction ouverte ou sans fin de la courroie plate (100) par une fixation en connexion moyennant matériel et/ou en connexion moyennant forme et/ou en connexion moyennant force de frottement à eux-mêmes et/ou à d'autres bandes (110).

16. Transmission synchrone à courroie plate selon un ou plusieurs des revendications précédentes **caractérisée en ce que** les bords et les coins de la courroie plate (100) sont arrondis.

17. Transmission synchrone à courroie plate selon un ou plusieurs des revendications précédentes **caractérisée en ce que** la courroie plate (100) est formée avec une rangée de trous (101), dont les contours ont une forme de rectangle à un engrènement de la courroie plate (100) avec une roue dentée à denture frontale qui présente un système de engrenage cylindrique à denture droite, ont une forme de parallélogramme à un engrènement de la courroie plate avec une roue dentée à denture frontale qui présente un système de engrenage cylindrique à denture hélicoïdale, ont une forme de double parallélogramme à un engrènement de la courroie plate avec une roue dentée à denture frontale qui présente un système de engrenage cylindrique à denture double hélicoïdale, et ont une forme de rectangle à un engrènement de la courroie plate (100) avec un pignon, et tandis que les formes ne changent pas par rapport à la position et la taille dans une direction perpendiculairement à un côté plat d'une courroie plate (100), et tandis que les parois latérales d'un trou (101) entre une paire de côtés plats d'une courroie plate (100) sont alignées perpendiculairement à la paire de côtés plats d'une courroie plate (100).

18. Transmission synchrone à courroie plate selon un ou plusieurs des revendications précédentes **caractérisée en ce que** la courroie plate (100) a une rangée de trous (101), lesquels engrènent avec un élément rotatif (200), lequel est formé comme une roue dentée standardisée à denture frontale qui présente un système de engrenage cylindrique à denture développante pour engrenant avec le profil de référence selon DIN 867 respectivement ISO 53,
tandis que la distance perpendiculaire entre deux côtés successifs d'un élément connectant (102) en direction longitudinale de la courroie plate (100),
pour une région de hauteur radiale d'engrènement, à laquelle la hauteur radiale est définie par la coordonnée radiale $y$, dont l'origine est positionnée à le diamètre $d_0$ de le cercle primitif de la roue dentée, et laquelle est définie dans les limites suivantes:

$$0 \leq y < h_{ap}$$

satisfait la relation suivante:

$$u(y) = (m \cdot \pi)/2 + (2 \cdot \pi \cdot y)/z + 2 \cdot y \cdot \tan \alpha_p - \Delta_1$$

et tandis que la distance perpendiculaire entre deux côtés successifs d'un trou (101) en direction longitudinale de la courroie plate (100) pour la même région de hauteur
satisfait la relation suivante:

$$v(y) = (m \cdot \pi)/2 - 2 \cdot y \cdot \tan \alpha_p + \Delta_1$$

et tandis que la distance perpendiculaire entre deux côtés successifs d'un trou (101) perpendiculairement par rapport à la direction longitudinale de la courroie plate (100) pour la même région de hauteur
satisfait la relation suivante:

$$w = b + \Delta_2$$

tandis que

> b est la largeur de la denture de la roue dentée,
> $d_0$ est le diamètre du cercle primitif de la roue dentée,
> $h_{ap}$ est la hauteur de tête de la denture du système de engrenage cylindrique,
> m est le module de la denture du système de engrenage cylindrique,
> u(y) est la distance perpendiculaire entre deux côtés successifs d'un élément connectant (102) en direction longitudinale de la courroie plate (100),
> v(y) est la distance perpendiculaire entre deux côtés successifs d'un trou (101) en longitudinale direction de la courroie plate (100),
> w est la largeur du trou (101),
> y est une coordonnée radiale de hauteur avec l'origine à le cercle primitif de la roue dentée,
> z est le nombre de dentures de la roue dentée,
> $\alpha_p$ est l'angle demi de flanc de denture du système de engrenage cylindrique et est égal à 20°,
> $\Delta_1$ est un espace libre prédéterminé en direction longitudinale de la courroie plate,
> $\Delta_2$ est un espace libre prédéterminé perpendiculairement en direction longitudinale de la courroie plate,
> $\Pi$ est la constante du cercle.

19. Transmission synchrone à courroie plate selon un ou plusieurs des revendications précédentes **caractérisée en ce que** la courroie plate (100) a une rangée de trous (101), lesquels engrènent avec un élément rotatif (200), lequel est formé comme un pignon standardisé avec un système de dent selon DIN 8196 pour engrenant avec chaînes à rouleaux selon DIN 8187 et DIN 8188,
tandis que la distance perpendiculaire entre deux côtés successifs d'un élément connectant (102) en direction longitudinale de la courroie plate (100),
pour une région de hauteur radiale d'engrènement, à laquelle la hauteur radiale est définie par la coordonnée radiale y*, dont l'origine est positionnée à un cercle du pignon, dont le diamètre d* satisfait la relation suivante:

$$d^* = P \cdot \cot \alpha$$

et laquelle est définie dans les limites suivantes:

$$0 \leq y^* < k$$

satisfait la relation suivante:

$$u(y) = P \cdot (\alpha \cdot \cot \alpha - 1) + d_1 + 2 \cdot \alpha \cdot y^*$$
$$+ 2 \cdot y^* \cdot \tan \gamma - \Delta_3$$

et tandis que la distance perpendiculaire entre deux côtés successifs d'un trou (101) en direction longitudinale de la courroie plate (100) pour la même région de hauteur
satisfait la relation suivante:

$$v(y) = P - d_1 - 2 \cdot y^* \cdot \tan \gamma + \Delta_3$$

tandis que $\gamma$ de préférence satisfait la relation suivante:

$$16° \leq \gamma \leq 22,5° \text{ ou } 13° \leq \gamma \leq 17°$$

et tandis que la distance perpendiculaire entre deux côtés successifs d'un trou (101) perpendiculairement à la direction longitudinale de la courroie plate (100) pour la même région de hauteur
satisfait la relation suivante:

$$w = B + \Delta_4$$

tandis que

B est la largeur de la denture du pignon,
$d^*$ est le diamètre du cercle d'origine pour la coordonnée $y^*$,
$d_1$ est le diamètre du rouleau d'une chaîne à rouleaux,
k est la saillie de dent du système de dent du pignon,
P est le pas du système de dent du pignon,
u(y) est la distance perpendiculaire entre deux côtés successifs d'un élément connectant (102) en direction longitudinale de la courroie plate (100),
v(y) est la distance perpendiculaire entre deux côtés successifs d'un trou (101) en longitudinale direction de la courroie plate (100),
w est la largeur du trou (101),
$y^*$ est une coordonnée radiale de hauteur avec l'origine sur le cercle avec le diamètre $d^*$ du pignon,
Z est le nombre de dents du pignon,
$\alpha$ est le demi-angle de pas du système de dent du pignon et est égal à $\pi/Z$,
y est l'angle du flanc de dent du système de dent du pignon,
$\Delta_3$ est un espace libre prédéterminé en direction longitudinale de la courroie plate (100),
$\Delta_4$ est un espace libre prédéterminé perpendiculairement en direction longitudinale de la courroie plate (100).

20. Transmission synchrone à courroie plate selon un ou plusieurs des revendications précédentes **caractérisée en ce que** la courroie plate (100) a sur au moins un élément connectant (102) une armature par un matériau prédéterminé et/ou une forme prédéterminée et/ou la fixation d'un élément de forme supplémentaire (121), tandis que le élément de forme supplémentaire (121) encercle le élément connectant (102) et est formé par exemple comme un ressort plat en forme d'arc.

21. Transmission synchrone à courroie plate selon un ou plusieurs des revendications précédentes **caractérisée en ce que** une poulie à courroie de tension cylindrique comme partie d'un dispositif de tension de la transmission synchrone à courroie plate est identique au corps d'engrènement (500) cylindrique formé de au moins un élément rotatif (200) et au moins deux poulies à courroie (300), tandis que l'élément rotatif (200) est formé avec ou sans système de dent.

22. Transmission synchrone à courroie plate selon un ou plusieurs des revendications précédentes **caractérisée en**

**ce que** les corps d'engrènement (500) cylindriques sont des parties d'un dispositif de tension.

23. Transmission synchrone à courroie plate selon un ou plusieurs des revendications précédentes **caractérisée en ce que** les corps d'engrènement (500) cylindriques et les poulies à courroie de tension avec des diamètres différents sont engrenées avec la courroie plate (100) sur les deux côtés plats d'une courroie plate (100) ouverte ou sans fin.

24. Transmission synchrone à courroie plate selon un ou plusieurs des revendications précédentes **caractérisée en ce que** les corps d'engrènement (500) cylindriques sont engrenées avec une courroie plate (100), tandis que tous les éléments rotatifs (200) ont un nombre pair ou impair de dents, et tandis que avec un nombre pair de dents le nombre des trous (101) sur une courroie plate (100) sans fin est impair, et avec un nombre impair de dents le nombre des trous (101) sur une courroie plate (100) sans fin est pair.

25. Transmission synchrone à courroie plate selon un ou plusieurs des revendications précédentes **caractérisée en ce que** le corps d'engrènement (500) cylindrique avec au moins un élément rotatif formé comme une roue dentée à denture droite est engrené avec une courroie plate (100) et au moins une roue dentée à denture droite.

26. Transmission synchrone à courroie plate selon un ou plusieurs des revendications précédentes **caractérisée en ce que** le corps d'engrènement (500) cylindrique est engrené avec une courroie plate (100), tandis que au moins un élément rotatif (200) est formé sans système de dent.

Fig. 1b

103
102
101

Fig. 1a

210
200

100

A

A

X

49

601

601

603
602

303
302
301
300
604

600
500

600
500

600
500

400
600
500

200
210

**Fig. 1c**

**Fig. 1d**

**Fig. 1e**

**Fig. 1f**

EP 2 245 338 B1

EP 2 245 338 B1

X

D

103
102
101
100

**Fig. 1g**

D - D

M 10:1

102

101

110

**Fig. 1h**

Fig. 1i

Fig. 2b

Fig. 2a

**B - B**   **B - B**   **B - B**   **B - B**

601   601   603   303
600   600   602   302
500   500   600   301
              500   300
                    604
                    400
                    600
                    500
                    200
                    210

**Fig. 2c**   **Fig. 2d**   **Fig. 2e**   **Fig. 2f**

EP 2 245 338 B1

E - E
M 5:1

45°

102
121
101
110

Fig. 2h

Y

103
111
101
100

E

E

Fig. 2g

**E - E**
**M 5:1**

102
121
101
110

**Fig. 2j**

**E - E**
**M 5:1**

102
121
101
110

**Fig. 2i**

Fig. 2k

Fig. 3b

Fig. 3a

Fig. 3f

Fig. 3e

Fig. 3d

Fig. 3c

F - F
M 10:1

102
101
110

Fig. 3h

Z

103
102
101
100

F

F

Fig. 3g

Fig. 3i

Fig. 3j

110

100

Fig. 3k

Fig. 4

Fig. 5

**Fig. 6**

EP 2 245 338 B1

EP 2 245 338 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1683955 A
- US 2408666 A
- US 3642120 A
- US 3772930 A
- US 4568320 A
- WO 8601570 A
- US 5129865 A
- US 20020176722 A
- DE G9017365
- US 3596043 A